(19) Europäisches Patentamt / European Patent Office / Office européen des brevets

(11) **EP 2 739 914 B1**

(12) # EUROPEAN PATENT SPECIFICATION

(45) Date of publication and mention of the grant of the patent:
**12.12.2018 Bulletin 2018/50**

(21) Application number: **12754040.9**

(22) Date of filing: **25.07.2012**

(51) Int Cl.:
***F24H 1/18*** *(2006.01)* ***F24H 1/20*** *(2006.01)*
***F24D 17/00*** *(2006.01)* ***F24D 19/10*** *(2006.01)*
***H02J 13/00*** *(2006.01)* ***H02J 3/14*** *(2006.01)*
***F24H 9/20*** *(2006.01)* ***G05D 23/19*** *(2006.01)*
***F24H 9/00*** *(2006.01)* ***F24H 9/18*** *(2006.01)*

(86) International application number:
**PCT/GB2012/000614**

(87) International publication number:
**WO 2013/014411 (31.01.2013 Gazette 2013/05)**

(54) **SYSTEM, METHOD, AND APPARATUS FOR HEATING**

SYSTEM, VERFAHREN UND VORRICHTUNG ZUM ERHITZEN

SYSTÈME, PROCÉDÉ ET APPAREIL POUR LE CHAUFFAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2011 GB 201112769**
**29.02.2012 GB 201203590**

(43) Date of publication of application:
**11.06.2014 Bulletin 2014/24**

(73) Proprietor: **Oxford University Innovation Limited**
**Botley**
**Oxford OX2 0JB (GB)**

(72) Inventor: **ARMSTRONG, Peter Michael**
**Botley**
**Oxford OX2 0JB (GB)**

(74) Representative: **Cozens, Paul Dennis et al**
**Mathys & Squire LLP**
**The Shard**
**32 London Bridge Street**
**London SE1 9SG (GB)**

(56) References cited:
**WO-A1-94/10620** **US-B1- 6 293 471**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 739 914 B1

## Description

The present invention relates to a heating element controller for a liquid heating system. The invention further relates to a system for heating liquids. Another aspect of the invention relates to a plume entrainment unit for liquid heating systems. The invention further relates to a method of controlling a heating element for a liquid heating system. Another aspect of the invention relates to a device for heating liquids in a heating vessel.

## Background of the Invention

Domestic hot water (DHW) systems are typically serviced entirely or are supplemented by an electric immersion element in a hot water tank. The element comprises of a resistive wire which dissipates heat as current flows through it. Usually, an integrated thermostat is fitted to the unit. The thermostat allows the user to set the temperature (typically 50 to 60°C). Whilst this temperature is too high for direct use in most DHW applications, (i.e. the hot water has to be mixed with cold to deliver a comfortable shower or bath), it is not feasible to store water at lower temperatures because:

- Lower temperatures can promote the growth of Legionnaires bacteria (20 - 45°C)
- DHW tanks would have to be bigger if operated at a lower temperature to service the same volume of hot water to the user

This means that heat losses are relatively high whilst the tank is at its highest temperature. Most immersion controllers currently on the market have an embedded time reference that allows the user to program the times at which the immersion heating element is turned on and off. In this way the user requests the tank to be heated during a given period. However, the warm up time for a hot water tank depends on various factors, including:

- The temperature preset value on the integrated immersion thermostat
- The volume of the hot water tank
- The ambient temperature of environment in which the hot water tank is situated
- Effectiveness of any insulation fitted to the hot water tank

Since there is uncertainty over how much time the element needs to be on for to heat the tank's volume to the required temperature, the user has to make a guess. This leads to two potential problems, overestimating or underestimating the required warm up time leading to the following consequences:

*Overestimation*

Overestimation results in excessive energy use whilst the element maintains the tank temperature at the thermostat preset value for longer than is necessary. At this temperature thermal losses are greatest due to the high temperature gradient across the tank walls.

*Underestimation*

Underestimation prevents the water attaining the correct temperature, this can be an inconvenience but more seriously could lead to an environment in which legionnaires or other bacterium may flourish.

Users tend to overestimate, to avoid unpleasant surprises with insufficient hot water.

Electric domestic hot water systems in the UK typically comprise of an insulated copper tank with a volume in the region of 100 litres. An immersion element is usually fitted to the bottom of the tank. When the user demands hot water, current flows through the resistive wire in the immersion element causing heat to be dissipated around its surface. This heat is transferred to the water immediately surrounding the element. Since the density of water is inversely proportional to its temperature, any water around the element that is warmed rises from the element to the top of the tank due to its reduced density. In the process of migrating to the top of the tank, heat is transferred to the surrounding cold water such that the thermal energy is diluted over a larger volume of water thus reducing its temperature. This process leads to the following problems:

- Domestic hot water is only effective above a certain temperature, where a user requires a small volume of hot water, say for filling a sink, a relatively large amount of energy must be consumed to produce an excessive volume of hot water since heat delivered at the bottom of the tank is diffused during stratification.

- For a tank with a single immersion element at the bottom, a large amount of time must pass before water is heated to a useful temperature for any application regardless of the volumetric requirement.

To satisfy the need of efficient, energy-saving liquid heating systems, a more intelligent control of one or more heating elements used to heat the contents of a vessel is required. In particular, a more intelligent means of generating thermal energy through a combination of timing and or positional control is required.

WO 94/10620 teaches a hot water tank energy controller, and in particular a method and apparatus for controlling energy supplied to water heaters by load shedding and load shifting.

**Summary of Invention**

According to one aspect of the invention, there is provided a heating element controller for a liquid heating system, wherein the heating element controller is arranged to determine the duty cycle of a heating element; and modulate (or vary) the timepoint of heating initiation by the heating element in dependence upon an expected (or estimated, or pre-determined) duration of completing the heating process and upon a required time at which the heating process is to be completed (or a required time at which liquid is to be available in a pre-determined heated state); and wherein said expected duration is determined in dependence on said duty cycle.

This allows the user to input the time at which the hot liquid is required, instead of setting the on and off times. Conventional immersion controllers allow specification of the on and off times, but without any regard as to whether the heating process has delivered sufficient hot water. Input of the time at which the heating process is to be completed (or the hot liquid is required) is more convenient to the user. The heating element may for example be an immersion element for a water heating system, for heating a volume of water for example in a hot water vessel or tank. The heating process is in particular the process of heating the liquid to a pre-determined heated state (for example in dependence on a thermostat or a heating setpoint). The heating process is usually completed when a pre-determined heated state is attained. A phase of maintaining the heated condition may follow completion of the heating process. The phase of maintaining the heated condition may continue for a pre-determined (user-input) time. Determining the duty cycle and the expected duration in dependence on the duty cycle provides the advantage that the controller can be retrofitted, offering cost-efficient and convenient means of providing the advantages of input of the time at which the hot liquid is required, instead of setting the on and off times.

Preferably, the heating element controller in one state determines the duration of completing the heating process. In particular, the heating element controller is arranged to measure the duration of completing the heating process in order to determine an expected (or estimated) duration. For example the controller may be arranged to measure the time taken for the element to heat the volume of water. This allows more accurate determination of the duration of the heating process. Users are likely to over-estimate the duration of the heating process, causing the heating process to be completed before the hot water is required. This results in using more energy than necessary to fulfil the user's needs. This can be overcome by estimating future time durations over which the heating element will need to be turned on in order to satisfy the user's requirement.

Preferably the required time at which the heating process is to be completed (or the liquid is to be available in the heated state) is a user-input time selection. In particular, the controller may comprise a user input, and in which the required time at which the heating process is to be completed (or the liquid is to be available in the heated state) is a user-input time selection. This allows the user to determine, and modify, his hot water demands of the system.

Preferably the heating element controller is suitable for use in a heating system comprising at least one heating element and at least one heating vessel. The heating controller may be retro-fitted to an existing heating system, thus upgrading conventional heating controllers while minimising costs.

Preferably the controller is arranged to calculate the timepoint of heating initiation using an algorithm.

Preferably the controller is arranged to monitor at least one of: energy; current; and voltage supplied to the heating element in order to measure the duration of completing the heating process. The energy (or current, or voltage) supply to the heating element may be thermostatically controlled. The current and/or the voltage may be monitored as indicators of the energy, though each on its own may not be sufficient to determine the magnitude of the energy supplied to the heating element (the current waveform alone may for example not determine the energy consumption in the absence of voltage and relative phase between voltage and current (power factor)).

More preferably, the controller is arranged to monitor the electrical current to the heating element in order to determine the duration of completing the heating process. This allows relative ease of retro-fitting, while permitting monitoring of the heating process. The controller may also be arranged to use the output of an ambient temperature sensor in calculating the duration of the heating cycle.

Preferably the heating element controller is suitable for use in a heating system further comprising a thermostat arranged to control operation of the heating element. Thermostats are widespread in immersion heating elements, and may operate to connect or disconnect the heating element from a current supply in dependence upon the temperature of the tank's liquid content. The thermostat may regulate the temperature by other means, for example by gradually reducing the energy supplied to the heating element.

According to the invention the controller is arranged to determine the duty cycle of the heating element. The controller is arranged to determine the duty cycle from monitoring the electrical current waveform to the heating element. The voltage transient may also be indicative of the electrical current waveform, and hence duty cycle. The electrical current (and its waveform) is indicative of the energy deposited in the vessel. When the vessel approaches the heating setpoint, it most likely reduces energy deposition in the vessel. This can be used for the controller to determine when the heating process is completed.

Preferably the controller is arranged to determine completion of the heating process by comparison of the heating element duty cycle on/off ratio to a predefined threshold ratio. As a thermostat switches the heating element on or off, this is reflected in the current drawn by the heating element. In the beginning of heating, the on phase is relatively long; later, when the temperature approaches the setpoint, the thermostat may switch between 'on' and 'off' states more frequently. Other switching patterns are possible, and the controller may be adapted to correlate the duty cycle with the proximity of the temperature to the setpoint.

Preferably the controller modulates maintenance of the heated condition once the heating process is completed. More preferably, the controller is arranged to control the supply of energy to the heating element to maintain the heated condition once the heating process is completed. More preferably, the controller is arranged to supply energy to the heating element at shorter and more frequent intervals than a pre-determined or expected thermostat hysteresis cycle. Once the setpoint is achieved, the temperature is maintained at the setpoint. To compensate for heat losses to the environment, further energy is supplied to the vessel. For a thermostat, the frequency and duration of energy supply depends on the thermostat hysteresis. Instead of supplying energy for a relatively long period at relatively long intervals, the controller can enforce shorter energy supply at shorter intervals. This allows the vessel temperature to be maintained at a more uniform temperature, avoids excessive temperature variations, and minimises fluctuations in temperature around the desired setpoint. The controller may alternatively not maintain the heated condition, for example if the water is to be delivered just in time for the user's demand.

Preferably the controller comprises at least one of: a current sensor; a sense resistor; a transformer; and a voltage sensor for monitoring the electrical current to the heating element. Other means of detecting current may be used. A voltage sensor can be used to detect a voltage transient that can indicate the presence or absence of current through the immersion element. The magnitude of the voltage transient depends on the impedance of the connection. The magnitude of the voltage drop across the heating element may be measured by other means. Preferably the controller comprises at least one of: a relay; a transistor; a field effect transistor; and a bipolar transistor for initiation of heating. Other means of initiating heating may be used.

Preferably the controller further comprises at least one ambient temperature sensor, in dependence upon which the controller further modulates or varies the timepoint of heating initiation. The ambient sensor(s) may monitor for example the air temperature immediately outside of the insulation of a heating vessel belonging to the heating system; and/or the inlet temperature of the cold (water) that feeds into the heating system. Measurement may be direct or inferred. For example one ambient temperature sensor may measure a plurality of ambient temperatures, or a plurality of ambient temperature sensor may measure a plurality of ambient temperatures. If the ambient temperature is higher than anticipated, then the heating process can be of shorter duration than otherwise expected, and vice versa. Monitoring the ambient temperature allows to correct for this effect, thus ensuring supply of hot water at the required time while avoiding wasting of energy.

Preferably the controller further is arranged to modulate or vary the timepoint of heating initiation in dependence upon information concerning the time(s) at which the cost to the user of supplying energy to the element changes. This allows optimisation of the heating in dependence on the costs to the user. It might under some circumstances be more cost-efficient to heat the vessel in a low cost tariff period rather than just in time to ensure supply of the required supply of hot water.

Preferably the controller is arranged to complete the heating process prior to said required time. When there is a transition from a lower to a higher cost tariff, it may be preferable to arrange for heating to be completed prior to the transition to minimise cost even though this means the tank loses more heat to ambient prior to the user's demand time.

Preferably the heating element controller further comprises an indicator arranged to provide an indication to the user when the heating process is completed. This allows the user to determine if the required hot water is available, and minimises the inconvenience caused to the user if the water is ready earlier or later than required.

Preferably the heating element controller further comprises means for computing a fouling parameter, and means for controlling the operation of the heating element in dependence upon the fouling parameter. This provides the advantage of extended operational life of the heating element and reduced operational costs.

For user convenience and safety the means for computing the fouling parameter preferably comprises means for computing a bacterial risk parameter.

For efficiency and ease of use, and to minimise components, the means for computing the bacterial risk parameter is preferably adapted to compute a concentration of bacteria in at least a portion of the liquid heating system.

For efficiency the means for computing the bacterial risk parameter is preferably adapted to determine a maximum from a plurality of computed concentrations of bacteria in a plurality of portions of the liquid heating system.

For accuracy the means for computing the bacterial risk parameter is preferably adapted to compute the concentration of bacteria in dependence on temperature data, a time parameter, and a bacterial growth model.

For accuracy the means for computing the bacterial risk parameter is preferably adapted to compute the concentration of bacteria in dependence on a thermal model of the liquid heating system.

For accuracy the means for computing the bacterial risk parameter is preferably adapted to evaluate the thermal model in dependence on the temperature data and the time parameter, and to evaluate the bacterial model is evaluated in dependence on the thermal model and the time parameter in order to compute the concentration of bacteria.

For user convenience and safety the means for controlling the operation of the heating element controller is preferably adapted to activate the heating element when the bacterial risk parameter surpasses a pre-determined threshold.

For user safety the heating element controller is preferably arranged to generate an alarm signal if the bacterial risk parameter surpasses a pre-determined threshold.

For minimisation of damage, reduced operational costs, and user convenience the means for computing the fouling parameter may comprise means for computing at least one of: a scaling parameter, a bio-film thickness parameter, and a corrosion parameter.

For minimisation of damage, reduced operational costs, reduced number of components, and user convenience the means for computing the fouling parameter may comprise means for computing a bio-film thickness parameter, and the means for computing the bio-film thickness parameter may be adapted to compute the bio-film thickness parameter in dependence on a bio-film precipitation parameter, requirement data and bio-film cost data.

For minimisation of damage, reduced operational costs, reduced number of components, and user convenience the means for computing the fouling parameter may comprise means for computing a corrosion parameter, and the means for computing the corrosion parameter may be adapted to compute the corrosion parameter in dependence on a corrosion rate parameter, requirement data and corrosion cost data.

For minimisation of damage, reduced operational costs, reduced number of components, and user convenience the means for computing the fouling parameter may comprise means for computing a scaling parameter, and the means for computing the scaling parameter may be adapted to compute the scaling parameter in dependence on a scale precipitation parameter, requirement data and scale cost data.

For accuracy the means for computing a scaling parameter is preferably adapted to compute the scale precipitation parameter in dependence on water composition data, and thermal data.

For accuracy the water composition data preferably includes a pH and a calcium carbonate concentration.

For accuracy the thermal data preferably includes a thermal gradient and a bulk heating system temperature.

For accuracy and efficiency the means for computing a scaling parameter is preferably adapted to determine a saturation value in dependence on the water composition data and the bulk heating system temperature.

For accuracy and efficiency the means for computing a scaling parameter may be adapted to compute the scale precipitation parameter in dependence the saturation value and the thermal gradient.

For accuracy the means for computing a scaling parameter may be adapted to compute the scaling parameter in dependence on a measured heating element scale value.

For accuracy the means for computing a scaling parameter may be adapted to evaluate a thermal response test, the thermal response test comprising correlation of a heating element heating pulse with a thermal response in the liquid heating system.

For ease of use, efficiency, reduced number of components, and cost-efficiency, the heating element controller preferably further comprises means for computing a heat loss cost parameter, and means for controlling the operation of the heating element in dependence upon the heat loss cost parameter.

For ease of use, efficiency, reduced number of components, and cost-efficiency the means for computing the heat loss cost parameter may be adapted to compute the heat loss cost in dependence on cost data and a heat loss model, the heat loss model being evaluated in dependence on thermal measurement data, liquid heating system parameters and requirement data.

For ease of use, efficiency, reduced number of components, and cost-efficiency the heating element controller may be arranged to control the operation of a heating element such as to minimise an aggregate of the scaling parameter and heat loss cost parameter.

Preferably there is provided a system for heating liquids, comprising at least one heating element associated with a liquid vessel, and optionally a heating element controller as described above. More preferably the system further comprises a thermostat arranged to control operation of the heating element.

Preferably the system further comprises a temperature sensor associated with the heating vessel, the temperature sensor measuring a temperature associated with the liquid temperature, in dependence upon which the controller further modulates or varies the timepoint of heating initiation. If the vessel temperature is higher than anticipated, then the heating process can be of shorter duration than otherwise expected, and vice versa. The heat may still be remaining in the vessel for example from the previous heating period. Monitoring the liquid temperature allows to correct for such residual heat, thus ensuring supply of hot water at the required time while avoiding wasting of energy.

Preferably the temperature sensor is at least one of: a thermocouple; a thermistor; a resistance temperature detector; and a diode thermometer. Instead of a temperature sensor the temperature dependent resistance of the heating element may provide an indication of a temperature of the liquid. In this case inference of temperature via the pre-determined temperature coefficient is possible. A thermostat with known temperature coefficient may be retrofitted to ensure the temperature coefficient is pre-determined. Further, a resistance temperature detector (preferably a thermoresistive wire) may be arranged in the heating element to provide an indication of the temperature of the liquid. The detector or wire may be arranged in series with the heating wire, or in an independent circuit. These provisions allow inference of temperature via the pre-determined temperature coefficient.

Preferably the heating element controller further is arranged to vary the location of heat deposition in the heating vessel in dependence upon a required quantity of heated liquid. For example the heating element controller may be suitable for use in a heating system comprising at least two heating elements, wherein the heating element controller is arranged to determine to which element energy is supplied in dependence upon a required quantity of heated liquid.

As hot water in the vessel rises, it mixes with colder water and levels the temperature difference. If, on the other hand, hot water is generated at the top of the vessel first, then a hotter upper stratus forms. If the user only requires a relatively small volume of water, then much energy is wasted if the entire vessel is heated up. Deposition of heat in a targeted part of the vessel can create a smaller quantity of water at the required temperature. This saves energy and shortens the duration of the heating process, both advantageous to the user.

Preferably the required quantity of heated liquid is a user-input quantity selection. This allows the user to determine, and modify, his hot water demands of the system.

Preferably the system further comprises an array of at least two temperature sensors, each being associated with a respective particular location on or in the heating vessel. This allows monitoring of the temperature distribution within the vessel. The sensors may be in immediate contact with the liquid, and/or they may be in immediate contact with the vessel wall, and/or in proximity to the vessel. More preferably the at least two temperature sensors are at least one of: a thermocouple; a thermistor; and a diode thermometer.

For ease of installation and cost-efficiency the array of at least two liquid temperature sensors may be floatingly and/or sinkingly tethered to the at least one heating element.

For ease of installation and cost-efficiency the array of at least two liquid temperature sensors may be attached to the external wall of the liquid vessel, the sensors being in thermal contact with said external wall.

Preferably the system comprises means for determining temperature in dependence on the change in resistance with temperature of the heating element.

Preferably the liquid temperature sensor(s) comprises a resistance temperature detector in the heating element being arranged to provide an indication of a temperature of the liquid.

More preferably the controller is arranged to determine the thermocline of liquid in the vessel in dependence upon the data provided by the at least two temperature sensors. A thermocline connotes an abrupt temperature gradient in a body of water, the layer above having a different temperature from the layer below. The thermocline may be used to infer the quantity of available hot water, in the case of the hot water forming a distinct top layer.

Preferably the controller varies the location of a moveable heating element. This allows control of the location of hot water generation. More preferably, the heating element is moveable in the vessel, and the controller is arranged to control the location of a moveable heating element. For example, the moveable heating element may be a buoyant heating element tethered to a control assembly which adjusts the tether length. Adjustment of the tether length may for example be via positional control of a winding drum (or spooling device or similar) to which the tether is attached. The moveable heating element may also be a weighted or heavy heating element tethered to a control assembly which adjusts the tether length and allows the heating element to sink. The moveable heating element may be controlled via the angular position of a motorised ball screw whose axis is parallel to or collinear with the vertical axis of the vessel.

Preferably the controller varies the location of a moveable heating element, the initial location of the moveable heating element being in an upper part of a heating vessel and the location being moved downward during operation of the heating element. This allows hot water to be generated at the top of the vessel first, forming a hot layer. Deposition of heat in a targeted part of the vessel can create a relatively small quantity of water at the required temperature. If the user only requires a small volume of water, this saves energy and shortens the duration of the heating process, both advantageous to the user.

Preferably the controller is arranged to vary the downward motion of the moveable heating element to locate the heating element near to (preferably immediately beneath) the thermocline. The controller may also be arranged to vary the downward motion of the moveable heating element to locate the heating element immediately above the thermocline. The moveable heating element is preferably moved in tandem with the development of the thermocline in a position that minimises mixing. The controller may be arranged to vary the downward motion of the moveable heating element to locate the heating element at or near the location with the greatest thermal gradient in the liquid. The controller may also permit upward motion of the moveable heating element. The controller varying the location of the moveable heating element can enable optimal heating with minimal mixing and water circulation, ensuring efficient formation of a hot water layer.

Preferably the location of the moveable heating element is dependent upon at least one of: required time at which liquid is to be available in the heated state; required quantity of heated liquid; information concerning the time(s) at which the cost to the user of supplying energy to the element changes; heat transfer coefficient or temperature difference between the heating element and the surrounding water; and optimal proximity to thermocline that ensures adequate heat transfer between heating element surface and surrounding water along with minimal convective mixing.

Preferably the system comprises a plurality of heating elements, wherein the controller is arranged to control the sequence of operation of the heating elements. In general the controller may be arranged to modulate or vary the sequence of operation of a plurality of heating elements. This allows control of the location of hot water generation. More preferably, the controller is arranged to initially operate a heating element in an upper part of a heating vessel and subsequently further operates a further heating element in a lower part of the heating tank. The individual heating elements are switched on in a sequence from top to bottom. More preferably, the controller is arranged to operate the immersion elements above the thermocline and one element beneath the thermocline. As more hot water is generated, the thermocline gradually moves downward. This can enable optimal heating with minimal mixing and water circulation, ensuring efficient formation of a hot water layer.

Preferably, the system for heating liquids comprises a plume entrainment unit, wherein the plume entrainment unit arranged to channel liquid from a location of heat deposition into a reservoir region. This may assist the formation of a hot water layer at the top. In particular this permits use of a heating element at the bottom of the vessel.

Preferably the plume entrainment unit comprises a tubular structure attached to a heating element. More preferably the tubular structure comprises a porous membrane. The tubular structure may comprise folds. The plume entrainment element may further comprise at least one of: a buoyant rim; and a directional cowl. The buoyant rim assists positioning of the tubular structure such that hot water is channelled upward from the heating element. The directional cowl assists retaining hot water in the tubular structure, and prevents it from circulating freely in the vessel.

According to another aspect of the invention, there is provided a device for heating liquids in a heating vessel, comprising a heating element and means for varying the location of the heating element in the heating vessel.

Preferably the varying means is adapted to vary the location of the heating element over a substantial portion of the vessel (say more than a quarter or a third or a half of the maximum linear dimension of the vessel, or once or twice the maximum linear dimension of the heating element).

Preferably the varying means comprises a spooling device.

For reduced number of components the device may further comprise a temperature sensor capable of measuring a temperature.

For ease of installation and reduced number of components the heating element may comprise a thermostat having an integrated temperature sensor.

The device may be incorporated into a system as described above.

According to another aspect of the invention, there is provided a heating element controller for a liquid heating system (optionally as described above), wherein the heating element controller is arranged to vary the location of heat deposition in the heating vessel in dependence upon a required quantity of heated liquid.

As hot water in the vessel rises, it mixes with colder water and levels the temperature difference. If, on the other hand, hot water is generated at the top of the vessel first, then a hotter upper stratus forms. If the user only requires a relatively small volume of water, then much energy is wasted if the entire vessel is heated up. Deposition of heat in a targeted part of the vessel can create a smaller quantity of water at the required temperature. This saves energy and shortens the duration of the heating process, both advantageous to the user.

According to another aspect of the invention, there is provided a system for heating liquids (optionally as described above), comprising at least one heating element associated with a liquid vessel, and a heating element controller, wherein the heating element controller is arranged to vary the location of heat deposition in the heating vessel in dependence upon a required quantity of heated liquid.

According to another aspect of the invention, there is provided a plume entrainment unit for liquid heating systems (optionally as described above), wherein the plume entrainment unit is suitable for channelling liquid from a location of heat deposition into a reservoir region.

According to another aspect of the invention, there is provided a method of controlling a heating element for a liquid heating system (optionally as described above), wherein heating by a heating element is initiated over an expected duration of completing the heating process before a required time at which the heating process is to be completed (or a required time at which liquid is to be available in the heated state). The method may comprise: determining a heating time period corresponding to an expected duration of completing the heating process; determining a required time at which the heating process is required to be completed (or a required time at which liquid is to be available in the heated state); initiating heating by the heating element at a timepoint which is earlier than the required time by a time period corresponding to the heating time period, wherein determining the heating time period corresponding to the expected duration of completing the heating process comprises determining the duty cycle of a heating element: and determining said expected duration in dependence on said duty cycle.

Preferably the method comprises: initiating heating by the heating element at a timepoint which is earlier than the required time by a time period greater than the heating time period, in dependence upon a time at which the cost to the user of supplying energy to the element changes.

According to another aspect of the invention, there is provided a heating element controller for a liquid heating system, wherein the heating element controller is arranged to modulate (or vary) the timepoint of heating initiation by a heating element in dependence upon an expected (or estimated, or pre-determined) duration of completing the heating process and upon a required time at which the heating process is to be completed (or a required time at which liquid is to be available in a pre-determined heated state).

According to another aspect of the invention, there is provided a heating element controller for a liquid heating system, wherein the heating element controller comprises means for modulating (or varying) the timepoint of heating initiation by a heating element in dependence upon an expected (or estimated, or pre-determined) duration of completing the heating process and upon a required time at which the heating process is to be completed (or a required time at which liquid is to be available in a pre-determined heated state).

According to another aspect of the invention, there is provided a user interface that allows user input of at least one of: time at which hot water is required; quantity of hot water required; information concerning different energy tariffs and relating periods; and vessel volume. The user interface may be used with any of the liquid heating systems described above.

According to another aspect of the invention, there is provided an immersion controller comprising of some form of current sensor and means of control of the mains connection to the immersion element so that an embedded algorithm can determine the warm up time of a vessel's contents as per the architecture outlined in Figure 1.

Preferably the immersion controller can be readily fitted to an existing immersion heater and hot water tank. The immersion controller may use the computed warm up time to schedule the connection of the immersion element to a power supply just in time to meet the user's temperature requirements to avoid wasting energy.

Preferably the immersion controller is supplemented by a sensor(s) which measure the temperature of the surroundings of the vessel in order to improve the accuracy of the computed warm up time of the vessel's contents.

Preferably the immersion controller is able to inform the user when the immersion element has heated the contents of its associated vessel to the desired temperature, by inspection of the current flowing through the immersion element, using some form of user interface. The immersion controller may be able to inform the user of the amount of energy which has been consumed by the immersion element, by inspection of the current flowing through the immersion element, using some form of user interface.

According to another aspect of the invention there is provided a moveable heating element within a vessel whose position is controlled continuously to optimise the dispatch of thermal energy to a liquid.

Preferably a control algorithm determines the optimum position of the moveable heating element according to a combination of parameters such as temperature, heating element power dissipation, heating element current profile and vertical position of moveable heating element assembly. The moveable heating element may be tethered to a control assembly which adjusts the tether length via positional control of a winding drum to which the tether is attached in order to control the vertical position of the moveable heating element. The arrangement may be retrofitted to existing domestic hot water cylinders by designing in such a way as to ensure that both the control assembly and the moveable heating element can fit through a standard immersion element tank flange. Alternatively or additionally the vertical position of the moveable heating element may be controlled via the angular position of a motorised ball screw whose axis is collinear with the vertical axis of the vessel.

Preferably the position and dispatch of thermal energy from the moveable heating element is optimised such that the user requirement is fulfilled and that minimal running cost is incurred for a given electricity tariff structure.

The controller comprises a current sensor and means of controlling the mains connection to the immersion element so that an embedded algorithm can determine the warm up time of a vessel's contents. This can be achieved by inspection of the current flowing through the immersion element. The controller can infer when tank is hot from monitoring the current, and the pattern of switching on/off. The immersion controller can be readily fitted to an existing immersion heater and hot water tank. The algorithm uses the computed warm up time to schedule the connection of the immersion element to a power supply just in time to meet the user's temperature requirements to avoid wasting energy. The immersion controller can be supplemented by a sensor(s) which measure the temperature of the surroundings of the vessel in order to improve the accuracy of the computed warm up time of the vessel's contents. The immersion controller can have the capability of informing the user when the immersion element has heated the contents of its associated vessel to the desired temperature, using some form of user interface. The immersion controller can have the capability of informing the user of the amount of energy which has been consumed by the immersion element, by inspection of the current flowing through the immersion element, using some form of user interface. As users often err toward overestimation of the warm up time, the controller can help avoid substantial standing losses.

The heating system comprises a moveable heating element within a vessel whose position is controlled continuously to optimise the dispatch of thermal energy to a liquid. A control algorithm determines the optimum position of the moveable heating element according to a combination of parameters such as temperature, heating element power dissipation, heating element current profile and vertical position of moveable heating element assembly. In one embodiment, the moveable heating element is tethered to a control assembly which adjusts the tether length via positional control of a winding drum to which the tether is attached in order to control the vertical position of the moveable heating element. Such an arrangement can be retrofitted to existing domestic hot water cylinders by designing in such a way as to ensure that both the control assembly and the moveable heating element can fit through a standard immersion element tank flange. In another embodiment, the vertical position of the moveable heating element is controlled via the angular position of a motorised ball screw whose axis is parallel to or collinear with the vertical axis of the vessel. The position and dispatch of thermal energy from the moveable heating element is optimised such that the user requirement is fulfilled and that minimal running cost is incurred for a given electricity tariff structure.

The system, method, and apparatus for heating may comprise:

- A controller for scheduling heating according to time of requirement. The controller may comprise one or more of the following:
  - o duty cycle inspection
  - o current sensing hardware
  - o indication of completion of heating
- A controller for scheduling heating according to volume of requirement. The controller may comprise one or more of the following:
  - o moveable heating element
  - o array of heating elements
  - o array of temperature sensors
- A device for moving heating element
- A plume entrainment unit

Features that the system, method, and apparatus for heating may comprise include:

- Hardware arrangement whereby some form of control of the live feed to an immersion element is implemented alongside a current sensor with the intention to inform an algorithm of the warm up time
- The ability to inform user when tank has reached temperature on the basis of the steady state immersion current switching profile
- Current sensing ability, in particular sense resistor, transformer, or inference via voltage transient
- Control over the power supplied to the heating element, in particular by means of relay or insulated gate bipolar transistor (IGBT)
- Additional temperature sensor, e.g. on controller board, to infer influence of ambient temperature around tank
- The ability to infer temperature via the current flowing through the immersion wire (due to the thermal coefficient of resistance associated with the heating), possibly assisted by an instrumentation amplifier, or with a replacement thermostat with higher temperature coefficient

- The ability to resolve the warm up time by monitoring when thermostat shuts off the current to the immersion element
- The ability to continuously update any warm up times associated with user dispatch times
- The ability to learn the hysteresis margin of a thermostat in order to control more closely to set point temperature
- The ability to adjust the dispatch of power to an immersion element in accordance with any off peak times associated with the user's tariff
- Means of detection of tariff transition times via current measurement or voltage terminal voltage measurement (where a separate reduced tariff circuit exists) or detection of broadcast (e.g. radio) or other tariff transition signal,
- Dispatch of power to immersion elements sequentially from the top in order to minimise mixing during stratification
- Temperature feedback on tank to improve controller's estimate of warm up time
- Modulation of the time during which the immersion element is on to reflect the hot water volume requirement for a given volume
- Use of a "thermocline" factor to determine the relationship between immersion element run time and useable hot water volume
- Array of temperature sensors to directly measure volume of useable hot water
- Sprung loaded vertical array of temperature sensors that can be fitted through standard cylinder lagging
- The ability to monitor temperature local to element only; further a "wait time" may be incorporated to ensure that the tank's contents have settled sufficiently to get a measurement that accurately reflects the fully stratified state of the tank
- User interface that allows domestic hot water to be demanded at a given instant in time rather than setting a duration during which an immersion is switched on
- User interface that allows the user to select the time at which a given volume of useable hot water will be available
- User interface that allows the tariff data to be entered to ensure that the algorithm dispatches power during off peak time
- User interface that allows different tariffs to be compared to one another through knowledge of existing demand profile
- User interface that feeds back energy consumption associated with hot water usage
- Wireless Ethernet card in conjunction with immersion controller to enable communication with router to facilitate improved PC based interface, remote control and potential access from utility for purposes of demand side management
- System for mobile communications (GSM) card in conjunction with immersion controller to enable communication with a mobile phone network (an interface to a PC or mobile phone possibly facilitated through a website), remote control and potential access from utility for purposes of demand side management
- Array of external temperature sensors that can be fitted through standard tank lagging to allow controller to measure useable volume directly
- Use of mains link as a communication channel between controller, temperature sensor (array) unit and immersion element, for example with a switching arrangement for the mains link, to enable communication of temperature and other data without additional wiring

- Integration of temperature sensor data into a standard form to allow controller to infer useable volume of hot water

- Temperature sensor comprising a resistor connected in series between controller and immersion element with a known temperature coefficient to allow temperature at element to be inferred from current drawn from controller; alternatively standard type of temperature sensor (for example thermocouple or thermistor) and wired directly to controller or connected via existing mains cables or other means

- Array of temperature sensors tethered between a float and the immersion element to allow internal resolution of vertical tank temperatures to improve estimate of useable tank volume

- Array of temperature sensors tethered between a sink and the immersion element (being a top immersion element) to allow internal resolution of vertical tank temperatures to improve estimate of useable tank volume

- Floating immersion element whose height is controlled in such a way as to dispatch heat at optimum temperature to minimise mixing due to stratification

- A control strategy whereby the floating element begins heating from the top of the tank and gradually moves downward to develop the desired volume of hot water

- Monitoring of the voltage supply frequency, and in dependence thereon phasing of appliance operation (turn on when frequency is high to exploit surplus spinning reserve and off when frequency is low to reduce burden on grid)

- Ability to turn off the heating element if the heated state is reached too early or ahead of schedule

- Ability for user to determine a usage schedule (what time, duration, volume); controller schedules optimal heating in dependence thereupon

- The controller may be capable of comparing the duration of the heating-up phase with a reference measurement, and inferring the ambient temperature, and/or residual heat in the system prior to commencement of heating. By correlating this information with other factors, such as use frequency, the controller may be able to further optimise the heating schedule to comply with the user's needs but use no more energy than necessary.

- The controller may be able to infer the thermal mass of the tank from analysis of the toggling behaviour during warm-up; in particular, a larger vessel might have a longer toggling cycle. Information regarding the thermal mass of the tank could be used to prevent overshooting the setpoint on heating up by adapting the heating, thus minimising energy waste.

- The controller may be able to estimate the volume of hot water that is available prior to commencing heating or at any other point of time. This can be achieved with a plurality of temperature sensors at different positions in the tank, whereby a threshold is defined for the temperature above which the water is sufficiently hot. The estimation may be based on calculation of the energy residing in the tank. Information regarding the volume of hot water that is available can be used to prevent overshooting the setpoint on heating up by adapting the heating, thus minimising energy waste. The information may also be provided to a user, allowing the user to determine whether or not a particular usage (e.g. taking a shower) is possible with the hot water available at that point in time.

- The controller may be able to estimate bacterial growth by monitoring vessel temperature feedback given a bacterial growth model. Such information regarding likely growth of bacteria in the vessel may allow the controller to provide an indication to the user regarding the risk of bacterial infection, and/or initiate heating of the liquid in the vessel.

- An algorithm with sufficient temperature feedback could maintain a real time estimate of bacterial population using such information. If the population exceeded a given threshold, the algorithm could inform the user and/or heat the contents of the tank to a temperature and duration over which the growth model predicted a decline in population back to safe levels. A radiation source, preferably ultraviolet light radiation source, may be installed in the vessel to inhibit the growth of bacteria. Radiative bacterial inhibition eliminates the need to heat the entire liquid volume to ensure water quality, thus enabling (repeated) heating of only small volumes of liquid in the vessel without jeopardising water quality. This may be particularly relevant for vessels that are larger than the usual usage requirements. Heating only the required volume of liquid minimises energy losses.

An algorithm or controller determines at least one of: the duty cycle of a heating element; the rate of decrease (or increase) in the activity of a heating element; and the duty cycle behaviour of the heating element relative to the behaviour on previous occasions. These may be determined by sensing the current (or energy) drawn by a heating element that is under thermostatic control. The controller can use the information to adapt scheduling of hot water supply. Further, temperature sensing (e.g. in the environment, in the vessel) may provide additional information to adapt the scheduling.

An algorithm or controller controls the height (or location) in a vessel at which heating occurs. This may be done with mechanical height adjustment of a heating element. For a mechanically height-adjustable heating element to be retrofitted to an existing vessel, it is preferably small enough to enter through existing portals. A buoyant (or sinking) heating element attached via a tether to an anchor is potentially retrofittable in this manner. Alternative installation involving fitting a suitable portal or flange to the vessel is possible too. For example a larger opening in the vessel may be cut through which the heating element can be retrofitted, with a new, larger flange fit to the new opening.

An algorithm or controller controls the position of heating activity to be initially at the top of the vessel and in due course be at a more downward position. The controller determines the location of the boundary of the hot water layer in the upmost region of the vessel. The controller controls the position of heating activity to be near or below the location of the boundary of the hot water layer. The controller may use an array of temperature sensors to determine the temperature at different locations in the vessel, and/or the location of the boundary of the hot water layer. Instead of a height-adjustable heating element, an array of heating elements may be addressed by the controller to control the height in a vessel at which heating occurs.

An algorithm or controller controls the position of heating in dependence upon information concerning the time(s) at which the cost to the user of supplying energy for heating changes. It may be advantageous for given tariff and requirement schedules to initiate heating earlier than necessary for just-in-time delivery, and the resulting losses may make it advantageous to heat a different volume than the required volume. There may be an optimum position of heating (between the two extremes) that depends on the length of time between the transition to an on-peak tariff period and the time at which the user requires hot water.

A user interface allows the user to input at least one of: a chosen time and a chosen water volume for the controller to schedule operation of the heating.

The invention extends to methods and/or apparatus substantially as herein described with reference to the accompanying drawings.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

Furthermore, features implemented in hardware may generally be implemented in software, and vice versa. Any reference to software and hardware features herein should be construed accordingly.

These and other aspects of the present invention will become apparent from the following exemplary embodiments that are described with reference to the following figures in which:

Figure 1 shows the elements of the heating system;

Figure 2 shows an immersion control system that can be retrofitted to an existing heating system;

Figure 3 shows a typical time chart for heating of a domestic hot water tank;

Figure 4 shows an example of a system diagram;

Figure 5 shows the relationship between immersion element wire resistance and temperature;

Figure 6 shows the top level of the state machine associated with the cold-to-steady-state-warm-up-only algorithm;

Figure 7 shows the state machine associated with the evaluate-warm-up-time algorithm;

Figure 8 shows the parallel state machines associated with the user interface and element control;

Figure 9 shows the state machine associated with the element being switched on

Figure 10 shows controller minimisation of the temperature variation associated with thermostat hysteresis;

Figure 11 shows the immersion controller monitoring mains feeds to determine tariff transition times;

Figure 12 shows the immersion controller incorporating antenna and receiver to interpret broadcast of tariff transition times;

Figure 13 shows a conventional hot water cylinder and temperatures at different positions;

Figure 14 shows sequential powering of two immersion elements;

Figure 15 shows an array of numerous immersion elements;

Figure 16 shows how the position of heat injection affects the temperature distribution in the vessel;

Figure 17 shows an array of temperature sensors used to resolve the volume of hot water that there is in a tank;

Figure 18 shows the user interface for user input of hot water requirements;

Figure 19 shows the user interface for user input of tariff configuration;

Figure 20 shows the user interface for user input of tariff-dependent use preferences;

Figure 21 shows a wireless enabled user interface;

Figure 22 shows a GSM based user interface;

Figure 23 shows a vertical temperature sensor array fitted to a tank;

Figure 24 shows an array of tank temperature sensors interfaced with the immersion controller;

Figure 25 shows an example of retaining bands used for retrofit bimetallic tank sensors;

Figure 26 shows use of an existing mains link between controller and tank as a communications bus between the temperature array and controller;

Figure 27 shows the layout of a system exploiting the existing mains link for communication;

Figure 28 shows temperature measurements performed on a tank at different positions;

Figure 29 shows a typical immersion element with thermostat probe and a separate bimetallic thermostat;

Figure 30 shows a replacement thermostat that provides temperature feedback to the controller by means of a temperature coefficient of resistor;

Figure 31 shows a replacement thermostat with an integrated temperature sensor;

Figure 32 shows a moveable heating element arrangement;

Figure 33 shows a floatable heating element arrangement;

Figures 34 and 35 show a control assembly for the floatable heating element arrangement;

Figure 36 shows a plume entrainment membrane mounted in a tank;

Figure 37 shows a function fitted through temperature measurements plotted against sensor coordinates;

Figure 38 shows water density as a function of temperature;

Figure 39 shows the decimal reduction in time against temperature of a Legionella population;

Figure 40 shows the temperature response of a heater;

Figure 41 shows a simplified model of hot water tank immediately after being brought to temperature;

Figure 42 shows the reduction of heat transfer on a copper plate heat exchanger against scale thickness;

Figure 43 shows exemplary relative electricity consumption as a function of scale thickness;

Figure 44 shows solubility of calcium ions in water at different temperatures and pH values;

Figure 45 shows the mechanism driving scale products on to heat transfer surfaces;

Figure 46 shows a numerical thermal model;

Figure 47 shows some examples of standard domestic hot water duty cycles;

Figure 48 shows control algorithm with various inputs and model elements;

Figure 49 shows the results for a simulation;

Figure 50 shows a flow chart for selecting a control strategy;

Figure 51 shows a hardware arrangement with no feedback;

Figure 52 shows a hardware arrangement with energy consumption measurement;

Figure 53 shows a hardware arrangement with a retrofit thermostat with integrated temperature measurement;

Figure 54 shows a hardware arrangement with an external vertical sensor array;

Figure 55 shows a hardware arrangement with an internal array of temperature sensors suspended beneath a thermal source;

Figure 56 shows a hardware arrangement with an internal array of temperature sensors throughout a tank;

Figure 57 shows a hardware arrangement with inlet/outlet flow/temperature measurement; and

Figure 58 shows a heating element controller with fouling computation.

**Detailed Description of the Invention**

In reference to Figure 1, a controller 100 monitors heating 122 of a heating element 106, for example by measuring the current flowing through an immersion element. This allows the controller 100 to detect when a vessel 104, typically containing hot water, has reached the desired temperature. An algorithm embedded within the immersion controller learns the time required for the vessel to reach the desired temperature, for example by inspection of the current waveform. The user of the controller programs, via a user interface 102, the required times 110 at which the vessel's contents are to be at some desired temperature. The user may input further variables, including volume 112 of water desired and information regarding energy tariffs 114. An algorithm embedded in the controller 100 calculates scheduling of the immersion element. This allows the controller 100 to control 118 heating, in particular initiating and terminating heating, for example by control of the power supply to the heating element 106. Monitoring the heating 122 further allows the controller 100 to indicate to the user, via the user interface 102, when the desired hot water is available 116. The controller can be readily fitted into an existing immersion heater system and offer significant energy savings.

The controller 100 further may control the position 120 at which heat is injected into the vessel 104. By delivering thermal energy at the correct height within the tank at all times the volume of heated water is adjusted to a user's volume 112 requirements. Instead of heating the tank from the bottom, thermal energy can initially be injected wherever is optimal depending on a variety of factors (such as tariff structure, volume required and proximity to user demand time). Typically heating begins at the top of the tank. This minimises the distance that water travels due to stratification. As the upper portion of the tank attains a useful temperature, the injection point of thermal energy is lowered so that a larger volume of hot water is gradually developed. This process avoids needlessly heating the entire tank since a precise volume of high temperature water is developed with minimal diffusion of thermal energy through stratification. Further, the time required to deliver a small required volume of water is greatly reduced since the elapsed time becomes a function purely of the power rating of the system rather than the thermal inertia of the entire content of the tank.

In the following application to electric domestic hot water systems is discussed, as an exemplary application involving the heating of a liquid.

The heating element may for example be an immersion element. For brevity, the term 'immersion controller' is used in reference to an immersion (or other) heating element controller.

### 1. Immersion Controller

This invention takes the decision regarding the duration of time over which the immersion heater element is switched on out of the user's hands by inferring how long the contents of a vessel takes to reach a desired temperature through measurement of the current waveform feeding the immersion element. Figure 2 illustrates the scheme. The controller 100 receives data from a sensor 200 monitoring the current that is supplied to the immersion heating element 106. The controller 100 can open and close the connection 202 of the immersion heater 106 to the mains supply 204. The controller interacts with a user interface 102. The controller 100, user interface 102, sensor 200, and connection 102 can be fitted to vessel with an existing heating system that has a power supply 204, immersion heater 106 (with thermostat 128) and a power return 206. Suitable sensors 200 include a sense resistor and a transformer. Suitable connections 202 include a relay, a field effect transistor, and a thyristor.

The user decides when the vessel's contents are to be at a desired temperature by programming the device through the user interface. On first use, the controller processes an algorithm that learns how long the immersion element takes to heat the vessel's contents to the desired temperature by connecting the immersion element to the mains and monitoring the current.

Connection of an immersion element to a domestic hot water tank, for example, typically leads to a system response resembling the data presented in Figure 3. This time chart shows an overlay of vessel temperature 300, cumulative energy consumed 302, and the current 304 to the immersion element. The vessel temperature 300 is initially at ambient temperature 305, but gradually increases to the (preset) immersion thermostat temperature 306 and then is maintained around this level. The immersion element current 304 is switched on at the beginning of the heating; local heating in the tank around the thermostat can cause the current to switch off at a time 308 before the thermostat temperature 306 is attained.

At the end of the warm-up time 310, the current going through the immersion element begins to toggle on and off due to the thermostatic controller on board the immersion element turning on and off when the temperature surrounding the thermostatic device oscillates around the preset value and associated hysteresis margin. By examining the profile of the immersion element current waveform, the algorithm learns when the vessel reaches the desired temperature along with how long the warm up time is. Using this information, the algorithm can forecast when the immersion ought to be turned on in future to satisfy the timing of the user's demand.

Examination of the immersion element current waveform can for example be by calculating an off-to-on time ratio, and comparing it to a threshold. Once the thermostat starts to turn the element off more frequently, the vessel is at or near to the setpoint temperature. This is reflected in the ratio, which can be compared to a threshold value. The exact threshold ratio depends considerably on the vessel volume, dimensions, thermostat model, and other factors. The immersion element current waveform can be monitored to determine a standard warm-up time that is used for further operation. If the current wave-form is continuously monitored, the warm-up time can be determined for under a variety of operational conditions, allowing possible inference regarding factors including ambient temperature, residual heat in the vessel, premature drawing of water. Further, continuous monitoring can provide data about usage to the controller. These factors allow the controller to account for a wider variety of factors relating to the user's hot water demands and better anticipate the requirements on the immersion element.

In Figure 3 the vessel is maintained at the thermostat temperature after the warm-up is completed. If the warm-up time is overestimated by the user, the warm-up is completed 310 before the intended time 312. The overestimation 314 of the warm-up time causes waste of a quantity of energy 316, which can be saved by using the immersion controller.

The algorithm refines its estimate of the warm up time over time to reflect any changes in residual heat in the system or ambient conditions. For example, the algorithm can correlate the current waveform time period with the amount of residual heat in the system to further shorten the duration of time over which the element is unnecessarily turned on. This forecasting is further aided by the presence of an optional temperature sensor 126 to correct for variation of the temperature of the vessel's and/or its immediate surroundings.

The algorithm would be able to signal to the user when the tank has reached the desired temperature along with the amount of energy consumed by the immersion element. The algorithm further has the ability to signal to the user the quantity of hot water that is in the tank. For example, the algorithm can determine the quantity of hot water based on the thermocline position. The toggling duty cycle may also be correlated to the quantity of hot water - earlier in the heating process, a lower quantity of water is available, and the heating element is more likely to be switched predominantly on.

**1.1 Hardware**

**1.11 Hardware Implementation Examples**

Figure 4 shows an example of a system diagram. A microcontroller 400 runs an embedded algorithm which interprets:

- a user schedule input from a 6 button interface 402 (via a switch on port)
- an analogue signal from a Hall effect current sensor 404 (analogue signal 0-5)
- a time reference from a real time clock IC 406 based around a 32.768 kHz oscillator crystal (via a I2C communication interface).

A LCD display 412 (supplied in 4 bit nibble format from the microcontroller 400) assists user input. The microcontroller 400 has control of a relay 408 which controls the live side 410 of the supply to the immersion heater element. There are many different hardware arrangements that can deliver a satisfactory user interface and time reference (i.e. capacitive touch switches or internal real time clock (RTC) on board microcontroller).

**1.12 Other potential means of detecting current**

A hall effect IC 404 may not be the most cost effective means of getting a binary indication of current. There are a number of alternative means of sensing current, for example a feedback resistor, a transformer, or inference via voltage transient. There are described in more detail.

<u>Feedback resistor</u>

The Hall effect sensor can be replaced with a resistor with a differential voltage measurement being made across it to determine the current that is going through it. This may be a cheaper alternative to the Hall effect IC.

The design would have to trade off resolution against resistor power dissipation. A 3kW immersion element will draw approximately 13Amps of current. The power dissipated is given by:

$$P = I^2 R_s \qquad \text{(Eqn. 1: Power dissipation in sense resistor)}$$

where P is the power in Watts, I is the current in Amperes and $R_s$ is the sense resistance in Ohms. A typical low cost microcontroller unit (MCU) has an integrated 8 to 12 bit ADC as one of its peripheral circuits. Assuming we have 8 bit resolution across a 5 volt supply, we can assume that a voltage drop of at least 20mV would be desirable. If we assume 50mV to allow additional signal to noise margin, this implies a resistance value of 0.2mOhms. This would lead to 33mW of power loss. This is a commercially available size of resistor however 0.75mOhms is more widely available, cheaper and the resulting 130mW of power dissipation would be comfortably within the 1 W rating that is typical of a type 2512 package. Isolation between the low and high voltage supplies is necessary. Some MCUs accommodate a separate analogue ground which could be tied directly to mains.

Transformer

A transformer essentially comprises of two coils with a common core made of a magnetic material. The turns ratio between the primary and secondary windings determines the relationship between input and output voltages. A secondary voltage will only be present if there is a current flowing through the primary winding to establish a changing flux linking the two coils. If one end of the transformer's primary winding is connected to the mains feed with the other connected to the immersion, any current drawn from the immersion will result in a voltage appearing across the terminals to the secondary winding. The advantage with this approach is that it provides both galvanic isolation and scaling of the voltage to be achieved in one step. The disadvantage is that transformers are relatively expensive.

Inference via voltage transient

When the immersion thermostat closes, the inrush of current to the element will cause a transient drop in mains voltage. This could be measured and used to establish that the element has toggled on. Similarly a transient rise in voltage would indicate the opening of the thermostat. Voltage measurement could be a useful feature to have since it would allow the frequency of the mains supply to be monitored at all times, it is possible that in future there will be a desire for demand side management techniques whereby appliances phase their operation according to the frequency of the mains supply (i.e. turn on when frequency is high to exploit surplus spinning reserve and off when frequency is low to reduce burden on grid).

**1.13 Potential means of controlling supply**

In addition to using a relay, there are a variety of solid state alternatives to controlling the supply, these include:

- Some form of field effect transistor (FET) such as an insulated gate bipolar transistor (IGBT)
- Some form of bipolar transistor

The advantage with using solid state devices in this application is that they are cheap and reliable compared with relays. However, most semiconductor switching devices have a turn on resistance meaning that power would be dissipated across the device whereas a relay has minimal on resistance once closed and so long as suitable snubbing circuitry is included, can be a reliable switching device.

**1.14 Addition of Temperature Sensor to Controller Board**

A sensor on the controller board could be used to infer ambient temperature. This would allow adjustments to be made to the predicted warm up time used to schedule the switching on of the immersion element. The controller would have to be in the same environment as the tank; if it were in another room, there would be no way of inferring the tank's ambient temperature.

**1.15 Inference of temperature via magnitude of current through resistive wire**

If a continuous current sensor is used (i.e. Hall effect, feedback resistor or transformer), and assuming its resolution is sufficient, an instrumentation amplifier could be added to its output to allow a microcontroller to resolve the temperature of the water surrounding the immersion element via the change in current due to the thermal coefficient of resistance associated with alloy heating wire.

Figure 5 shows the relationship between immersion element wire resistance and temperature. An immersion element's resistance can vary around 5 percent as it approaches its operating temperature. The algorithm learns to correlate the magnitude of the current to the time to reach steady state. The following are considered:

1. Measuring small deltas in current.

2. The extent to which changes in current could be correlated to residual thermal energy in the tank.

Use of a resistive wire which has a greater temperature dependence can assist regarding points 1 and 2. This would however require installation of a new immersion element and would also result in more variability of dispatched power.

### 1.2 Algorithmic Implementation

There are numerous control strategies that could be implemented; this section describes 5 variants or features that could be incorporated into one single algorithm. The algorithms are described in terms of a state machine and the following table provides some of the (arbitrary) naming conventions that have been used throughout this section. Initially this section will describe the state machine associated with the most simple implementation- all subsequent algorithms can be more or less viewed as extensions of this state machine.

*Table 1 A selection of terms/variables and flag names that are used to describe a finite state machine implementation of various algorithms described throughout this section.*

| Term (T), Variable or Register of Variables (V), Flag (F) | Definition |
|---|---|
| Learn Setting (F) | The name of a flag that is set when the controller is required to learn a warm up time period prior to any time that hot water is demanded of the system. |
| Water Dispatch (T) | The moment that the user of a hot water system intends on drawing hot water from the tank. |
| Water Dispatch(n) (V) | A register of times that have been selected by the user over some schedule period, this is set to equal the UserMark(n) values selected via the controller interface. |
| UserMark(n) (V) | A variable in time which has been set by the user and which marks the instant at which hot water will be required from a hot water system. |
| User Input Trig (F) | A flag to indicate that the user has interacted in some way with the controller interface, used to allow the software to transition to a state in which it is able to update the water dispatch register with any changes in desired water dispatch times. |
| OverrideOn (F) | A flag set by the user to force the hot water tank to warm up at any time outside of the schedule that has been pre-programmed. |
| OverrideOff (F) | A flag set by the user to cancel the dispatch of hot water that would otherwise occur. |

### 1.21 Cold to Steady State Warm-up Only (CSSWO) Algorithm

This is the most simple algorithm, all it requires is binary feedback of current (i.e. is the immersion element on or off) and so would therefore work with any of the current detection methods discussed in section 1.12. This algorithm can be summarised by the state machine detailed by Figure 6 through to Figure 9.

Figure 6 shows the top level of the state machine associated with the CSSWO algorithm. Initially 600, the algorithm either enters the: "Evaluate_Warm_Up_Time_From_Cold" (EWTC) 602 or the "Normal_Running" state 604. This depends on the "Learn_Setting" flag. The Learn_Setting flag could be set by default so that it is automatically entered into on first use. Alternatively the controller interface could allow the user to set the Learn_Setting flag so that it could be updated periodically to reflect changes in ambient conditions. The controller is turned on and the learn setting is selected, causing the EWTC state to be entered. The user is required to ensure that the contents of the tank are cold (i.e. by cycling the tank contents by running the hot tap until it runs cold) for proper operation of EWTC state.

The EWTC state 602 is described by Figure 7. The controller immediately enters the "dispatch_power" state 702 where the relay is closed (Relay = 1) and the register, Timeregl is updated with the current time provided by the real time clock (RTC). The dispatch power state is maintained until the current going through the immersion element drops beneath a threshold value (some percentage of the initial instantaneous current at the beginning). This indicates that the thermostat local to the immersion element has shut off the supply to the heater wire. When the current drops beneath the threshold, the "Evaluate Switch Duty" state 704 is entered. In this state the period duty cycle of any subsequent switching events are analysed to determine whether the system has attained steady state operation or not (Steady_State_Reached = 1). The system reaching steady state operation marks the transition to the Record_Warm_Up_Time state 706 where the register Timereg2 is updated with the current time. The algorithm then subtracts Timeregl from Timereg 2 to provide the "Warm_Up_Time". On doing this the "Learn_finished" flag is set allowing the EWTC state to be exited.

In an alternative algorithm, the controller could start operation with an estimated present value for the warm-up time, and learn on the fly what the actual warm-up time value is, and replace the preset. This functionality would usefully be supplemented by a function that can turn the heating element off if the setpoint temperature is attained before schedule, and then resume heating in time for the intended schedule to be followed.

With reference to Figure 6, the normal operation mode is entered into once the Learn_finished flag is set and the Learn_Setting flag is cleared. The normal running part of the algorithm comprises of two state machines running in parallel. This is shown in Figure 8.

In Figure 8 the left hand state machine monitors the user interface. The user interface comprises of a visual timeline on which markers can be set to indicate when hot water should be available. Any marker (UserMarkl to User-Mark(n)) that the user puts down on this timeline is recorded in the dispatch register as single time entry per marker from WaterDispatchl to WaterDispatch(n).

In Figure 8 the right hand state machine arranges the moment that the immersion heater is turned on. The times at which the immersion should be turned on are determined by subtracting the warm up time from the user's desired hot water dispatch time. These times are stored in the schedule register. The transition to the Element ON state 900 occurs once the current time is greater than or equal to any of the immersion dispatch time but less than or equal to the water dispatch times. The transition to the off state occurs when the expression associated with the transition to the on state is not true. An override command can allow the user to force a transition to either the off or on states.

Figure 9 shows the state machine associated with the heating element being switched on. When the Element ON state 900 is transitioned to, the relay control line is set to 1 causing current to flow through the immersion element. Once the current drops beneath a threshold the switching duty is evaluated (exact frequency and duty cycle associated with steady state are determined in advance). On detection of steady state operation, the Signal_To_User state 902 is reached. In this state the relay is opened to shut off the immersion element and the Hot_Tank_Flag is raised to allow the user interface to signal that the contents of the tank have attained the operating temperature.

### 1.22 Warm-up Learn Algorithm (WLA)

The WLA algorithm is similar to the CSSWO approach with the exception that learning is continuous and individual warm up times are computed and assigned to each associated water dispatch time that the user programs. This deals with the situation where the user regularly leaves residual hot water which reduces the subsequent time required to heat the tank. By continually adjusting the warm up times, this algorithm automatically controls for any seasonal changes in ambient conditions that may result in differences in heat transfer from the tank and consequently warm up times.

This approach could be implemented as follows:

1. Allow the user to program the water dispatch schedule over some defined time period (for example a week).

2. For the first week operate in a conservative manner by assuming that there is no residual heat in the tank prior to any particular water dispatch time.

Should the user's behaviour change, (i.e. there is a sudden change in actual warm up time compared with warm up time measured for a prior water dispatch time), two things can happen:

1. The immersion element is turned on prematurely due to additional residual thermal energy that was not there previously. This could lead to higher steady state losses.

2. The immersion element is turned on too late owing to the fact that the tank is depleted in residual thermal energy. This would result in a delay in the actual water dispatch time compared with what was set by the user.

Both of the above scenarios are dealt with by the fact that the controller can detect when steady state operation has been attained. In scenario 1, the controller interface would alert the user that the tank is ready to dispatch hot water but would maintain the tank temperature until the programmed dispatch time. This would give the user the opportunity to draw hot water earlier than intended to minimise steady state losses if desired. In scenario 2, the user would be alerted to the fact that the tank was not hot by the controller interface and so would therefore allow more time for the tank's contents to warm up.

### 1.23 Hysteresis Minimisation

If it is required that the water be kept at steady state (set point) temperature 1000 for a prolonged period, the controller could minimise tank temperature variation that occurs due to the hysteresis margin associated with the bimetallic thermostat integrated in the immersion element. Figure 10 (top) illustrates the response that would be expected from a standard thermostat. Figure 10 (bottom) illustrates a potential scheme whereby the controller initially allows the immersion thermostat to dictate the temperature during warm up. After warm up is completed, instead of the thermostat regulating when the immersion element turns on and off, the controller turns the immersion element on and off with the aim of injecting power at shorter and more frequent intervals so that the set point temperature is more closely attained. This is possible as the controller can monitor the temperature gradient against immersion power or elapsed time after the immersion has been shut off. The set point temperature could be maintained through a process of "dead reckoning" whereby the algorithm would compute the change in temperature for a given period of immersion on or off time. Once in a while, the controller would allow the temperature to rise until the immersion thermostat trips allowing the steady state switching duty to be periodically calibrated against the immersion thermostat.

### 1.24 Tariff Informed Algorithm (TIA)

The Tariff Informed Algorithm (TIA) aims to dispatch power to the immersion element during times when the tariff is at its lowest (off peak). For example in the UK a reduced tariff operates in certain periods, such as during off-peak usage times or at night. Typically other countries have similar low tariffs at certain times to encourage off-peak usage. If the user desires a full tank of hot water in the morning from a reduced tariff which happens to set the off peak rate between the hours of 12 midnight and 6 in the morning, the controller will begin dispatching power at 6am minus the warm up time that has been computed. This warm up time could be continuously updated as described in section 1.22 or determined at any instant as described in section 1.26.

One implementation of this could be at the controller interface level where the user is prompted to enter the tariff time and rate markers (i.e. times associated with commencement of off peak and transition to on peak) along with the off and on peak costs per kWh. There may be provision at this level for multiple rates and off peak tariff time zones depending on the user's contract with the utility, for example some UK contracts have one off peak rate during the night and another in the afternoon that operates over several hours. This scheme is often referred to as "flexi-heat" as it provides a boost to storage heaters for people who work during the day.

Figures 11 and 12 illustrate one issue with attempting to turn the element on at the cheapest time. The network operator for a given jurisdiction may have flexibility over precisely when the off-peak tariff is applied. In the UK, many domestic systems have, beside an ordinary permanently live circuit 1102, a separate circuit 1104 that is live at off-peak times only. The off-peak circuit 1104 feeds consumer units 1106 which are dedicated to appliances that run on an off-peak or otherwise reduced tariff. A radio controlled switch 1100 is operated by the utility to make this circuit live during off peak time.

Often the precise time of switching between the off peak circuit and the (more expensive) ordinary permanent circuit is not predictable (e.g. the network operator may cascade the switching of reduced tariff circuits to prevent sudden in-rush currents from multiple heating systems compromising the stability of the network). If there is a difference between the time reference embedded in the controller and the time reference used by the network operator for the purposes of off peak dispatch, there is the risk that the hot water system may attempt to draw power during the on peak tariff in which case either two scenarios will unfold:

1. The controller will attempt to power the immersion element from a dead supply and so the tank will not attain correct operating temperature; this would inconvenience the user and potentially waste all the energy that had been consumed prior to the transition to on-peak.

2. If the immersion element is not running from a separate supply, any power that is dispatched to it will cost more than what would otherwise have been charged (up to 3 times more in the UK).

Two solutions to the above are:

1. Monitor the voltage 1108 on the incoming supply to detect whether and when it is switched at the household meter (Figure 11) enabling the controller 100 to learn the tariff transition times.

2. Implement a receiver 1200 and antenna 1202, capable of decoding the signal broadcasted to electricity meters. This allows the controller 100 to monitor the tariff transition times (Figure 12).

### 1.25 Dispatch to Multiple Element Algorithm (DTEA)

Where there are multiple elements, (i.e. systems with a primary element at the bottom to heat the entire contents of the tank and a secondary (boost) element at the top of the tank to heat the upper portion only for applications like washing the dishes or taking a quick shower), the dispatch of power could be assigned in such a manner as to dispatch energy with maximum exergetic and volumetric efficiency.

Current systems typically charge the entire contents of a tank through powering the bottom element alone or charge the upper portion only by powering the top element to provide additional hot water towards the end of the day for dishes or a shower. When heat is dispatched from the bottom immersion element, the thermal energy is diffused due to mixing as it convects toward the top of the tank. This diffusion of energy results in a lower mean tank temperature. This is illustrated by Figure 13 where schematic temperatures at different positions in a conventional hot water cylinder are shown. The left hand part of the figure shows a standard vented combination hot water tank with a fixed immersion element; tank elements include a header tank 1300, an immersion element 1302 (with a heating element and a thermostat), an outlet 1304, a breather 1306, a head tank 1308, a cold main 1312, a ball valve 1310, and a tank inlet 1314. Thermal energy stratifies to the warm portion of the tank losing heat to the lower portion of the tank in the process. The right hand part of Figure 13 shows the temperatures over time at three different positions in the tank: next to the immersion element (1), in the middle of the tank (2), and near the top of the tank (3). For injection of a given power quota over a given time period, there is a large resulting difference in temperature at the bottom, middle and top of the tank.

Figure 14 illustrates a potential scheme for a tank with twin immersion elements 1400. Whenever power is delivered to the immersion elements, it is delivered first at the top (boost) element (Figure 14, left). This allows the heat to convect and stratify over a relatively short distance minimising mixing and consequent reduction in mean temperature. Once the top portion of the tank has attained operating temperature, the top element is unable to effectively heat the rest of the tank since the mode of heat transfer to the remaining volume of cold water is now via conduction (convection impossible since remaining cold water is below element). Conduction is a much slower mode of heat transfer under these circumstances and so the temperature of the water immediately surrounding the top element quickly rises causing the local thermostat to shut off the power. Essentially the top element can be considered to be operating in a sort of steady state once this point has been reached. This steady state operation can be inferred via any of the methods described in section 1.2. Once steady state for the top portion of the tank has been detected, the top element is disconnected and power is delivered to the bottom element (Figure 14, right). This approach could be generalised for any number of immersion elements, as shown in Figure 15, whereby the firing order of heating elements would begin the topmost element and move sequentially downwards until the bottom element.

Figure 16 shows how the position of heat injection affects the temperature distribution in the vessel. The dashed curve 1608 indicates a system where the heat is injected at the bottom of the vessel (indicted by an arrow). Near the heating element the temperature is high, then decreases, and at the top a hot layer develops. The thin curve 1606 indicates a system where the heat is injected at the top of the vessel (indicted by an arrow). Heat from the top only gradually is conducted downward. The bold curve 1602 indicates a system where the heat is injected at the interface between the upper hot zone and the lower cold zone (indicted by an arrow). Unlike the other heat injection curves, there is a volume of water already available at the desired set temperature 1600.

Other strategies of heat injection are possible, for example in dependence upon tariff information. There may be an optimum position of heating (between the two extremes of heating at the top and heating at the bottom) that depends on the length of time between the transition to an on-peak tariff period and the time at which the user requires hot water.

For example, if the entire vessel volume is to be heated during a reduced-tariff period to take advantage of reduced heating costs, heating from the bottom (without the need for changing the position of the heating) may be more efficient. Heating from the bottom causes the temperature at the top of the vessel to increase more slowly than in the case of heating from the top of the vessel downward. If heat losses are highest at the top of the vessel (the heat transfer coefficient being greatest there), due for example to the presence of an outlet, then heat losses can be reduced by heating from the bottom. On the other hand, for just-in-time delivery of a small volume of hot water during a high-tariff period it may be preferable to inject power from the top first, to avoid heating a greater volume than required.

It may be advantageous for given tariff and requirement schedules to initiate heating earlier than necessary for just-in-time delivery, and the resulting losses may make it advantageous to heat a different volume than the required volume. For example, suppose the user has a lower tariff rate for electricity consumed between 7am and noon, and a higher tariff rate for all other times. If there is a requirement to wash dishes at 11am, the algorithm determines whether it is either cheaper to dispatch power so that the correct temperature and volume is available at 11am to minimise standing losses (just in time), or whether it is better to pre-heat a larger volume of hot water before 7am using the lower tariff. The aforementioned larger volume of hot water compensates for expected reductions in temperature due to standing losses in the period until 11am.

The user may wish to use water at around 45°C. The temperature of water dispatched from the tank can be anything above 50°C to meet this requirement (and inhibit bacterial growth) since the user determines the final temperature with the cold tap (or the temperature is set for the user by a mixer tap with integrated thermostat).

In general, a variety of heat injection strategies depending on a variety of factors (such as tariff structure, volume required and proximity to user demand time) may be implemented with the system.

### 1.26 Temp Feedback Informed Algorithm (TFIA)

The temperature feedback informed algorithm makes an estimate of the warm up time, ahead of the moment power is to be dispatched to the immersion element. This is based on the temperature of the water in the tank at that instant. This system would respond to changes in activity that lead to differing amounts of residual hot water in the system.

Temperature feedback further enables the algorithm to monitor the likely growth in bacteria and ensure that the tank contents is thermally cycled in such a manner as to prevent the number of colony forming units from exceeding regulatory thresholds (for example 10,000/ml for Legionella bacteria). A growth model within the algorithm can track the worst case bacterial population over time on the basis of temperature. With Legionella bacteria, for example, temperatures between 20°C and 45°C promote positive growth in the population with growth rates peaking at 37°C whilst temperatures beyond 49°C cause the population to decline linearly. Plots are publicly available that relate the temperature to the population decline rate, for example by plotting the decimal reduction time (time to kill 90% or a population) against the temperature.

An algorithm with sufficient temperature feedback can maintain a real time estimate of bacterial population using such information. If the population exceeded a given threshold, the algorithm can inform the user and/or heat the contents of the tank to a temperature and duration over which the growth model predicts a decline in population back to safe levels.

Bacterial monitoring is described in more detail below.

### 1.27 Variability of dispatched volume

Depending on the gradient of the tank's thermocline developed during stratification, there could be an ability to control the volume of hot water dispatched by varying the time period over which power is delivered to the immersion element(s). The user interface could allow users to schedule the type of activity they wish to engage at a given time so that the appropriate volume of hot water can be developed. Broadly speaking this would require the following:

1. The tank dimensions or type to be programmed into the controller or inferred by the controller via warm up time.
2. A lookup table which correlates the variables: dispatched power, elapsed element on time and any temperature measurements available to determine the resulting useful volume of hot water at any given instant. This table can be developed via empirical and computational fluid dynamic (CFD) analysis of various tanks to determine thermocline gradient and stratification number as a function of tank height and diameter (or type). Alternatively, the controller could be adapted to learn the correlation between the volume of hot water in dependence upon factors such as dispatched power, elapsed element on time and temperature measurements. This is possible because the longer the element heats (or the more power dispatched to the tank), the greater the volume of water in heated state is. The controller can have the ability to learn this correlation, allowing reasonable estimates to be made based on past behaviour.
3. Once the immersion element has been turned on for some period of time, there may have to be a wait period to allow the contents of the tank to settle to ensure that the tank is fully stratified prior to use. This measure would be taken to ensure that any residual momentum in the fluid due to convection has died down and is not added to by the flow of water associated with drawing hot water from the outlet and feeding cold water to the inlet thus minimising any mixing that might otherwise occur.

The volume of useable hot water available could be given by an equation of the following form:

$$V_u = F_t\left[\frac{\int_{t_{on}}^{t_i} IV dt}{C_p\left(T_{tnk} - T_{initial}\right)}\right] \quad \text{(Eqn. 2: Useable volume of hot water in tank)}$$

where $V_u$ is the useable volume in litres, I is current in amps, V is root mean square supply voltage, $C_p$ is the specific heat capacity in J/kgK with $T_{tnk}$ being the hot water dispatch temperature and $T_{initial}$ being the initial temperature of the tank prior to the instant $t_{on}$ at which the immersion element is turned on. $t_i$ is the instantaneous temperature of the

immersion element. $F_t$ is the thermocline factor which would be brought in from a lookup table. The thermocline factor is a number (always less than one) which takes account of the reduction of temperature due to the mixing process that occurs when the water convects away from the heating element towards the top of the tank. The thermocline factor would be a function of: the tank geometry (height and diameter) and the position of the immersion element (s). For further refinement, the thermocline factor could also be informed by any available temperature measurements. The thermocline Factor $F_t$ can be determined by CFD and tank tests, specific to immersion element position.

Algorithmically there are several potential implementations depending on whether and to what extent temperature feedback is available to the system:

1. No temperature feedback

In this scenario, terms $T_{tnk}$ and $T_{initial}$ are unavailable. There may further not be an ambient temperature measurement available as an approximation for $T_{initial}$, with which changes in warm up time could otherwise be estimated. There would therefore have to be an assumed temperature delta in the denominator of Equation 2. This temperature delta term could be fixed or it could be a variable that changes according to any changes in the tank warm up time which may imply changing ambient conditions; of course changes in warm up time can also be attributed to changes in the levels of residual heat which may not be practical to control for. There may therefore have to be an error margin applied to Equation 2 either by addition of a constant or a reduced thermocline factor.

2. Temperature measurement local only to immersion element(s)

In this scenario, the temperature at the immersion element is known. It may be that the volume of hot water can be directly inferred via some temperature measurement taken close to the immersion element once the contents of the tank have settled. It may however be more accurate to also consider the elapsed time period during which the immersion element was turned on (as presented in the numerator of Equation 2.

3. Array of temperature sensors revealing position of thermocline

An array of temperature sensors tethered to a float on the end of the immersion element would offer a direct way of measuring the useable volume of hot water in the tank. Rather than having a fixed wait time, the array of sensors could measure when the tank has fully settled after heating addressing the point raised by the third point at the beginning of this section. Figure 15 illustrates this. It is assumed that there is some temperature threshold (for example 50 °C) beneath which the water is too cold to be of use for a given application. The lower temperature threshold is an interesting parameter to be explored since, although for certain applications lower temperatures may be useful (i.e. taking a shower), there may be risks associated with legionnaires bacteria. This is potentially mitigated by having the pipework initially purged by water at a higher temperature.

Figure 17 illustrates an array of temperature sensors 1700, in this example with a float 1702. An array of sensors would determine the position of $h_t$. If there are a large number of sensors, the position of $h_t$ could be read directly leading to the following volume measurement:

$$V_u = A(h-h_t) \qquad \text{(Eqn. 3: hot water volume)}$$

where A is the section area associated with the tank.

If there are many sensors, $h_t$ can be read off directly. If there are relatively few sensors, it may be worth using a function based on the gradient of the thermocline to predict $h_t$. It is more likely that there would be a smaller number of sensors in which case the position of at which the threshold temperature occurs would have to be predicted either by: an empirical function, physical/semi-physical model or look up table available to the control algorithm.

**1.3 User Interface**

The interface between the algorithm and the user is of key importance as the performance of the system will depend on the extent to which the user is prepared to engage with the process of programming their requirements.

**1.31 User Dispatch Choice**

User dispatch choice means that the user will simply select the time (or duration of time) at which they wish to draw hot water. This is illustrated by the sequence of selection screens shown in Figure 18. Starting at the top level of the user interface 1800, selection of the 'Schedule Hot Water Demand' option 1802 displays the Weekly Schedule Menu 1804. Selection of a week day (here Thursday 1806) displays that day's Dispatch Time Menu 1808. The illustrated time cells allow half hourly resolution of timing (although this could be more granular i.e. 15 minutes). A green cell 1810 indicates the user's preferred dispatch time. The controller would aim to time the immersion element so that the water is available at this time and provide some form of audio/visual feedback to indicate that the tank has attained the correct temperature.

The configuration menu 1812 top level of the user interface 1800 could be used for inputting parameters such as time, tank type/geometry (if necessary).

### 1.32 Selection of Hot Water Volume

Should any of the measures discussed in section 1.27 be implemented, the interface would need to allow the user to select the activity associated with their demand. The user interface could therefore continue from the day's Dispatch Time Menu 1808 into an Activity Type Menu 1812 and if necessary into a further Activity Specification Menu 1814, as illustrated in Figure 18.

The learn algorithm, detailed in section 1.22, could learn to correlate the warm up time associated with each activity for a given day and in addition predict what the change in warm up time may be for a change in activity specification or type.

### 1.33 Tariff Input

The user interface could also allow for details of the tariff structure under which the system operates to be entered. Figure 19 illustrates selection of tariff rates and specification of tariff timing. Starting at the top level of the user interface 1800, selection of the 'Configure Menu' option 1812 displays the Configuration Menu 1904. Selection of the 'Tariff Config' option 1902 opens the Tariff Configuration Menu 1904. Selection of the 'Tariff Rates' option 1906 opens the Rate Configuration Menu 1908. Selection of the 'Apply Times' option 1910 opens the Tariff Timing Menu 1912.

The interface could come with existing schedule templates which automatically adjust to suit the tariff structure. There could be scope to modify these templates should the user find there is insufficient hot water during certain periods. Figure 20 illustrates an example of tariff- dependent scheduling. Starting at the top level of the user interface 1800, selection of the 'Schedule Hot Water Demand' option 1802 displays a Schedule Menu 2000 with an option for manual scheduling 2008 (as illustrated in Figure 18), an option for tariff-configured scheduling 2002, and an option for configuring the template 2004. In the Template Configuration Menu 2006 scheduling preferences can be specified further.

### 1.34 Tariff Modelling

Once a pattern of usage has been established, the controller could estimate the cost associated with a new tariff simply by computing the energy consumption associated with each warm up time and applying the corresponding tariff.

### 1.35 User Efficiency Feedback/Energy Monitoring

The controller would be further able to monitor the energy consumption and present the data over an arbitrary period so that the user can identify trends which may be useful in influencing behaviour. The interface could highlight the costs associated with each time that the user overrides the schedule to deliver additional hot water (particularly during peak tariff times).

### 1.36 Ethernet Enabled User Interface

The friendliness of any user interface is often constrained by the size and functionality (e.g. touch/non-touch) of the screen. Figure 21 illustrates how a wireless network adaptor 2100 could enable the controller 100 to be programmed via an Ethernet connection 2102. This would allow the user to program the controller 100 via a laptop 2104 (or mobile phone, tablet, or other computing device) using the appropriate software. This would also have the added advantage that web updates could be made available to signal any changes in tariff structure and how these may be exploited to reduce cost.

### 1.37 GSM Enabled User Interface

Figure 22 illustrates an interface that also includes a GSM card 2200 (including antennas 2202 and a suitable SIM card 2204) so that programming via telecommunications is possible so that the user could, for example, schedule an impromptu bath after leaving work early due to a bad day. The programming interface 2206 would exist on a server which could be accessed from a computer 2104 via internet or from a mobile phone 2208 via GSM based telecommunications. This sort of thing is already used extensively for remote monitoring of infrastructure (i.e. waste pipe flow rates, gas valve positions etc).

A web service could periodically email the user with a summary of their usage and system costs with information on how much they would have paid using different tariffs.

An additional benefit would be the potential for network operators (for example in the UK National Grid 2210) to have more control over dispatch of power to improve the stability of the network and more fully utilise intermittent energy sources.

## 2. Retrofit Technologies to the Tank

Whilst there are potential gains from retrofitting a more intelligent controller to an existing hot water system, fitting temperature sensors to the tank or a more sophisticated heating element could lead to additional energy savings. This section details a range of modifications that would be of benefit.

### 2.1 Temperature Feedback

Temperature feedback would allow the controller to infer the amount of energy that is present in the tank and, as importantly, its associated temperature. This would improve any algorithm's ability to estimate warm up time and so the optimal timing of power dispatch would be better resolved.

### 2.11 Retrofit of External Temperature Sensors

Modern UK hot water cylinders typically come pre-clad in insulation foam. It is relatively straightforward to pierce a hole through this material and push a sprung temperature probe on to the tank wall. One potentially straightforward retrofit would involve a vertical array of temperature sensors which are fitted to the tank so as to resolve the position of the thermocline at all times to determine the useable volume of hot water.

Figure 23 illustrates an array of temperature sensors 2300 retrofitted to a water cylinder 2302 pre-clad in insulation foam 2304. The arrangement would comprise of a strip of metal 2306 onto which the array of sensors 2300 are secured. Each sensor would be made up of a guide tube 2308 in which a sprung probe 2310 would be allowed to travel axially against a preloaded spring 2312. The sprung probe would have an integrated temperature sensor of some sort (e.g. thermocouple, thermistor or any of a variety of different MEMS type devices). The sprung probe would ensure that there was good contact between the probe tip and the tank surface. Elastic retaining bands 2314 keep the assembly in position in much the same way that existing bimetallic retrofit sensors are held in position. Figure 24 illustrates the array of temperature sensors 2300 connected to the immersion controller 100 and Figure 25 illustrates elastic retaining bands 2314 attaching a single retrofit bimetallic senor unit 2500 to a tank 2302.

One challenge associated with the system above would be the ease with which it could be wired to the controller to communicate the various temperatures. Ideally, communication between the sensor array and the controller could be achieved through the existing mains cable going between the immersion element and the controller. Figure 26 illustrates the use of the existing cable link 2502 between the controller 100 and the tank for both mains and communication. At the tank side a unit 2500 for sensor signal conditioning and/or communication may be implemented. The existing cable link 2502 can thus serve as a communications bus between the temperature array 2300 and controller MCU 100.

Figure 27 illustrates in more detail the layout of a system exploiting the existing mains link to enable communications between the immersion controller and tank sensors. This scheme allows communication between the immersion controller and sensor array using the existing mains connection. Microcontrollers 2700 on both sides of the main link would control a double pole relay which sets the connection of the mains link either between the incoming mains supply to the controller and immersion element, or between the microcontrollers themselves via some form of isolation to allow safe communication between them. The two controllers would need to synchronise their own time references. On the tank side, there would need to be sufficient electrical energy storage to cover the period of time during which the two microcontrollers are communicating, ideally the communication time would be sufficiently brief so that a capacitor could be used as the energy storage medium. When communicating, the microcontroller on the tank side would pass on temperature data to the microcontroller on the controller side. Communication could occur prior to the immersion dispatch time period or between immersion switching events associated with steady state operation. Both microcontrollers could infer when it is appropriate to communicate depending on whether any current is being drawn through the mains link by the immersion element.

Figure 28 illustrates temperature measurements performed on a tank at four different positions on the tank: at the top of the tank 2806; at two-thirds from the bottom of the tank 2804; at one third from the bottom of the tank 2802; and at 15 cm above the immersion element 2800. Temperature measurements were performed with k-type thermocouples on a combination cylinder tank.

### 2.12 Algorithmic Interpretation of External Wall Temperature Measurement

External wall temperature measurement would be useful in evaluating the volume of usable hot water at any instance so that a user can make an informed decision regarding whether they can embark on a particular activity without additional energy being required (which may be expensive during on-peak times). An additional use for this information would be to allow a historic presentation of hot water use to inform user behaviour, much in the same way that household power meters have been used recently.

An algorithm is required to transform a series of vertical wall temperature measurements into an estimate of tank energy content. Ideally, there would be a high frequency of wall measurement to resolve the thermocline accurately. However, from the point of view of cost, it is potentially preferable to interpolate between fewer temperature readings. Two options are proposed here, the Assumed Plug Flow algorithm (APF) and the Profile Integrated Energy (PIE) algorithm.

***Assumed Plug Flow (APF) Algorithm:***

This approach assumes that the contents of the tank are largely unaffected by any demand (in other words the integrity and shape of the thermocline remains whilst the user demands hot water). The algorithm comprises of some or all of the following steps:

1. Determine whether the tank's contents are at steady state

This step can be achieved by setting a threshold temperature rate of change. Such a steady state criterion for tank hot water volume estimate can be defined for example as:

$$\sum_{n=1}^{n} \frac{dT_n}{dt} < \Delta_{threshold}$$

where $T_n$ is the reading from a vertical array of n sensors 2300 positioned on the tank wall as shown in Figure 23. $\Delta_{threshold}$ is a number chosen to reflect when the tank contents are in an approximately settled state. In reality, steady state implies that all thermal energy relative to ambient has left the tank and that the contents exist at a homogenous temperature, therefore $\Delta_{threshold}$ will have to allow for the change in temperature that results as the tank contents cool towards ambient. This step may or may not be necessary depending on the extent to which the tank's contents are disturbed during heating or user demand and or the influence of thermal convection from the immersion element on the tank wall temperature.

2. Curve fit to the temperature measurements

The algorithm takes the array of temperature measurements along with their associated vertical coordinates and fits a function through the temperature values. Figure 37 shows an example of the evolution of tank temperature profile against height at two different times or states. In the illustrated example a third order polynomial function is fit to the measurements. It may be preferable to use an analytical function with unknown coefficients since this may enable a curve that more accurately describes the shape of the temperature profile with fewer temperature measurements. In the case of a 3$^{rd}$ order polynomial, the function relating tank wall temperature to vertical wall position could take the form:

$$X(T) = AT^3 + BT^2 + CT + D$$

where X is a vertical coordinate along the tank wall, T is the temperature at X and A,B,C and D are unknown coefficients. The fitting of the function would be implemented such that some "quality of fit" parameter is maximised (e.g. the proximity of the coefficient of determination $R^2$ to 1).

3. Solve fitted function for some threshold temperature

A threshold that establishes the point above which water is at a useful temperature **[(*T*]*threshold*)** is computed by the function developed in step 2 to return the height beyond which water in the tank is at a useful temperature (for example 50°C).

4. Compute usable hot water volume

The volume of usable hot water in the tank can then be computed by:

$$V_u = Th_{tp}.\left(\frac{X_T - H}{H}\right)V_T$$

where H is the tank height and $\boldsymbol{V_T}$ is the total volumetric capacity. $\boldsymbol{V_u}$ can be presented to the user in terms of litres or more conveniently as multiples of a particular activity (for example 2 showers, 1 set of dishes, a bath etc). $\boldsymbol{Th_{tp}}$ is the "Thermocline Trajectory Penalty" which is a number less than one that describes the deviation from perfect plug flow due to any mixing associated with a particular activity.

$\boldsymbol{Th_{tp}}$ would be able to differentiate between an activity where the thermocline may be disrupted due to high flow rates (e.g. a power shower), compared with low flow rate activities (such as drawing hot water for the dishes). The algorithm could learn the $\boldsymbol{Th_{tp}}$ for each activity that had been programmed into the controller by monitoring the evolution of temperature profile when a certain activity takes place and computing the true resulting usable volume against the apparent usable volume prior to the commencement of the activity. It may or may not be necessary to include $\boldsymbol{Th_{tp}}$ depending on the level of accuracy required.

***Profile Integrated Energy (PIE) algorithm***

This approach takes the temperature of the water into account when computing usable hot water volume figures. Since hot water dispatched from the tank is normally mixed with cold water prior to use, the useable volume associated with any activity is a function of the desired temperature $\boldsymbol{T_d}$, the usable energy content in the tank $\boldsymbol{E_u}$ (defined as all thermal energy that exists above the threshold temperature) and the mains water temperature $\boldsymbol{T_W}$.

The algorithm works by implementing up to step 3 for the APF algorithm before computing the usable energy in the tank $\boldsymbol{E_u}$ as:

$$E_U = Th_{tp}.A.\int_{X_T}^{H} \rho\big(T(X)\big).C_p\big(T(X)\big).T(X)dX$$

where the threshold height in the tank is:

$$X_T = X(T_{threshold})$$

and $\rho(\boldsymbol{T}(\boldsymbol{X}))$ is the water density as a function of temperature such as that illustrated by Figure 38. It may be sufficiently accurate to assume a fixed density. $\boldsymbol{C_p}(\boldsymbol{T}(\boldsymbol{X}))$ is the temperature dependent specific heat capacity of water (again it may be adequate to ignore temperature dependence). *A* is the tank cross sectional area. $\boldsymbol{Th_{tp}}$ is the "Thermocline Trajectory Penalty" which is a number less than one that describes the deviation from perfect plug flow due to any mixing associated with a particular activity.

The available volume of hot water (calculated on the basis of usable tank energy and temperature requirements) then becomes:

$$V_u = \frac{E_u}{C_p(T_d).\rho.(T_d).(T_d - T_w)}$$

$\boldsymbol{T_w}$ could be inferred via the tank inlet temperature although care must be taken if a combination cylinder is being monitored since the header tank is preheated by the lower heated section. $\boldsymbol{T_d}$ could be a parameter assigned to each activity as a factory preset or a user input parameter. The temperature dependence of heat capacity and density may or may not have to be taken into account depending on the level of accuracy required.

Both the APF and PIE algorithms have been tested on a tank instrumented with 6 T-type thermocouples. The algorithm predicts a measured volume of 8 litres from a hot water tap to within around 6% without including $\boldsymbol{Th_{tp}}$. The algorithm is expected to perform similarly over a range of flow rates on a variety of hot water cylinders.

**2.13 Single Temperature Sensor Integrated into Immersion Element**

The previous section discussed the potential use of an array of temperature sensors to determine the energy content of a hot water tank, it may however be more economical to use a single temperature sensor located within the immersion element itself. This could be easily implemented by replacing the existing bimetallic type that is used in most immersion elements. Figure 29 shows a typical immersion element 2900 with thermostat probe 2902, in which a bimetallic thermostat 2904 is inserted.

If the bimetallic thermostat were replaced with a local temperature sensor, it could be possible to estimate the temperature profile within the rest of the tank, this would however be a function of a number of other parameters such as:

1. Whether the immersion element is switched on or off during measurement

When the immersion element is turned on, relatively warm water will convect from its surface towards the top of the tank. Any temperature sensor immersed in this convection current will yield a value that may not reflect the mean temperature local to its vertical position within the tank. It may therefore only be useful to record temperature prior to turning the immersion element on when the contents of the tank are relatively settled.

2. The time elapsed after the immersion element has been turned off

Once the immersion element has been shut down, convection currents will continue to circulate until the momentum in the fluid has dissipated and the temperature of the element reaches the water immediately surrounding it. Any temperature that is recorded for the purposes of reflecting the energy content in the tank when fully stratified, will need to have been taken once the contents of the tank has settled down.

3. The dimensions of the tank and stratification number

**[0204]** Extrapolating from a temperature measurement taken close to the immersion element to the temperature profile of the tank will require knowledge of the tank's dimensions and stratification properties.

4. The state of the inlet and outlet connections to the tank

When water is drawn from the outlet, an equivalent flow rate of cold water flows into the bottom of the tank, this process could lead to eddies and vortices that would disrupt the otherwise radially homogeneous temperature profile that would exist for any vertical position when the water is fully stratified and settled. It would therefore have to be assumed that the contents of the tank were at rest (i.e. no water was being drawn) before any measurement (for the purpose of inferring tank energy content) could be deemed valid. This assumption could be informed by a time series history of the temperature measurement along with the immersion current. Any changes in temperature that exceed the rate which would be expected from heat transfer mechanisms to the ambient environment from the tank alone, occurring in the absence of any immersion current and after a sufficiently long period of time after the immersion element has been switched off, could be attributed to the user drawing water from the tank. If this situation was detected, the controller could wait until the temperature has settled once more before estimating the energy content of the tank, or alternatively, use a temperature preceding the moment at which the user started drawing water as the basis of an estimate of the tank's energy content.

Temperature feedback is potentially expensive from a retrofit point of view if it requires additional wiring which may be problematic depending on the proximity of the controller to the tank. One way to get around this would be to add a small resistance to the existing thermostat whose value has a higher thermal coefficient than the heating wire. This would mean that there would be a measureable and deterministic change in current going through the immersion element depending on the temperature of the sensor. In some territories, such as the UK, the design of immersion heaters mandates that a local thermal cut out is integrated within the element to prevent scalding; any retrofit of the bimetallic thermostat would have to incorporate this feature. Figure 30 illustrates a scheme which could be used as a direct replacement of the standard thermostat shown in Figure 29. Here a replacement thermostat 3000 fits within a standard immersion element 3002. The thermostat provides a thermal path 3004 to the bimetallic safety cut-out 3010, same as in the standard thermostat. Unlike the standard thermostat a high current resistor 3006 with a relatively large and deterministic temperature coefficient is in the immersion element. The current to the heating element passes through this resistor 3006. By monitoring 3008 the current that the immersion element is drawing the controller can infer the temperature based on the change in current. This arrangement provides temperature feedback to the controller via a change in load impedance as a consequence of the temperature coefficient of the resistor.

There are a number of potential difficulties relating to the temperature feedback described above. For example, any resistance that has a measureable influence on the current dissipates power, thus influencing its local temperature through self heating (this challenge is already dealt with in standard thermistors). Further, to correlate current effectively with temperature requires a sufficient temperature coefficient of resistance; this could however result in an unacceptably large variation in heat output from the immersion element. If temperature feedback based on change in load impedance as a consequence of temperature coefficient of resistor is impractical for any or all of the above reasons, it may be more straightforward to use a conventional sensor integrated into a thermostat as shown in Figure 31. Here the replacement thermostat 3100 has an integrated temperature sensor 3102, for example a thermocouple, a thermistor, a resistance temperature detector or another suitable sensor. The output from the sensor can be fed directly back to the controller.

### 2.14 Floating Array of Temperature Sensors

The previous section examined the ways in which temperature measured at the thermostat location could be implemented along with the challenges around inferring what the useful volume of hot water is in the tank from a single temperature measurement. It may be unfeasible to reliably determine the useful energy content from this approach for a wide range of tanks. It therefore may be more feasible to do this as already shown in Figure 17, using a floating vertical array of sensors 1700 tethered at one end to the immersion element 1704 and a float 1702 on the other end.

The main advantage that this approach would have over the retrofit of external temperature sensors as described above is that there would be more direct measurement of the water temperature leading to a more responsive and accurate determination of the position of the thermocline. The disadvantage however would be that the immersion element would have to be removed and replaced. For a tank with two immersion elements (Figure 14), it may be preferable to suspend the array of sensors from the top element using a weight as this would mean that the whole tank would not have to be drained of its contents (although this is only a marginal advantage).

## 2.2 Floating Immersion Element

### 2.21 Tethered Implementation

Instead of the array of heating elements as illustrated in Figure 15, a moveable heating element as illustrated in Figure 32 can be implemented. The moveable element adjusts its position so that the thermal energy is delivered at the appropriate temperature without being lost to the cold portion of the tank. The position of the moveable element 3200 can be dynamically controlled by the controller so that the thermal energy is injected at the optimum level within the tank, thus minimising mixing due to stratification. Figure 33 shows an implementation where the fixed heating element (such as an electric immersion) is replaced by a floating element 3300 whose height is dynamically controlled so that thermal energy is delivered at maximum temperature to optimise the exergetic performance of a vat 3302 containing a liquid to be heated. If applied to domestic hot water systems, this scheme would offer significant energy savings by minimising the amount of wasted energy through production of either low temperature or excessive volumes of high temperature water.

This arrangement comprises of a floating heating element 3300 attached by a tether and/or power cable 3304 to a height control assembly 3306. This arrangement allows dynamic control of the height within a tank such that thermal energy is delivered at the optimal position at all times within the tank.
A control algorithm positions the moveable heating element by either:

1. An estimate of the rate of hot water production. This is a function of various parameters including the system power rating, tank cross sectional area, and initial volume above the moveable heating element.

2. Measurement of temperature at the location of the moveable heating element.

3. Inference of temperature through measurement of current through moveable heating element for example via detection of steady state switching due to a local thermostat or temperature coefficient of resistance of wire over which heat is dissipated.

4. Any combination of the above methods to accurately determine the optimum height of the moveable element.

The position of the moveable element can be controlled by various means, for example:

1. A submersed motorised ball screw running from the top to the bottom of the tank coupled to the moveable element.

2. A thermally activated buoyancy control bladder integrated within the moveable heating element with a pressure sensor to infer position.

3. A tether to some form of winding drum whose angular position is controlled by an electric motor.

This arrangement is detailed in Figure 34.

Figures 34 and 35 illustrate one particular arrangement to implement the scheme. The control assembly 3306 to which the moveable heating element 3300 is tethered comprises an outer sheath 3400, a tether feed hole 3402, and a flange head 3404 with a flange thread. The buoyancy of the moveable heating element maintains tension in the tether. The tether incorporates the power supply to the moveable heating element along with feedback from any temperature sensors that may be installed. In the assembly is a low voltage wet motor 3508 (e.g. a step or synchronous brushless permanent magnet motor) with an angular position sensor (for example a resolver on the motor output or an encoder on the winding drum) for angular feedback, allowing the control system to infer the height of the moveable element depending on the winding drum position. A planetary gear stage 3508 may be included for integrating the motor's output annulus onto the tether spindle 3508. At the end of the tether spindle 3508 is the tether reel 3510 or winding drum. At the flange head 3404 space 3502 is provided for electronics and control circuitry.

### 2.22 Floating Element Control Strategy

The control strategy would be in a sense similar to that detailed in section 1.25 for a system incorporating multiple elements. Assuming a cold start, the floating element would be manoeuvred to the top of the tank at which point power would begin to be dispatched. As the top portion of the tank attains operating temperature, the element would gradually move downwards at the same rate as the natural development speed of the thermocline until the desired volume of hot water had been developed. This process would almost eliminate the mixing that would otherwise occur due to stratification.

The control strategy ensures that the element transfers heat to the thermocline without the temperature rising past the element's thermostat set point. Generally a mechanical thermostat is included at the heat source to ensure safe operation. Further, the reliability of the heating element is to some extent a function of the size of any thermally induced stresses due to cycling on and off. If the element is dispatching heat in water at a higher temperature, the surface temperature of the element has to rise accordingly which may impact on long term reliability.

### 2.3 Retrofit Sanitation Bulb

Hot water tanks are often oversized for a given user requirement. The result of this is that either:

1. A larger volume of hot water than necessary is developed, leading to excessive standing losses

2. The user sets an immersion timer to provide enough heat to develop hot water in the top portion of the tank leading to a large volume of cool water beneath the thermocline which, if left stagnant for long periods of time, could promote the growth of Legionella and other bacteria.

A retrofit immersion heater with an integrated radiation source (for example a UV bulb) could be implemented for either a standard immersion element or floating arrangement described in section 2.2. The radiation source would inhibit the growth of bacteria and allow the correct amount of heat to be delivered to the user at a temperature that minimises standing losses but which would otherwise be unsanitary without the radiation source. This technology would be particularly suited to hot water storage systems that utilise low grade heat from renewable energy sources such as heat pumps and solar collectors.

### 2.4 Plume Entrainment Membrane

Whilst the floating element assembly represents the ideal in terms of dispatch of thermal power, the disadvantage of parts moving around in a wet environment may make this solution costly. An alternative is the plume entrainment membrane as illustrated in Figure 36. A flexible sheet 3604 with a floating rim 3602 is tethered to a conventional heating element 106 such that it channels 3600 low density warm water directly to the top of the tank to minimise mixing. A directional cowl 3608 could assist upward channelling of the warm water. The membrane would be arranged as a folded concertina such that the whole assembly could be inserted through a conventional tank flange. As the water level in the tank rises on filling, the membrane is unravelled into position by the buoyancy of the floating rim. The porosity of the membrane would be tuned so that on the one hand mixing due to vortices shed by the heating element is minimised but that the thermocline is allowed to develop unimpeded. If the porosity of the membrane were too low, convection currents would begin escaping from the sides of the entrainment leading to degraded performance.

**3. Further control strategy variants**

As already previously mentioned, a variety of control algorithms for domestic hot water (and potentially space heating) that are designed to detect or minimise both inorganic fouling, such as the build up of calcium carbonate scale or any by-products associated with corrosion, and biological fouling, for example the growth of biofilms and pathogenic bacteria that can go on to inhabit them. Ultimately the goal is to minimise the deleterious effects of both problems whilst at the same time, delivering the user with their thermal requirements at minimal expense of energy.

**3.1 Bacterial risk parameter**

The growth rate of bacteria is highly temperature dependent. One way of managing the presence of bacteria is to maintain temperatures above 50°C throughout a hot water system. In practice, due to thermal stratification, hot water vessels can have regions that fail to attain sterile temperatures for some of the time. This leads to a risk of exposure to bacteria which is a function of, among other variables, temperature and time. To track potential bacterial populations a model of bacteria population, accounting for temperature and time, is included within a heating system control algorithm. This offers the following benefits:

- To maintain temperatures within the tank at a level and duration such that conditions are sufficiently sterile but that standing heat losses or energy costs are minimised.
- To alert the user/or authority in charge of maintaining a hot water system when/if a threat of unsanitary hot water from a tank presents itself.

In order to inform a user of potentially unsanitary hot water, a variety of approaches to monitoring or inferring tank temperatures is presented along with a means from which to estimate worst case bacterial populations.

**Discretised Population Model Based on Vertical Temperature Measurements**

A bio-film, which hosts potentially pathogenic bacteria, coats the inside of a tank within a hot water system. An array of vertical temperature sensors measure water temperatures within the tank directly. Alternatively, an array of vertical temperature sensors infer water temperatures via external tank wall measurement at regular vertical intervals. Two particular arrangements are:

1. Array of sensors tethered to an immersion element: as discussed above with respect to retrofitting, an array of sensors on a tether float or sink (or both) from an element thermostat probe or other fitting such as tank drain valve. These record internal tank temperatures directly.
2. Array of external tank wall sensors: as discussed above with respect to retrofitting, an array of sensors is attached to the external tank wall, with the sensor in direct contact with the tank wall. This allows inference of the approximate temperature within the tank.

Importantly either arrangement includes vertical sensors that are extended beneath the bottom immersion heating element (or other heat source) since it is in the bottom portion of the tank where temperatures most conducive to bacterial growth potentially arise. It may be that only sensors at or beneath the bottom immersion element (or heat exchange coil) are required.

For each position within the hot water tank, a crude population model according to Equation 4 is used to track bacterial populations within various portions of the hot water tank:

$$\frac{dP}{dt} = \begin{cases} k(T_n).P & for\ P < P_{thresh}\ and\ 20°C < T < 49°C\ (case\ 1) \\ -\delta(T_n).P & for\ T > 49°C\ (case\ 2) \\ 0 & for\ P > P_{thresh}\ and\ 20°C < T < 40°C\ or\ T < 20°C\ (case\ 3) \end{cases}$$

(Eqn. 4: bacterial population growth model applied to positional temperature measurements)

where bacterial population P in colony forming units (CFU/ml) is a function of the temperature dependent growth rate k and death rate -δ at positional temperature $T_n$. The bacterial death rate function $-\delta(T_n)$ may be looked up in a suitable table or graph. Figure 39 for example, which shows the decimal reduction in time (time required for 90% of Legionella population to be exterminated) against temperature, may be used.

For the growth rate function $k(T_n)$ a simple approach is to assume a conservative doubling time value. For example for Legionella a doubling time of 9.3 hours is assumed when the temperature falls between 20°C and 49°C. A more sophisticated function may be used, for example of temperature relating bacterial growth, lag times, and maximum populations to temperature and other parameters relating to water chemisty and background nutrients.

By integrating (dP/dt) from Equation 4 with respect to time for each temperature node that exists within the tank, spot estimates of bacterial growth can be made by a control algorithm which can then either dispatch heat in such a manner as to ensure sanitary conditions are maintained whilst undue standing losses are minimised. In addition, a user interface could warn of an unhygienic supply of hot water.

**Worst Case Bacterial Prediction based on Bottom Tank Section Temperatures or Single Immersion Element Interface Temperature**

Whilst it may be useful to have a multiple array of temperature measurements within a hot water tank for other purposes (such as computing available hot water volumes, as described above), for determining a risk of exposure to Legionella or other pathogens, temperature measurements above the bottom injection point of heat are potentially superfluous.

Immersion elements dispatch heat with a high rate of flux due to their relatively small surface area and large electrical power consumption. This results in high Rayleigh numbers and consequently convective heat transfer due to water density's dependence on temperature. The convection between the bottom element and top of the tank results in a relatively well mixed portion of hot water above the heating element. On the other hand, the portion of water beneath the heating element is heated at a much reduced rate (primarily through conduction across the thermocline and tank walls); furthermore, the temperature of the bottom of the tank is suppressed due to the inflow of inlet cold water which is typically located near the bottom of the tank.

Figure 40 shows the temperature response of a standard vented 115 litre combination cylinder heated by a 3 kW element. The tank temperature is measured by four thermocouples with regular vertical spacing on the outside of the cylinder from top (T1) to bottom (T4). The graph shows the temperature response of a tank during warm up from 18°C. T4 is located beneath the immersion element. Temperatures T1 through to T3 are above the immersion element. As is evident from Figure 40, temperatures above the immersion element are homogenous due to the mixing above the heating element whilst temperatures rise more gradually beneath the element as would be expected given the differing modes of heat transfer.

Figure 41 shows a simplified model of a hot water tank immediately after being brought to temperature. For the purposes of bacterial model calculation the hot upper portion 4100 is ignored, as the convective heat transfer implies that the immersion thermostat has tripped at 60°C, and the contents in the upper portion 4100 are sufficiently sterilised. At the immersion heating element 4104 (or whatever heat source is used) an initial thermocline 4106 is found from the full charge. In a cold bottom portion 4102 the temperature conditions can be measured or inferred, analytically or numerically, over time, over a single temperature measurement (potentially integrated within an existing mechanical thermostat design), assuming conductive heat transfer, mixing effects, wall conditions, etc.

To determine worst case bacterial populations, there therefore needs to be a way of measuring or inferring the vertical temperature distribution within the bottom portion of the tank only. Five options are discussed:

1. Inference solely on the basis of a numerical stratification model, measured immersion current and assumed duty cycle
A simulation of the hot water tank is run on a target processor within the hot water controller responsible for the dispatch of heat. The simulation yields vertical tank temperatures over various portions of the tank with emphasis (for instance with higher resolution) on temperatures within the portion of the tank beneath the lowest thermal entry point. For simulation of tank stratification in real time, a simulation tool such as TRNSYS may be used. The TRNSYS Type 60 multi node variable inlet model for example is a one dimensional discretised model and is therefore computationally efficient compared with 2 or 3 dimensional computational fluid dynamic models; it is also flexible compared with analytical approaches.

2. Inference via single interface temperature measurement aided by analytical or numerical model
The conventional thermostat in the lowest immersion heating element is replaced with a thermostat that has an integrated temperature sensor. From the temperature at the heating element the temperature at the bottom of the tank, below the immersion element, is inferred. This approach is straightforward to retrofit on to existing systems. Preferably the conventional (mechanical) thermostat is retained as a fail safe to prevent waters exceeding an upper limit whilst allowing the controller to dispatch heat to a lower temperature using the temperature sensor as a reference. The temperature measurement could be taken by a sensor such as a thermistor, thermocouple or RTC integrated within a traditional thermostat probe. Alternatively, as discussed above, precise measurements of immersion current and heating element resistive temperature coefficient can provide an indication of the temperature in the tank at the immersion element. The temperature measurement could be inferred via measuring small changes in power consumption when a current is applied to the immersion element (due to temperature dependence of heating element resistance).
To give a more accurate estimate of the temperature below the immersion element, the temperature could be used with an analytical model, where the temperature at the immersion element provides the boundary condition between the "hot" and "cold" portion of the tank in Figure 41. For example, a one dimensional application of Fourier time varying conduction for a finite slab is suitable, or a numerical model such as the (TRNSYS) Type 60 multi node variable inlet model already discussed. Either model may require mixing corrections to be applied when water is drawn from the tank.

3. Direct measurement within tank or by sinking temperature sensors from immersion element thermostat
This approach benefits from improved accuracy since the uncertainties associated with mixing from inlet water are remove by direct measurement.

4. Direct measurement from immersion element with full vertical sensor array for resolution of both available volume of hot water and detection of problematic populations of bacteria.

5. Any of the above indirect methods augmented by flow measurement instead of assumed duty cycle. Flow measurement could be inferred via measurement of changes in the tank thermocline detected by vertical tank temperature measurements.

### 3.2 Scaling parameter

Many water supplies suffer from water hardness, that is to say there are large concentrations of ions such as calcium $Ca^{2+}$ which, in conjunction with carbonic acid ($2HCO_3^-$), formed as carbon dioxide dissolves in water, precipitate out calcium carbonate (or limescale) according to the following equation:

$$CaCO_3 + CO_2 + H_2O \leftrightarrows Ca^{2+} + 2HCO3^-$$

Scale, which can form from other metallic ions such as magnesium, is problematic due to the following reasons:

1. Reduction in heat transfer from immersion elements and heat exchangers: Figure 42 shows the reduction of heat transfer on a copper plate heat exchanger against scale thickness for a variety of common precipitates. Reduced heat transfer can lead to failure of an immersion heating element due to increased temperatures. It can also unfavourably increase power consumption; as the lime scale layer thickness increases, the interface temperature between a heating element and the bulk fluid in which it is immersed is reduced. Figure 43 shows exemplary relative electricity consumption as a function of scale thickness for a pipe heat exchanger in an electrical boiler.

2. Constriction of flow diameter leading to reduced flow and/or increased pressure losses throughout the hot water distribution system. This problem results in higher pumping losses for a given quantity of water delivered to the end user along with reduced output from appliances such as showers.

Significant scale reduction is achieved by an intelligent immersion controller which dispatched heat just in time rather than maintaining operating temperature for extended periods during off peak hours. This feature is inherent in the controller described above. Additionally, the operation of the controller may be further adapted to minimise scale formation and optimise performance. An approach to maximise thermal and sanitary performance whilst minimising scale is next described. In addition, an approach to monitoring scale formation on immersion elements by the controller is described. A similar approach could be taken to include the cost associated with other temperature dependent fouling processes such as corrosion.

3.2.1 Mechanisms that lead to the formation of scale

Calcium ions (and others responsible for scale formation) exhibit the property that they become less soluble at higher temperatures in waters with a pH between 6 and 9. Water authorities in the UK stipulate that pH values should never stray outside of the range 6.5 to 9.5. Figure 44 shows solubility of calcium ions in water at different temperatures and pH values. In areas that are prone to hard water (high concentration of scale forming species), raising the temperature of the water results in super-saturation and consequent precipitation of scales on surfaces within the hot water system .

Surfaces responsible for heat transfer in hot water systems can attract scale ions due to the concentration gradient that is established between their surface and the bulk fluid in which they are immersed. This is due to the temperature gradient between the bulk fluid and heated surface. Figure 45 shows the mechanism that drives scale products on to heat transfer surfaces.

Scale formation is either rate limited at the surface (surface limitations) or limited between the bulk water and the surface of the heat transfer device (mass transfer limitations). A variety of models can be used to estimate the rate of scale build up, the most effective of which is the combined model that accounts for both surface and mass transfer limitations.

Due to the relatively low computational expense of both the TRNSYS multi mode variable inlet model and the calcium carbonate combined scale rate model discussed in this section, one approach would be for a hot water system controller to run multiple simulations of thermal dispatch control strategies against historical draw off profiles (for example taken from a representative duty cycle or inferred directly from vertical temperature measurements and or hot water flow measurements) subject to the constraint that water must be dispatched at a useable and sanitary temperature. Additional inputs to this model would include water hardness and worst case legionella growth rates. The strategy that results in minimal scale formation and standing heat loss would be selected for implementation. If other temperature-related fouling processes, such as corrosion, were of significance, these could be included as additional cost functions to be minimised.

3.2.2 Scale minimisation by pulse width modulation (PWM) control of immersion element

Assuming the immersion controller has sufficiently quick response and reliability (for example IGBT or FET) then a PWM signal could be applied for the purposes of reducing scale. This would operate according to the following mechanisms:

- Scale reduction due to reduced interface temperature and resulting solubility gradient: by modulating the power to the heating element, the warm up temperature profile of the tank could be optimised so that scale deposition is minimised. By reducing the temperature difference between the heating element interface and bulk fluid, a reduced concentration gradient would be established leading to a lower transfer rate of scale species, as discussed with reference to Figure 45.
- Reduction due to magnetic interaction between scale products and heating element: it has been demonstrated that the magnetic flux from a coiled wire around a pipe can reduce scale build up on surfaces. For example this effect can be achieved at currents in the region of 7 A and frequencies around 3kHz assuming 80 turns of wire wrapped around a 22mm plastic water pipe. Assuming a similar magnetic path exists between the heating coils and scale forming surface, this may be achieved for example with off-the-shelf switching FETs and IGBTs.
- Precise control of bulk fluid temperature with minimal hysteresis: PWM control combined with temperature data allows precise control of the tank temperature with minimal overshoot and consequently less scale formation (which is related inversely and non-linearly to temperature).

3.2.3 Calculation of Scale Precipitation

The control algorithm uses any one of a variety of different techniques that are used to predict rates of water scaling. By assigning a cost to scale thickness, the algorithm then optimises the dispatch of heat to minimise the cumulative cost associated with energy cost, standing heat losses, and scale thickness. Additionally, the maximum allowable bacterial population may provide further constraints.

One particular approach to predicting scale formation rates along with their associated cost is now described for illustration. It is worth noting that a similar approach may be used for other inorganic fouling processes, such as corrosion, where the fouling leads to significant costs and or degradation in performance.

Rates of scaling on a 3kW immersion element within a hot water tank are estimated based on input parameters to the control algorithm for temperatures 60°C and 100°C, and based on a given water composition. The following assumptions are made:

- Equilibrium conditions for water exist (i.e the rates of reaction are fast enough to assume that an infinite amount of time has elapsed allowing all salts associated with scale to precipitate). Other models, accounting for non-equilibrium effects exist and could be used for improved accuracy.
- Carbonate ions are in excess and it is assumed that there is always enough dissolved carbonate to react with dissolved calcium.
- All the scale that is precipitated within the hot water system is deposited on the heat transfer surface (in this case the immersion heating element sheath). This assumption is based on the premise that precipitation favours heat transfer surfaces due to the concentration gradient as discussed above.

Water pH and carbonate concentration are usually available for a particular region. For the example here, it is assumed that the dissolved $CaCO_3$ content is 255mg/l, and the pH is 7.4.

Generally, the equilibrium scale models predicts the rate of precipitation along the lines of the following function:

$$w = F\{[Ca^{2+}] - [Ca^{2+}]s\} \quad \text{(Eqn. 5: general form of equilibrium scale rate models)}$$

where scale rate, w, depends on the concentration of calcium ions $[Ca^{2+}]$ and the saturation level s for water at a particular set of water chemistry parameters such as temperature, pH, alkalinity etc. F is a function that accounts for the non-ideal attributes of real water that means that not all of the calcium in excess of saturation precipitates.

The atomic mass of calcium is 40 AMUs, carbon, 12 AMUs, and oxygen, AMUs 16 AMUs; the dissolved $CaCO_3$ content is 255mg/l, so the calcium ion concentration is calculated with:

$$[Ca^{2+}] = \frac{\mu_{ca}}{\mu_{ca} + \mu_{CO3}} \times [CaCO_3] = \frac{40}{40 + 12 + 3 \times 16} \times 255 = \frac{102mg}{l}$$

(Eqn. 6: concentration of calcium ions from dissolved content of calcium carbonate measurement)

where $[Ca^{2+}]$ is the concentration of dissolved calcium and $\mu_n$ is the atomic mass of ion n and $[CaCO_3]$ is the measured quantity of dissolved calcium carbonate.

Once $[Ca^{2+}]$ is known, the saturation level $[Ca^{2+}]s$ of the dissolved calcium is determined. In this example, the data presented in Figure 44 is referenced. At pH = 7.4

$[Ca^{2+}]s$ is 26 mg/l at 60°C
$[Ca^{2+}]s$ is 12- mg/l at 100°C

Alternatively a look-up-table could be used to determine saturation levels. Also, a closed form analytical solution for calcium concentration against water chemistry parameters based on physical chemical relations could be used to determine saturation levels.

The simplest assumption to make is that all calcium content above the level at which saturation occurs precipitates. In a more realistic assumption the solution can exist in a supersaturated state. The degree of precipitation can for example be described with a degree of saturation (DOS) metric:

$$DOS = \frac{[Ca^{2+}]}{[Ca^{2+}]s} \quad \text{(Eqn. 7: degree of saturation metric used to determine fractions of precipitation)}$$

For example, the fractions of precipitation (or scale potentials) can be determined for each amount of dissolved calcium falling between the following bands of degrees of saturation from a look-up table such as the following:

*Table 2 Scale potential fraction as a function of degree of saturation*

| **Degree of Saturation (DOS)** | **Scale Potential Fraction $S_P$** |
|---|---|
| 1-3 | 0.2 |

(continued)

| Degree of Saturation (DOS) | Scale Potential Fraction $S_P$ |
|---|---|
| 3-8 | 0.6 |
| 8+ | 1 |

For temperatures of 60°C and 100°C the amount of scale estimated to be precipitated per litre of hot water can be determined:

*Table 3 Predicted precipitation level at 60°C*

| Scaling Rate at 60°C (DOS = 3.9) | | | |
|---|---|---|---|
| **Degree of Saturation (DOS)** | **Dissolved content in DOS bin (mg/L)** | **Scale Potential Sp** | **Precipitation in DOS band (mg/L)** |
| 1-3 | 52 | 0.2 | 10.4 |
| 3-8 | 24 | 0.6 | 14.4 |
| 8+ | 0 | 1 | 0 |
| | | **Total scale rate per litre (w)** | 24.8 |

*Table 4 Predicted precipitation level at 100°C*

| Scaling Rate at 100°C (DOS = 8.5) | | | |
|---|---|---|---|
| **Degree of Saturation (DOS)** | **Dissolved content in DOS bin (mg/L)** | **Scale Potential $S_P$** | **Precipitation in DOS band (mg/L)** |
| 1-3 | 24 | 0.2 | 4.8 |
| 3-8 | 60 | 0.6 | 36 |
| 8+ | 6 | 1 | 6 |
| | | **Total scale rate per litre (w)** | 46.8 |

Assuming a heating element with heat transfer surface A, the rate of increase in scale thickness is:

$$\frac{dS_t}{dt} = \frac{wQ}{\rho_s A} \quad (meters\ per\ second)$$

(Eqn. 8: rate of scale thickening on a heat transfer element)

where Q is the hot water flow rate, $\rho_s$ is the density of scale, w is the scale rate (e.g. in mg/litre) and ($dS_t/dt$) is the rate of increase of scale thickness. The density of the scale depends on its crystallographic manifestation; calcite, for example, has a density of 2.7g/cm$^3$.

The control algorithm can use Equation 8 to track the predicted thickness of scale on a heat transfer element using:

$$S_t = \int_o^t \frac{dS_t}{dt} dt$$

(Eqn. 9: integrating scale thickening rate to get scale thickness)

By evaluating Equation 9, for a typical 3kW immersion element and the w values found in Tables 3 and 4, we find that the depth of scale over 1 year assuming 100 litres is cycled every 24 hours at constant temperature is approximately 1.5mm at 60°C and around 2.94mm at 100°C.

Given the scale thickness, the resulting additional energy consumption can be determined, for example with data such as shown in Figure 43. Using Figure 43 for the example discussed here, for every 1000 units of energy the unscaled immersion element would use, the element with 1.5mm scale uses 3200 units of energy and the element with 2.94mm scale uses 5200 units of energy. The difference between a bulk tank temperature of 60°C and 100°C causes an increase in the order of 60% in power consumption.

The increase in power consumption can be used to calculate a cost value that represent the increase in costs due to the element operating with scale. Additional costs may also be added, such as a cost factor that accounts for the reduced lifetime of the heating element along with the expense associated with the increased frequency of maintenance.

3.2.4 Scale Monitoring Via Periodic Thermal Impulse Response Test

An immersion controller may detect the presence of scale by periodically conducting an impulse response test on the heating element and monitoring the temperature response. As an increasing thickness of scale forms, the thermal time constant associated with the impulse test increases and hence can be detected by temperature measurement. Heavy scaling is also associated with increased tank warm up times which may be detected from current measurement alone. This enables the controller to signal that the heating element is being compromised by scale before a catastrophic failure (which could lead to a hot water system becoming live if not properly earthed) or undue expense through excessive heat loss at higher heat transfer surface temperatures.

### 3.3 Heat loss cost parameter

Thermal losses associated with a particular control strategy may for example be measured directly via vertical temperature measurement or predicted numerically or analytically. The heat loss cost is factored into the cost model as it equates to an additional period of time over which the immersion element has to be switched on for.

Figure 46 shows the thermal model for each vertical node within a TRNSYS Type 60 multi node variable inlet model. The model assumes that within each node of the tank there may be a thermal source, mass inflow or outflow, heat exchanger etc. For each node, heat loss is computed on the basis of the heat transfer coefficient between the tank and its ambient environment along with the nodal and external temperatures. Heat losses/gains due to the presence of heat exchangers, cold inlet flows etc are also included. Therefore any control strategy can be assessed on the basis of thermal performance for a given draw off duty cycle and heat input sequence. The draw off duty cycle may be measured by flow and temperature measurement. Statistical draw-off duty cycle may be consulted, or a statistical draw-off duty cycle may be generated based on measurements over time (for example the control may be adapted to correlate periodic changes in duty cycles such as weekends with measurement). Figure 47 shows some examples of standard domestic hot water duty cycles (ASHRAE, SRCC, BECKER, PERLMAN or BOUCHELLE).

Once the heat loss is quantified, a cost is associated with the heat loss. The cost model used to do this allows monitoring the cost associated with a particular tariff structure and immersion or boiler firing time.

The cost $C_n$ of any particular thermal source contributing to the hot water tank (e.g. immersion element, boiler heat exchanger etc) is computed for any control strategy by integrating the price $P_n$ associated with a particular tariff occurring between transition times $a_n$ and $b_n$ whenever the thermal source is on (H = 1). This is expressed by:

$$C_n = \int_0^t \left[ P = \begin{cases} P_1, & a_1 < t < b_1 \\ P_2, & a_2 < t < b_2 \\ \cdot \\ \cdot \\ P_n & a_n < t < b_n \end{cases} \right] \times \left[ H = \begin{cases} 1, & \text{when heat source is on} \\ 0, & \text{when heat source is off} \end{cases} \right] dt$$

(Equation 10 cost over time associated with a thermal source operating within the hot water system)

### 3.4 Combined Cost, Fouling and Sanitary Control Strategy

A control strategy is implemented in an algorithm embedded within the hot water system controller. The control strategy may be adapted to optimise the dispatch time, temperature and duration such that the least total cost is incurred. The total cost is composed of the cost of energy consumption and the cost associated with scale, biofilm thickness or the by-products of corrosion, as discussed above. Further constraints are posed by the thermal and sanitary requirements, in particular the requirement to maintain the bacterial exposure risk below a threshold. Figure 48 illustrates the layout of a control algorithm. The bacterial model 4808 determines the bacterial risk parameter described in detail above. The scale model 4810 determines the scaling parameter described in detail above. The cost model 4812 determines the heat loss cost parameter described in detail above. The bacterial model 4808, scale model 4810 and cost model 4812 may use a thermal model 4806 of the heating system to generate thermal data required as an input. Alternatively, thermal data may be supplied for example from temperature sensors. Various inputs feed into the thermal model 4806, including data regarding the real world target 4802 (e.g. tank volume, insulation of the tank, and positions of inlets and outlets), demand data 4800 detailing the expected duty cycle and thermal requirements, and the controller strategy 4804 for the heating system (including duration, time of initiation, and temperature setpoint of immersion element). In the absence of a thermal model the demand data 4800 controller strategy 4804 may be fed into the bacterial model 4808, scale model 4810 and cost model 4812 alongside the thermal data obtained from for example temperature sensors. The bacterial model 4808, scale model 4810 and cost model 4812 produce results in the form of bacterial risk parameter, scaling parameter and heat loss cost parameter in dependence on the inputs (including controller strategy).

As described above, the thermal model 4806 produces a range of vertical temperature distributions on the basis of demand data 4800 (e.g. an input duty cycle) and immersion controller strategy 4808.

The immersion controller strategy 4808 specifies thermal source duration (immersion element on or boiler firing time) and a dispatch temperature. Selecting a high temperature and short duration at which that temperature is maintained enables the portion of the tank beneath the thermal injection point to be quickly brought to a sanitary temperature with minimal heat loss, however the rate of scale precipitation may be higher. A lower bulk temperature delivered just in time may minimise standing heat losses and scale but may also lead to an unacceptably high bacterial exposure risk.

A variety of strategies may be attempted to establish the influence of varying dispatch temperature, duration and time on cost, scale thickness or thickness associated with other types of fouling such as corrosion or biofilm thickness, bacterial load and outlet temperature of hot water tank.

In the approach to minimise total cost described here, a number of simulations of the heater operation are generated, each for different operating conditions, with constraints defined for example by the usage requirements.

Figure 50 shows a flow chart describing an algorithm which selects among a range of control strategies to find an optimal way of controlling hot water tank

1. Initialisation of simulation 5000

The routine begins by initialising the simulation with:

- system parameters such as tank size, insulation level thermal input ratings and positions, along with tank inlet and outlet positions and water chemistry parameters such as pH, total hardness, background bacteria counts etc;
- thermal requirements and (expected) domestic hot water duty cycle. An expected duty cycle may be assumed on the basis of a standard domestic hot water duty cycle. Alternatively an expected duty cycle may be taken directly from historic data measured from the system via flow sensors or temperature measurements that allow the trajectory of the thermocline to be resolved and the associated volumetric flow rate. In the example used here the ASHRAE standard domestic hot water duty cycle is used; and
- a thermal input control strategy including for example timings, durations and temperatures limited to the temperature limit imposed by the thermostat.

The thermal model of the tank may be initialised with any data or inferred data from sensors on the tank. An analytical model may be used to determine the duration of time to heat the tank from an assumed temperature to operating temperature.

2. Simulation run 5002

A simulation is run to assess the performance of the initial control strategy. The tank stratification model 4800 feeds temperatures to the scale model 4800 and bacterial population model 4800. The cost model 4800 tracks the price associated with firing the immersion element by integrating the price associated with the tariff/s that prevailed whilst the immersion element was on. A period of 3 days is simulated for the assumed duty cycle (each day repeating the same duty cycle). This allows all parameters to settle to steady state values.

Figure 49 shows the results for a simulation of a 115 litre hot water tank fired by a single 3 kW immersion heating element. A period of 3 days is simulated for a standard ASHRAE duty cycle. X axis is time (secs) for each plot. The following simulation outcomes are shown: bacterial populations (CFU/l) 4900; scale thickness (metres) 4902; cumulative cost (pence) 4904; and tank temperature profiles within the tank 4906. In this example, one particular firing strategy is evaluated to establish steady state peak bacterial populations and scale formation rates. Additionally a check that the top of the tank never falls below 50°C is in place to ensure that water is dispatched at an appropriate temperature at all times to the user.

3. Selection of input parameters for next simulation

Once the simulation has finished, a variety of checks are made on the results. There are two circumstances that can arise at this point:

- Failed strategy: if the bacterial population anywhere within the tank exceeds a value which is deemed a potential risk to human health ('Is bacterial load beneath pathogenic threshold?' 5004), or if the temperature of the tank at the outlet position is at a value less than what is deemed necessary for the user's thermal requirement ('Has tank outlet temperature remained above threshold value?' 5006), the strategy has failed. The routine then updates the strategy initialisation parameters ('Adapt strategy to fulfil requirements' 5008, in particular thermal and sanitary requirements) to attempt to pass on the next simulation. The necessary update can be for example increasing the dispatch temperature or duration over which a certain temperature is maintained, or introducing a boost period where the thermal source comes on again at another stage in the day to maintain tank temperatures/cull bacterial populations.

- Successful strategy: a successful strategy implies that the bacterial levels are acceptable and the tank outlet temperature was sufficient to deliver the user's thermal requirement. If a strategy is successful there still may be scope to reduce the total cost in terms of purchased energy and scale formation that is associated with firing the thermal source. To compare and evaluate the strategy's performance the cumulative cost and scale build-up is recorded 5010. Then the strategy is adapted to reduce cost 5012. Cost reduction may be achieved by reducing the control temperature, the duration over which the thermal source was on or the timing of dispatch of energy to the thermal source. If thermal cost is excessive, then the heating period may for example be moved to a low-tariff time while dispatching at a higher temperature to meet the thermal requirements. If scale build-up is excessive, then for example the immersion temperature may be reduced while adding a boost period to meet thermal requirements. The initialisation parameters are thus changed accordingly and the simulation is re-run.

4. Iteration and selection of most cost effective strategy 5014

The simulation is run multiple times until a most cost effective control strategy is selected. The strategy may be run a number of times, and the best of the resulting strategies may be selected. Alternatively, the simulation may be run until the performance improvement between runs is insignificant. Various methods may be employed to direct the strategy search to minimise the number of simulation runs that are required. Whilst implementing the strategy the actual duty cycle data may be recorded to tune the initialisation of next simulation.

The least costly strategy as identified by the series of simulations is deployed on the hot water system. Feedback available from sensors that monitor usage and energy consumption may inform the initialisation process of the next strategy search routine. The strategy search routine may for example be updated repeatedly wherever there is a deviation from the expected duty cycle or energy consumption.

### 3.5 Exemplary Implementations

A range of hardware arrangements that may be used (singly or in combination) to implement a control strategy as described above are next described.

1. Control algorithm with no feedback (Figure 51)

In this arrangement the algorithm assumes a standard duty cycle and takes user input for the purposes of informing a simulation to determine the optimum routine for scale and bacterial control. Feedback from the user may additionally flag instances where thermal requirements are not met, allowing adaptation of the algorithm to optimally meet the requirements. Alternatively, the optimisation according to bacterial, scale or other types of fouling, thermal and cost performance may have been pre calculated and translated into a control strategy pre-loaded as a factory setting. Any number of thermal sources could be controlled in this manner.

2. Energy consumption measurement of thermal source (Figure 52)

In this arrangement the algorithm monitors the current and/or supply voltage and/or energy consumption of the thermal source. In the case of a boiler fired heat exchanger, the algorithm may make use of a gas pulse meter or other device to infer real time energy consumption. This hardware arrangement enables the warm up time to be learned, and (in the case of an immersion element) may allow the temperature at the heating element to be inferred via changes in the heating element resistance due to temperature.

3. Retrofit thermostat with integrated temperature measurement (Figure 53)

In this arrangement the thermostat within the immersion element is replaced with one that has an integrated temperature sensor. This is a simple retrofit that retains the mechanical fail safe of a traditional thermostat but enables more precise control of tank temperature in order for optimal control of the hot water system to be achieved by the control algorithm. In addition, the existing supply cable between the heating element and controller may be used as the data link when the heating element is turned off to save on additional communications/signal wiring. Besides retrofitting a conventional immersion element, other types of retrofit immersion elements, such as the moveable heating element described in section 2.2, may include a temperature sensor, integrated in the thermostat or otherwise.

4. Controller coupled with external vertical sensor array (Figure 54)

In this arrangement a vertical array of sensors on the outside of the tank pierces through the insulation. This provides a cost effective means of inferring useable hot water and typical draw off duty cycles to inform the algorithm's initialisation parameters prior to testing of control strategies.

5. Internal array of temperature sensors suspended beneath thermal source at tank bottom (Figure 55)

This arrangement resolves temperatures in the lower portion of the tank to determine more accurately what the risk associated with bacterial population is for a given control strategy.

6. Internal array of temperature sensors throughout tank (Figure 56)

This arrangement may for example be implemented by suspending an array of sensors by a weight from the bottom thermal source/immersion element and tethering an array of sensors above the thermal source using a float. The arrangement could be designed for easy retrofit to an existing hot water system for example by tethering the array of sensors to a retrofit tank drain valve. The availability of internal temperature measurements above the lowest thermal injection point provide the advantage of being able to accurately resolve the position of the thermocline to determine duty-cycles, useable volume quantities etc.

7. Inlet/outlet flow/temperature measurement (Figure 57)

In this arrangement temperature sensors are arranges to measure the flow and/or temperature at the inlet(s) and/or outlet(s). Measurement of the outlet temperature informs the controller whether the thermal requirement is met at all times for a given control strategy. Measurement of the (cold) inlet temperature enables the controller to respond to sudden changes in supply temperatures and dispatch thermal energy in an optimal way accordingly. Measurement of the flow rates enable the duty cycle associated with the hot water system to be measured and used to inform initialisation of control strategy simulations.

Figure 58 shows a generic heating element controller 5800. As mentioned with reference to Figure 1, the controller includes a clock unit 5802, in order to dispatch energy to the tank at the appropriate time according to a control strategy 5810. For determination of the control strategy 5810, a fouling computation unit 5804 is included in the controller. The fouling computation unit 5804 includes a number of models 5808 that determine how parameters influence one another. For example the bacterial risk model determines how a certain heated state influences the bacterial population in a tank. The models require input data 5806, such as for instance for the scaling model the expected scale precipitation rate in dependence on water composition and temperature. The input data may be pre-loaded data 5818, such as a look-up table for scale precipitation rate in dependence on water composition and temperature. The input data may be user input 5816, for example the pH and hardness of the water at the user's location. The input data may be sensor input 5814, for example from temperature measurement sensors, or from heating element duty cycle sensing. The input data and the types of model used may be interdependent; for example if only scant temperature sensing data is available, then a temperature model may be used with only minimal temperature data input requirements (and possibly more user input requirements, for instance to specify the tank volume). The models 5808 are combined to optimise the control strategy 5810 with respect to a parameter of particular interest, such as cost. The optimisation may be defined in respect of multiple conditions; for example minimising a cost parameter and at the same time avoiding the bacterial risk surpassing a threshold. To identify the optimal control strategy, a number of potential control strategies may be evaluated by the models 5808 using the model input data 5806, and then the potential control strategies that produces the most favourable outcome is determined and adapted as control strategy 5810, which is implemented by the controller 5800 for heating element control 5812.

The advantage of a fouling computation unit 5804 using models 5808 and model input data 5806 is that accurate judgement may be made as to the most beneficial control strategy, without requiring actual real-time sensing data for a multitude of conditions (e.g. bacterial concentration in tank or scale on heating element). It also allows predicting the outcome of the strategy without the requirement of enacting it. This is particularly useful where the outcome is relatively cumbersome to reverse, such as corrosion. The benefits to the user are ease of use (as the user does not need to determine the optimal strategy himself) at minimal expense (as no exhaustive sensing componentry is required). Depending on the optimisation, the operation may be optimally efficient, cost-efficient, and/or safe, such as to provide further benefit to the user.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

**1.** A heating element controller for a liquid heating system, wherein the heating element controller is arranged to:

a) determine the duty cycle of a heating element from monitoring the electrical current waveform to the heating element; and

b) modulate the timepoint of heating initiation by the heating element in dependence upon an expected duration of completing the heating process and upon a required time at which the heating process is to be completed;

wherein said expected duration is determined in dependence on said duty cycle.

**2.** A heating element controller according to claim 1, wherein the heating element controller is arranged to measure the duration of completing the heating process in order to determine an expected duration.

**3.** A heating element controller according to any preceding claim, wherein the controller is arranged to monitor at least one of: energy or voltage; supplied to the heating element in order to measure the duration of completing the heating process, the energy or current or voltage supply to the heating element being thermostatically controlled.

**4.** A heating element controller according to any preceding claim, wherein the controller is arranged to determine completion of the heating process by comparison of the heating element duty cycle on/off ratio to a predefined threshold ratio.

**5.** A heating element controller according to any preceding claim, wherein the controller further comprises an ambient temperature sensor, in dependence upon which the controller further modulates the timepoint of heating initiation.

**6.** A heating element controller according to any preceding claim, wherein the controller is arranged to modulate the timepoint of heating initiation in dependence upon information concerning the time(s) at which the cost to the user of supplying energy to the element changes.

**7.** A heating element controller according to any preceding claim for use in a heating system comprising a plurality of heating elements, wherein the heating element controller is arranged to determine to which element at least one of: energy; current; and voltage is supplied in dependence upon a required quantity of heated liquid, and wherein the required quantity of heated liquid is a user-input quantity selection.

**8.** A system for heating liquids, comprising at least one heating element associated with a liquid vessel, and a heating element controller as claimed in any preceding claim.

**9.** A system for heating liquids according to claim 8, further comprising a thermostat arranged to control operation of the heating element.

**10.** A system for heating liquids according to claim 8 or 9, comprising a liquid temperature sensor associated with the vessel and being arranged to provide an indication of a temperature of the liquid, the controller being arranged to use the output of the liquid temperature sensor in calculating the expected duration of completing the heating process.

**11.** A system for heating liquids according to any of claims 8 to 10, further comprising an array of at least two liquid temperature sensors, each being associated with a respective location on or in the heating vessel,.

**12.** A system for heating liquids according to claim 10 or 11, wherein the liquid temperature sensor(s) comprises means for determining temperature in dependence on the change in resistance with temperature of the heating element.

**13.** A system for heating liquids according to any of claims 10 to 12, wherein the liquid temperature sensor(s) comprises a resistance temperature detector in the heating element being arranged to provide an indication of a temperature of the liquid.

**14.** A system for heating liquids according to claim 11, wherein the controller is arranged to determine the thermocline of liquid in the vessel in dependence upon the data provided by the at least two liquid temperature sensors.

**15.** A method of controlling a heating element for a liquid heating system, comprising: determining a heating time period corresponding to an expected duration of completing the heating process; determining a required time at which the heating process is required to be completed; initiating heating by the heating element at a timepoint which is earlier than the required time by a time period corresponding to the heating time period; wherein determining the heating time period corresponding to the expected duration of completing the heating process comprises determining the duty cycle of a heating element from monitoring the electrical current waveform to the heating element; and determining said expected duration in dependence on said duty cycle.

**Patentansprüche**

**1.** Heizelementsteuereinheit für ein Flüssigkeitsheizsystem, wobei die Heizelementsteuereinheit für Folgendes ausgelegt ist:

a) Bestimmen des Arbeitszyklus eines Heizelements durch Überwachen der Wellenform des elektrischen Stroms zu dem Heizelement; und
b) Modulieren des Zeitpunkts des Heizbeginns durch das Heizelement in Abhängigkeit von einer erwarteten Dauer des Abschlusses des Heizprozesses und von einer erforderlichen Zeit, zu der der Heizprozess abgeschlossen werden soll;

wobei die genannte erwartete Dauer in Abhängigkeit von dem genannten Arbeitszyklus bestimmt wird.

**2.** Heizelementsteuereinheit nach Anspruch 1, wobei die Heizelementsteuereinheit dafür ausgelegt ist, die Dauer des Abschlusses des Heizprozesses zu messen, um eine erwartete Dauer zu bestimmen.

**3.** Heizelementsteuereinheit nach einem der vorhergehenden Ansprüche, wobei die Steuereinheit dafür ausgelegt ist, zusätzlich mindestens eines der Folgenden zu überwachen: Energie oder Spannung, die dem Heizelement zugeführt wird, um die Dauer des Abschlusses des Heizvorgangs zu messen, wobei die Energie oder Strom- oder Spannungszufuhr zu dem Heizelement thermostatisch gesteuert wird.

**4.** Heizelementsteuereinheit nach einem der vorhergehenden Ansprüche, wobei die Steuereinheit dafür ausgelegt ist, den Abschluss des Heizprozesses durch Vergleich des Arbeitszyklus-Ein/Aus-Verhältnisses des Heizelements mit einem vorbestimmten Schwellenverhältnis zu bestimmen.

**5.** Heizelementsteuereinheit nach einem der vorhergehenden Ansprüche, wobei die Steuereinheit ferner einen Umgebungstemperatursensor umfasst, in dessen Abhängigkeit die Steuereinheit ferner den Zeitpunkt des Heizbeginns moduliert.

**6.** Heizelementsteuereinheit nach einem der vorhergehenden Ansprüche, wobei die Steuereinheit dafür ausgelegt ist, den Zeitpunkt des Heizbeginns in Abhängigkeit von Informationen über die Zeit(en) zu modulieren, zu denen sich die Kosten für die Energieversorgung des Elements durch den Benutzer ändern.

7. Heizelementsteuereinheit nach einem der vorhergehenden Ansprüche zur Verwendung in einem Heizsystem, das eine Vielzahl von Heizelementen umfasst, wobei die Heizelementsteuereinheit dafür ausgelegt ist, zu bestimmen, zu welchem Element mindestens eines von Energie, Strom und Spannung in Abhängigkeit von einer erforderlichen Menge erwärmter Flüssigkeit zugeführt wird, und wobei die erforderliche Menge erwärmter Flüssigkeit eine Auswahlmenge für die Benutzereingabe ist.

8. System zum Erwärmen von Flüssigkeiten, das mindestens ein Heizelement umfasst, das einem Flüssigkeitsbehälter zugeordnet ist, und eine Heizelementsteuereinheit nach einem der vorhergehenden Ansprüche.

9. System zum Erwärmen von Flüssigkeiten nach Anspruch 8, das ferner einen Thermostat umfasst, der dafür ausgelegt ist, den Betrieb des Heizelements zu steuern.

10. System zum Erwärmen von Flüssigkeiten nach Anspruch 8 oder 9, das einen Flüssigkeitstemperatursensor umfasst, der dem Behälter zugeordnet ist und dafür ausgelegt ist, eine Anzeige für eine Temperatur der Flüssigkeit bereitzustellen, wobei die Steuereinheit dafür ausgelegt ist, die Ausgabe des Flüssigkeitstemperatursensors beim Berechnen der erwarteten Dauer des Abschlusses des Heizprozesses zu verwenden.

11. System zum Erwärmen von Flüssigkeiten nach einem der Ansprüche 8 bis 10, das ferner eine Anordnung von mindestens zwei Flüssigkeitstemperatursensoren umfasst, die jeweils einer jeweiligen Stelle auf oder in dem Heizbehälter zugeordnet sind.

12. System zum Erwärmen von Flüssigkeiten nach Anspruch 10 oder 11, wobei der/die Flüssigkeitstemperatursensor(en) Mittel zur Bestimmung der Temperatur in Abhängigkeit von der Widerstandsänderung mit der Temperatur des Heizelements umfassen.

13. System zum Erwärmen von Flüssigkeiten nach einem der Ansprüche 10 bis 12, wobei der/die Flüssigkeitstemperatursensor(en) einen Widerstandstemperaturdetektor in dem Heizelement umfassen, der dafür ausgelegt ist, eine Anzeige einer Temperatur der Flüssigkeit bereitzustellen.

14. System zum Erwärmen von Flüssigkeiten nach Anspruch 11, wobei die Steuereinheit dafür ausgelegt ist, die Thermokline der Flüssigkeit in dem Behälter in Abhängigkeit von den Daten zu bestimmen, die durch die mindestens zwei Flüssigkeitstemperatursensoren bereitgestellt werden.

15. Verfahren zum Steuern eines Heizelements für ein Flüssigkeitsheizsystem, das Folgendes umfasst: Bestimmen einer Heizzeitdauer, die einer erwarteten Dauer des Abschlusses des Heizprozesses entspricht; Bestimmen einer erforderlichen Zeit, zu der der Heizvorgang abgeschlossen werden muss; Beginnen des Heizens durch das Heizelement zu einem Zeitpunkt, der um eine Zeitspanne vor der erforderlichen Zeit liegt, die der Heizzeitdauer entspricht; wobei das Bestimmen der Heizzeitdauer, die der erwarteten Dauer des Abschlusses des Heizprozesses entspricht, das Bestimmen des Arbeitszyklus eines Heizelements durch Überwachen der Wellenform des elektrischen Stroms zu dem Heizelement umfasst; und Bestimmen der genannten erwarteten Dauer in Abhängigkeit von dem genannten Arbeitszyklus.

**Revendications**

1. Régulateur d'élément chauffant pour un système de chauffage de liquide, dans lequel le régulateur d'élément chauffant est agencé pour :

   a) déterminer le cycle de service d'un élément chauffant à partir de la supervision de la forme d'onde de courant électrique vers l'élément de chauffage ; et
   b) moduler l'instant de déclenchement du chauffage par l'élément chauffant en fonction d'une durée attendue de réalisation du processus de chauffage et d'un temps nécessaire auquel le processus de chauffage doit être réalisé ;

   dans lequel ladite durée attendue est déterminée en fonction dudit cycle de service.

2. Régulateur d'élément chauffant selon la revendication 1, dans lequel le régulateur d'élément chauffant est agencé pour mesurer la durée de réalisation du processus de chauffage afin de déterminer une durée attendue.

**3.** Régulateur d'élément chauffant selon l'une quelconque des revendications précédentes, dans lequel le régulateur est agencé pour superviser en plus au moins un élément parmi :
l'énergie ou la tension ; fournie à l'élément chauffant afin de mesurer la durée de réalisation du processus de chauffage, la fourniture d'énergie ou de courant ou de tension à l'élément chauffant étant régulée de manière thermostatique.

**4.** Régulateur d'élément chauffant selon l'une quelconque des revendications précédentes, dans lequel le régulateur est agencé pour déterminer la réalisation du processus de chauffage en comparant le rapport marche/arrêt du cycle de service de l'élément de chauffage à un rapport seuil prédéfini.

**5.** Régulateur d'élément chauffant selon l'une quelconque des revendications précédentes, dans lequel le régulateur comprend en outre un capteur de température ambiante, en fonction duquel le régulateur module en outre l'instant de déclenchement du chauffage.

**6.** Régulateur d'élément chauffant selon l'une quelconque des revendications précédentes, dans lequel le régulateur est agencé pour moduler l'instant de déclenchement du chauffage en fonction d'informations concernant le ou les temps auxquels le coût encouru par l'utilisateur pour fournir de l'énergie à l'élément change.

**7.** Régulateur d'élément chauffant selon l'une quelconque des revendications précédentes destiné à être utilisé dans un système de chauffage comprenant une pluralité d'éléments chauffants, dans lequel le régulateur d'élément chauffant est agencé pour déterminer à quel élément au moins un élément parmi : l'énergie ; le courant ; et la tension est fourni en fonction d'une quantité nécessaire de liquide chauffé, et dans lequel la quantité nécessaire de liquide chauffé est une sélection de quantité entrée par un utilisateur.

**8.** Système pour chauffer des liquides, comprenant au moins un élément chauffant associé à un réservoir de liquide, et un régulateur d'élément chauffant selon l'une quelconque des revendications précédentes.

**9.** Système pour chauffer des liquides selon la revendication 8, comprenant en outre un thermostat agencé pour réguler le fonctionnement de l'élément chauffant.

**10.** Système pour chauffer des liquides selon la revendication 8 ou 9, comprenant un capteur de température de liquide associé au réservoir et étant agencé pour fournir une indication d'une température du liquide, le régulateur étant agencé pour utiliser la sortie du capteur de température de liquide en calculant la durée attendue de réalisation du processus de chauffage.

**11.** Système pour chauffer des liquides selon l'une quelconque des revendications 8 à 10, comprenant en outre un agencement d'au moins deux capteurs de température de liquide, chacun étant associé à un emplacement respectif sur ou dans le réservoir chauffant.

**12.** Système pour chauffer des liquides selon la revendication 10 ou 11, dans lequel le ou les capteurs de température de liquide comprennent un moyen pour déterminer la température en fonction du changement de la résistance avec la température de l'élément chauffant.

**13.** Système pour chauffer des liquides selon l'une quelconque des revendications 10 à 12, dans lequel le ou les capteur de température de liquide comprennent un détecteur de température de résistance dans l'élément chauffant étant agencé pour fournir une indication d'une température du liquide.

**14.** Système pour chauffer des liquides selon la revendication 11, dans lequel le régulateur est agencé pour déterminer la thermocline du liquide dans le réservoir en fonction des données fournies par les au moins deux capteurs de température de liquide.

**15.** Procédé pour contrôler un élément chauffant pour un système de chauffage de liquide, comprenant : la détermination d'une période de temps de chauffage correspondant à une durée attendue de réalisation du processus de chauffage ; la détermination d'un temps nécessaire auquel le processus de chauffage doit être réalisé ; le déclenchement du chauffage par l'élément chauffant à un instant qui précède le temps nécessaire d'une période de temps correspondant à la période de temps de chauffage ; dans lequel la détermination de la période de temps de chauffage correspondant à la durée attendue de réalisation du processus de chauffage comprend la détermination du cycle de service d'un élément chauffant à partir de la supervision de la forme d'onde de courant électrique vers l'élément chauffant ; et la détermination de ladite durée attendue en fonction dudit cycle de service.

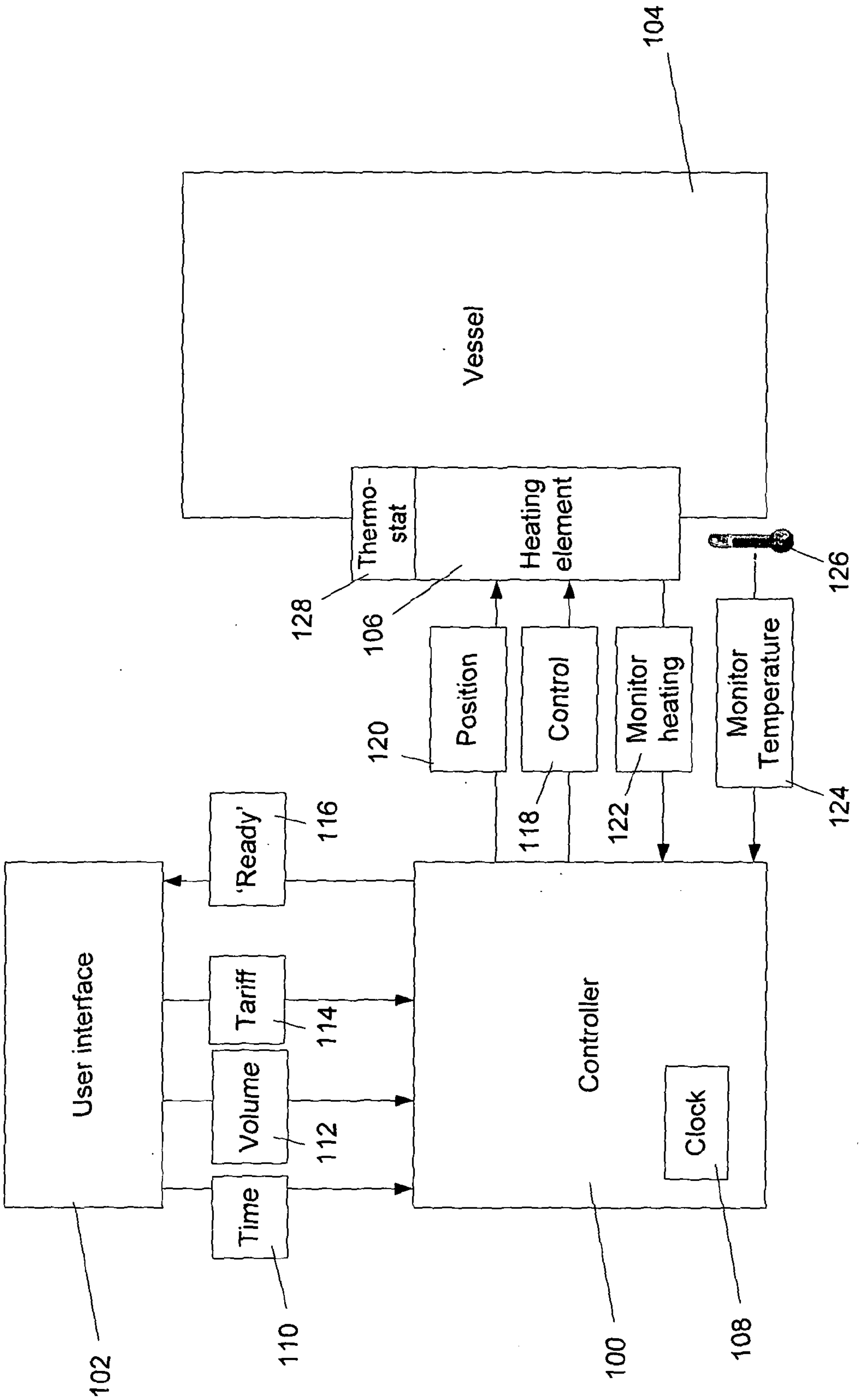
Vessel
104
Thermo-stat
Heating element
128
106
Position
Control
Monitor heating
Monitor Temperature
120
118
122
124
126
'Ready'
116
User interface
Tariff
114
Volume
112
Time
110
Controller
Clock
102
100
108

Figure 1

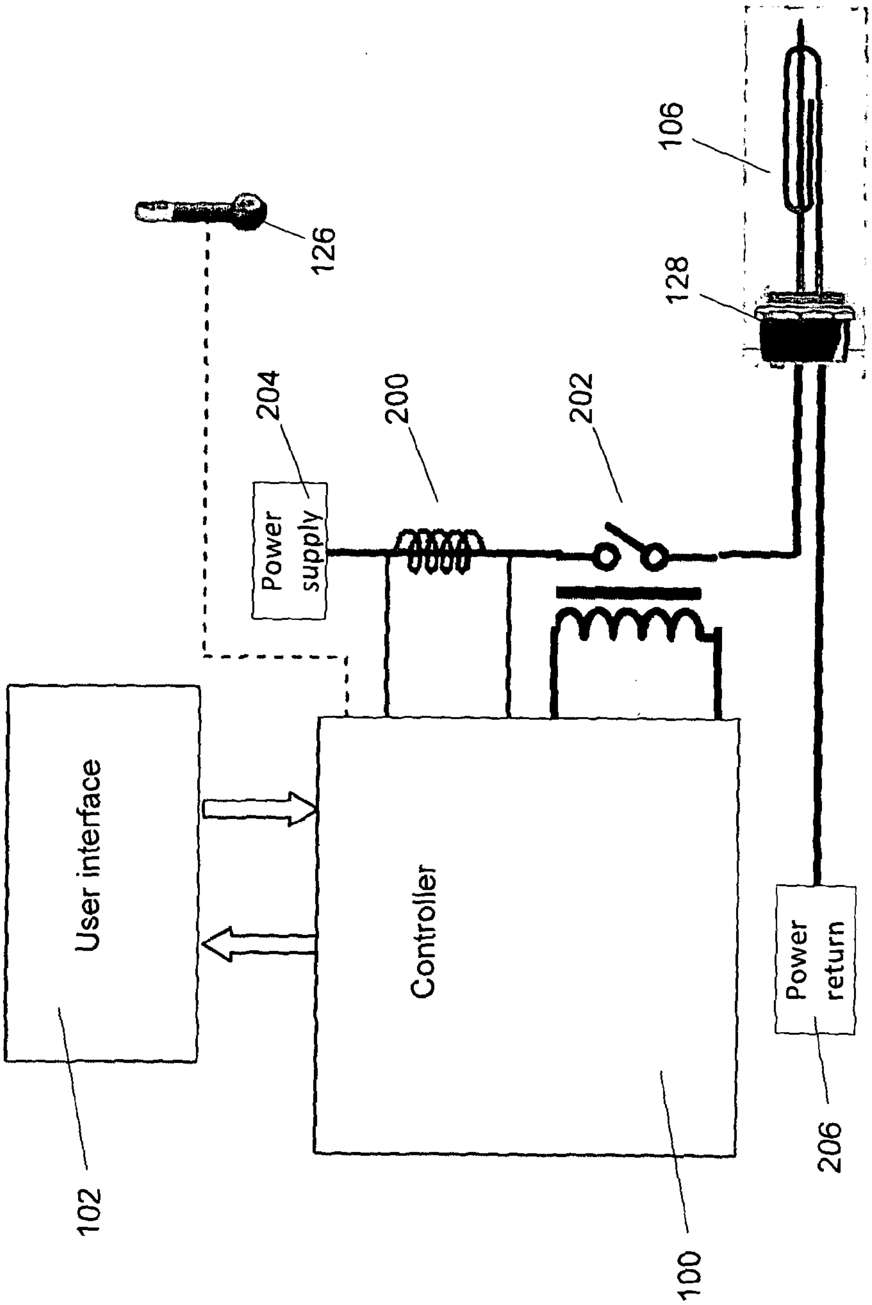
User interface
Controller
Power supply
Power return
102
100
126
204
200
202
128
106
206

Figure 2

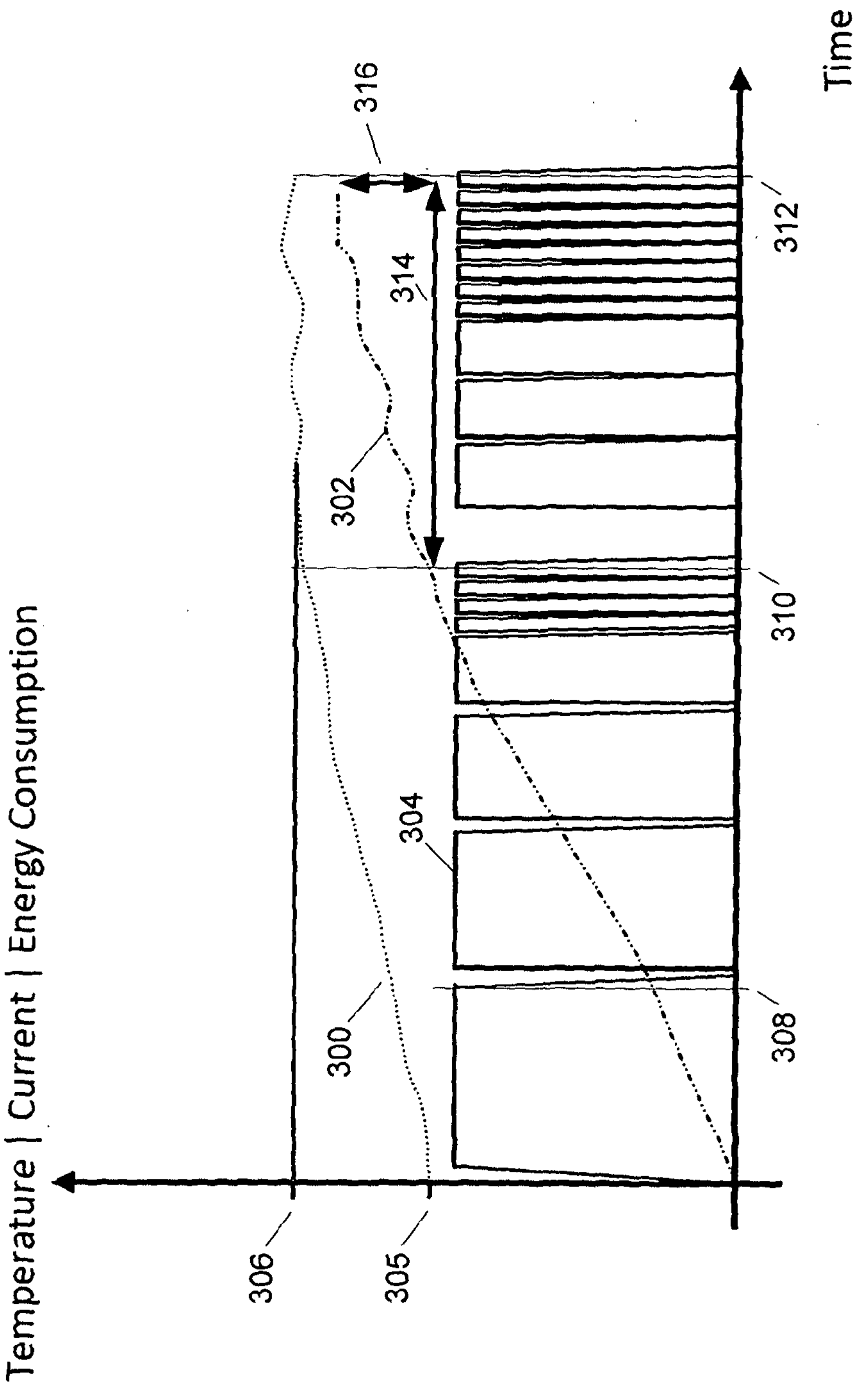
Temperature | Current | Energy Consumption
Time
316
314
312
302
310
304
300
308
306
305

Figure 3

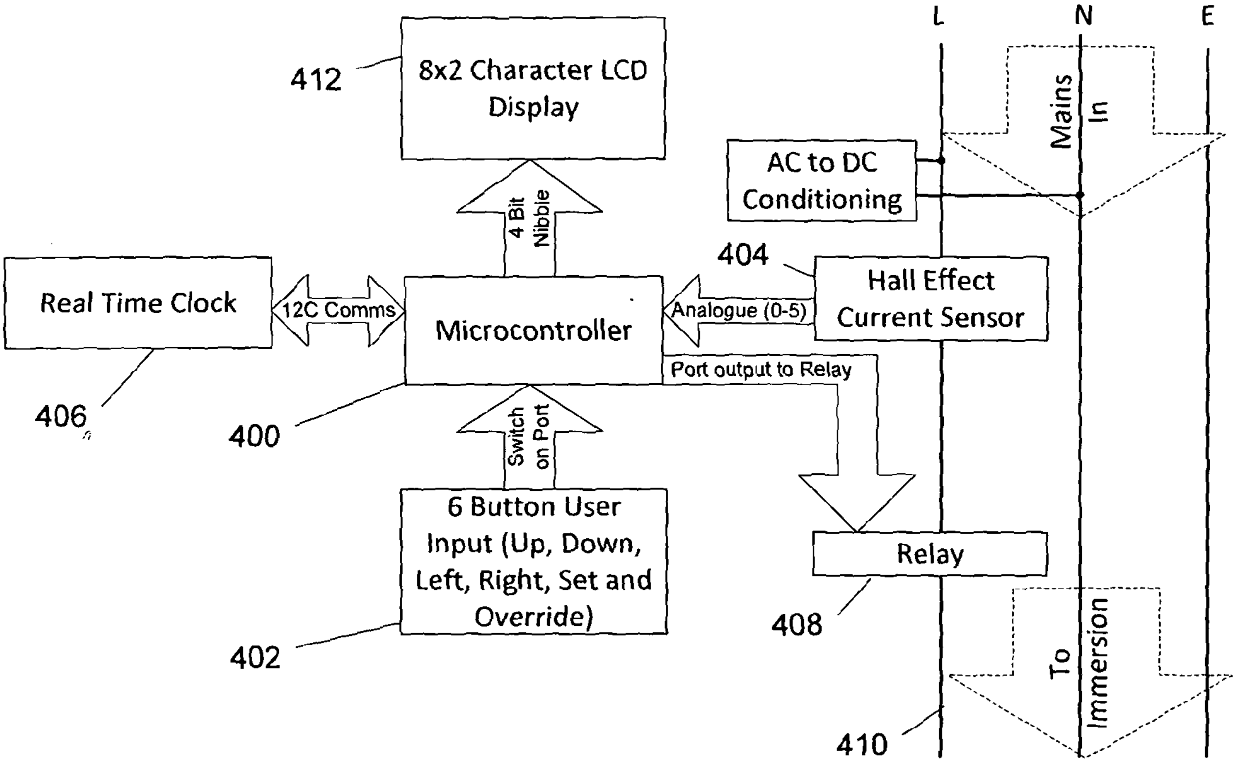


Figure 4

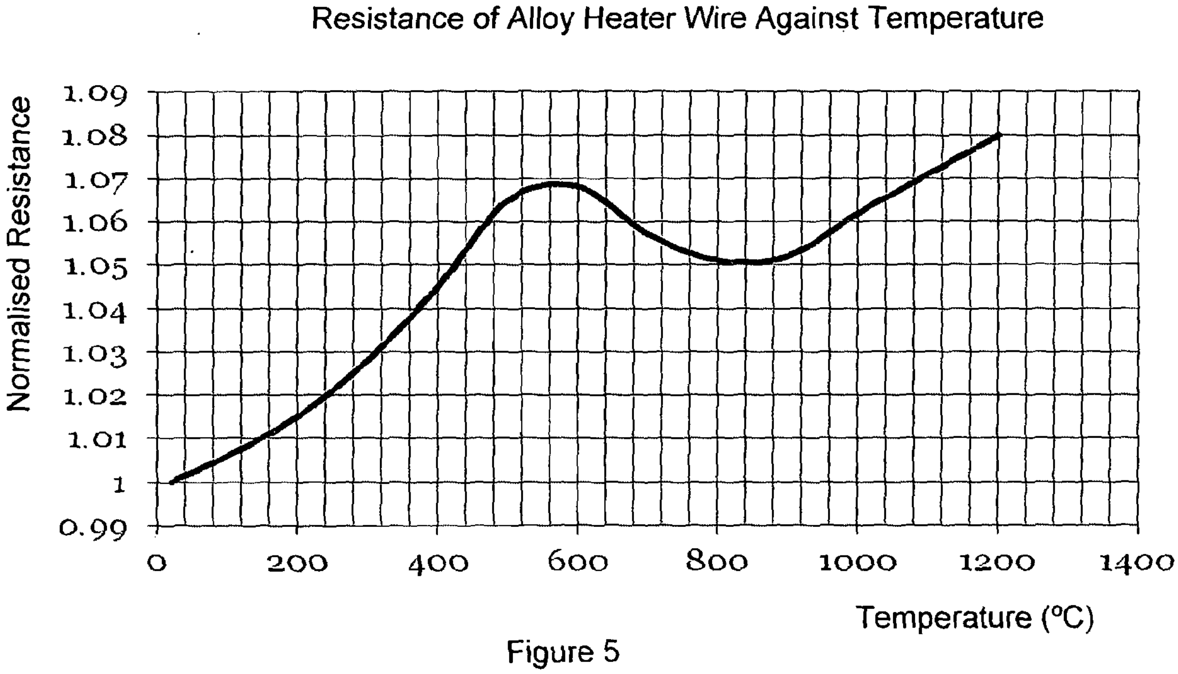


Figure 5

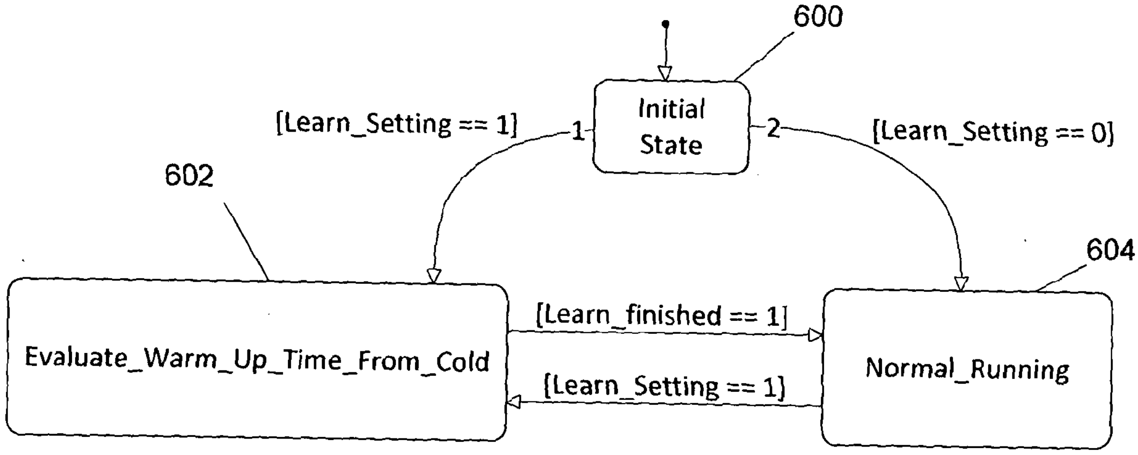


Figure 6

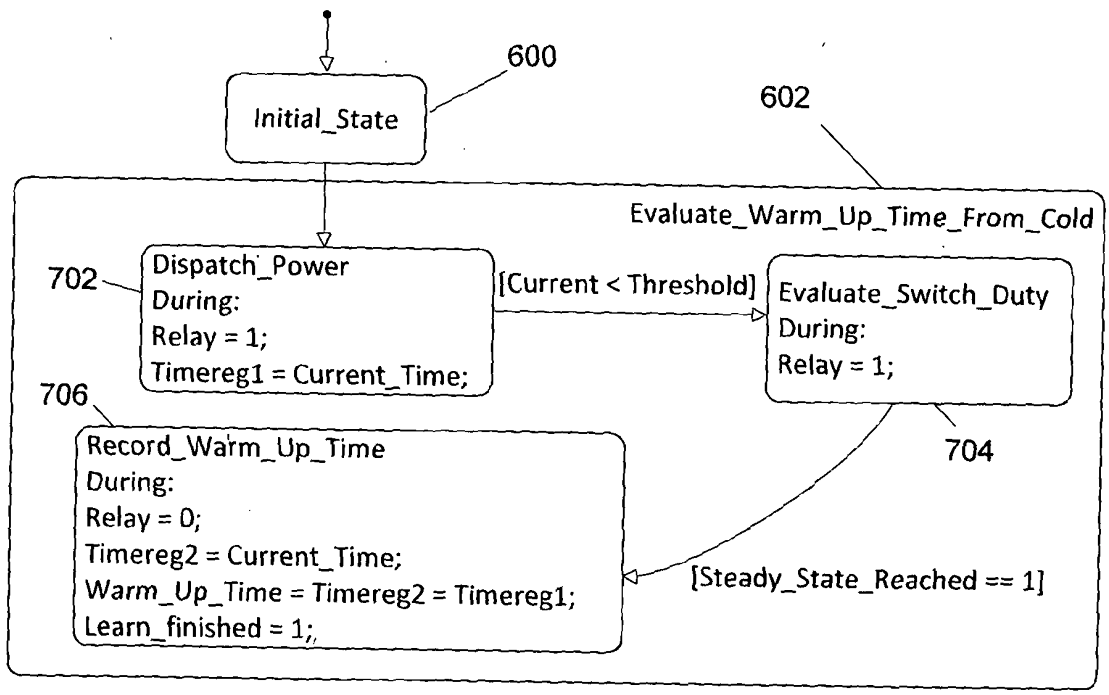


Figure 7

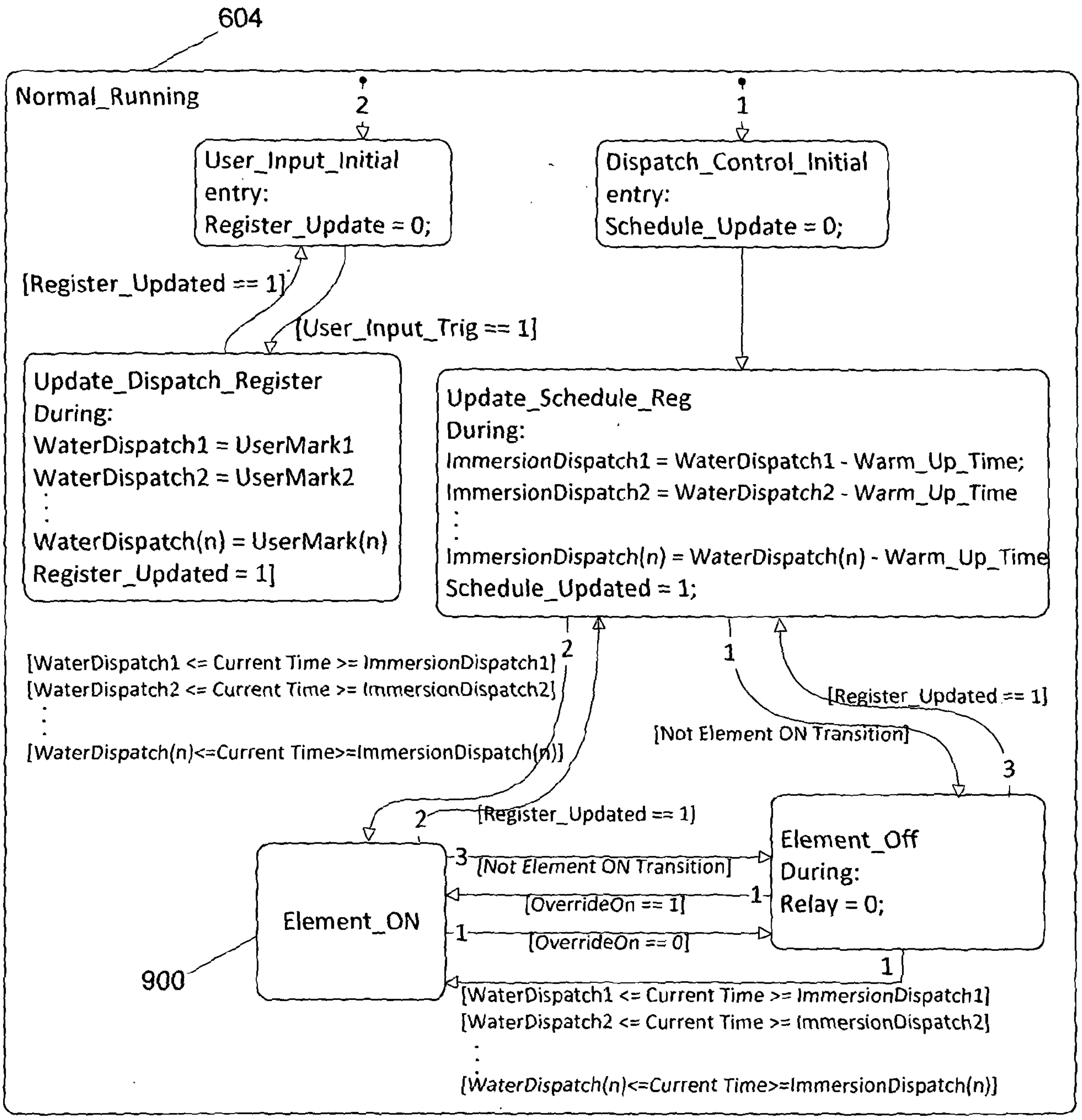

604
Normal_Running
2
1
User_Input_Initial
entry:
Register_Update = 0;
Dispatch_Control_Initial
entry:
Schedule_Update = 0;
[Register_Updated == 1]
[User_Input_Trig == 1]
Update_Dispatch_Register
During:
WaterDispatch1 = UserMark1
WaterDispatch2 = UserMark2
WaterDispatch(n) = UserMark(n)
Register_Updated = 1]
Update_Schedule_Reg
During:
ImmersionDispatch1 = WaterDispatch1 - Warm_Up_Time;
ImmersionDispatch2 = WaterDispatch2 - Warm_Up_Time
ImmersionDispatch(n) = WaterDispatch(n) - Warm_Up_Time
Schedule_Updated = 1;
[WaterDispatch1 <= Current Time >= ImmersionDispatch1]
[WaterDispatch2 <= Current Time >= ImmersionDispatch2]
[WaterDispatch(n)<=Current Time>=ImmersionDispatch(n)]
2
1
[Register_Updated == 1]
[Not Element ON Transition]
3
2
[Register_Updated == 1]
Element_Off
During:
Relay = 0;
3
[Not Element ON Transition]
1
[OverrideOn == 1]
Element_ON
1
[OverrideOn == 0]
900
1
[WaterDispatch1 <= Current Time >= ImmersionDispatch1]
[WaterDispatch2 <= Current Time >= ImmersionDispatch2]
[WaterDispatch(n)<=Current Time>=ImmersionDispatch(n)]


Figure 8

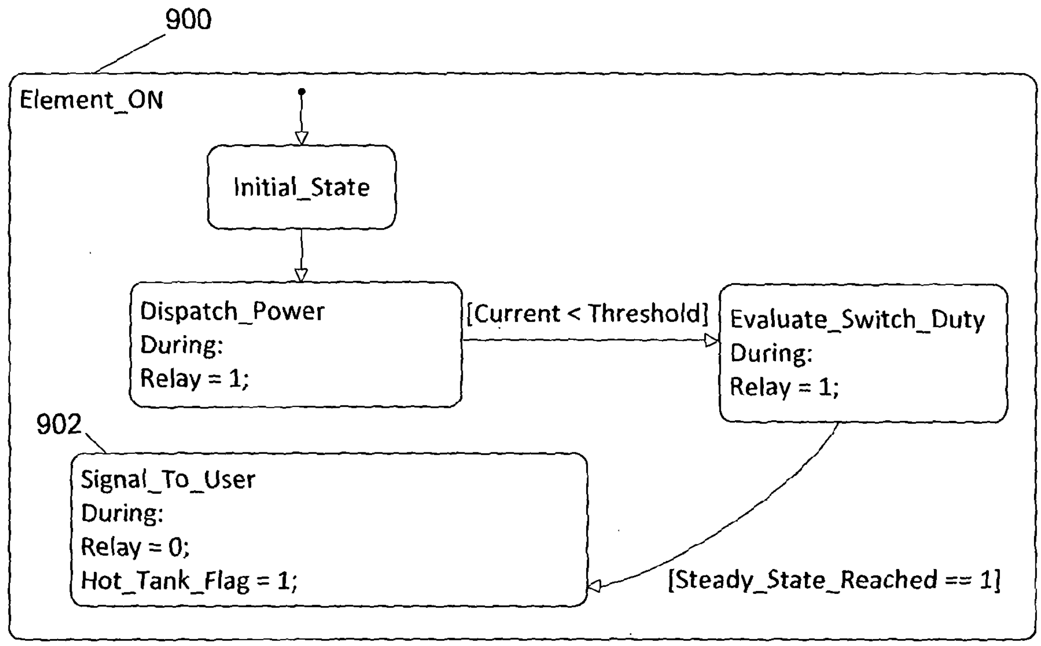


Figure 9

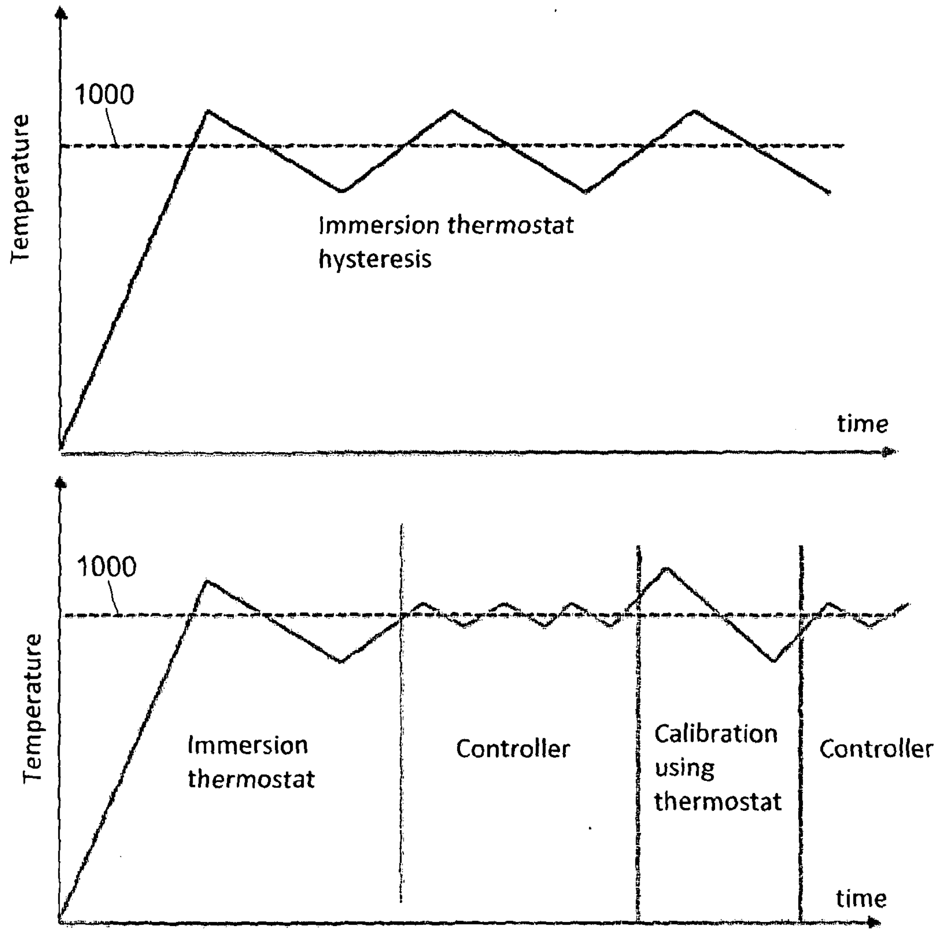


Figure 10

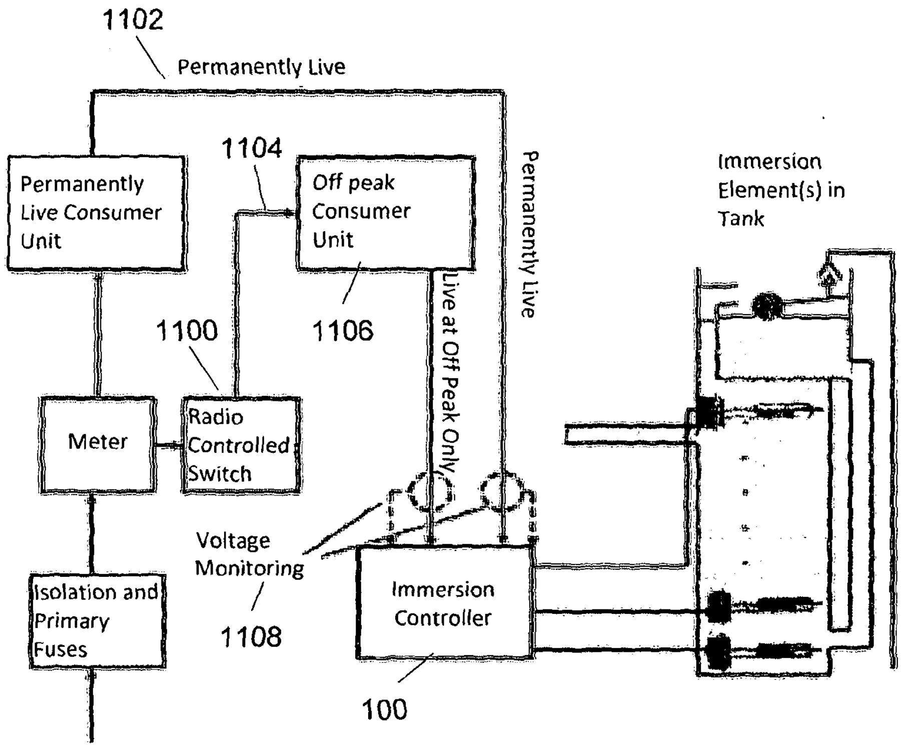


Figure 11

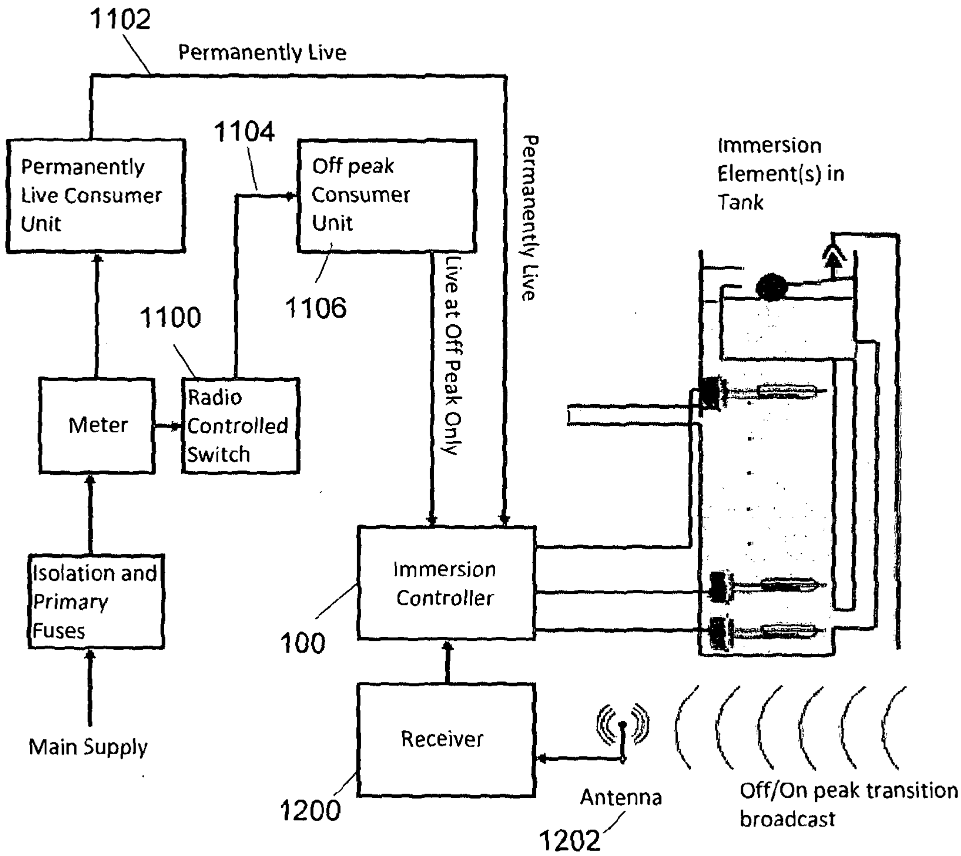


Figure 12

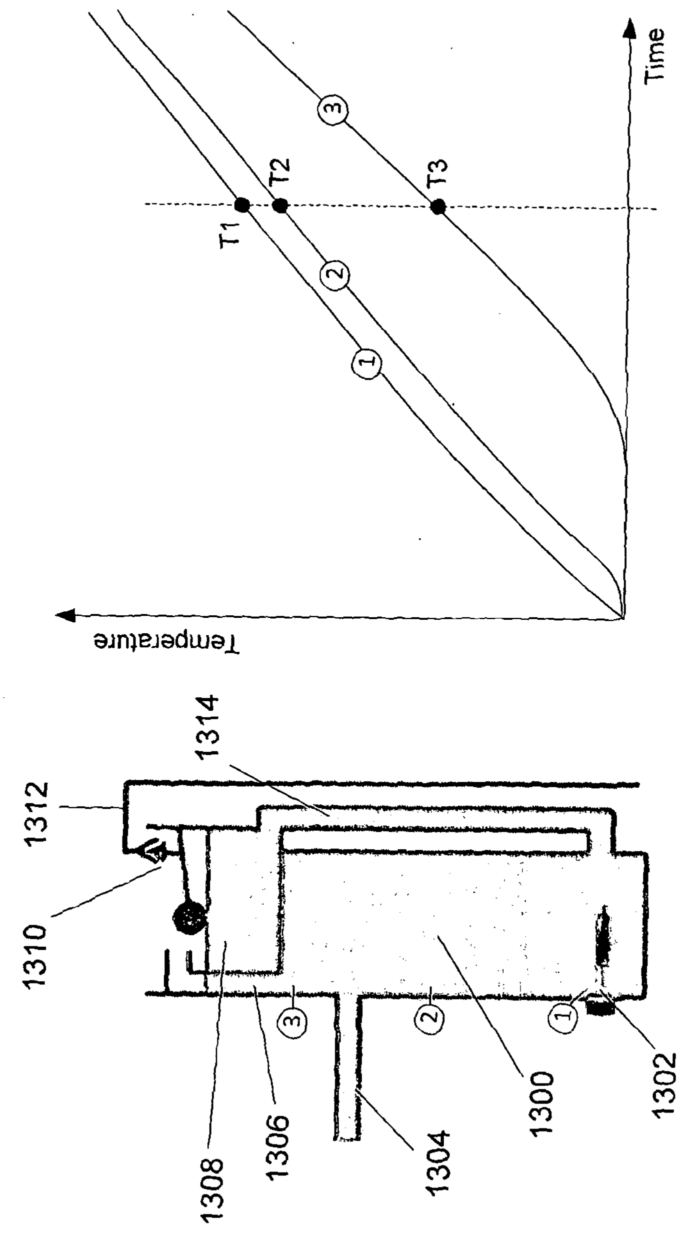
Temperature
Time
T1
T2
T3
1
2
3
1300
1302
1304
1306
1308
1310
1312
1314

Figure 13

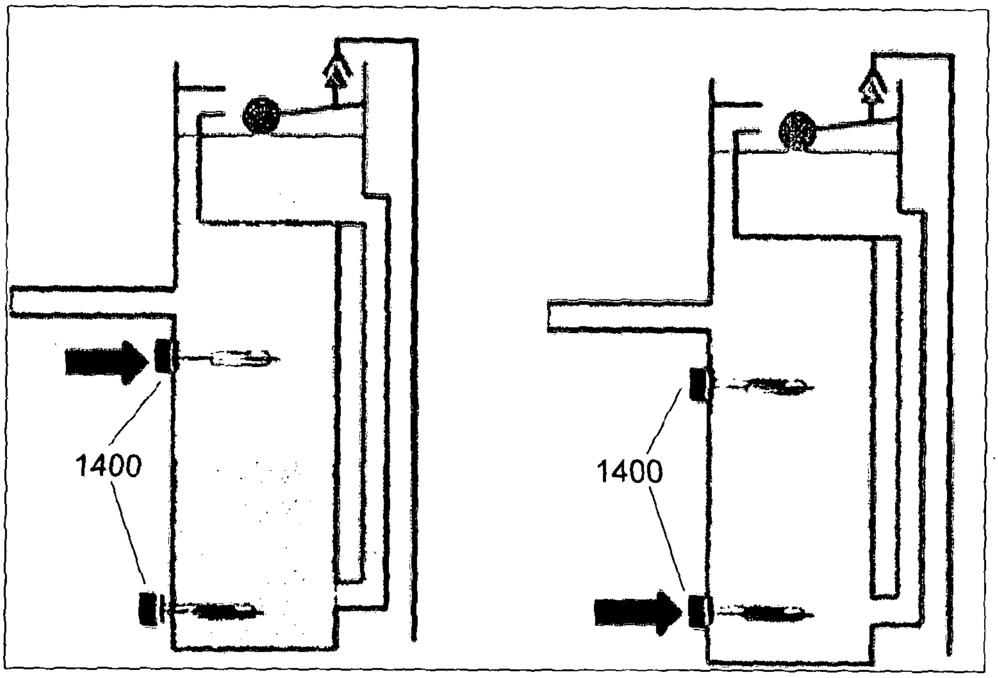


Figure 14

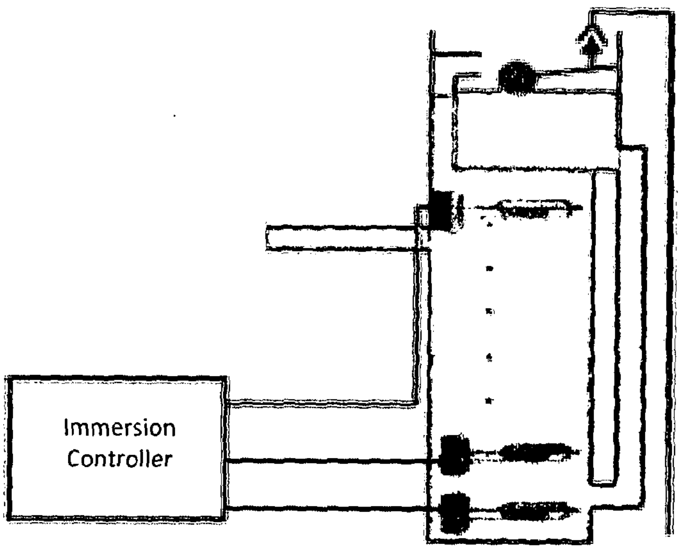


Figure 15

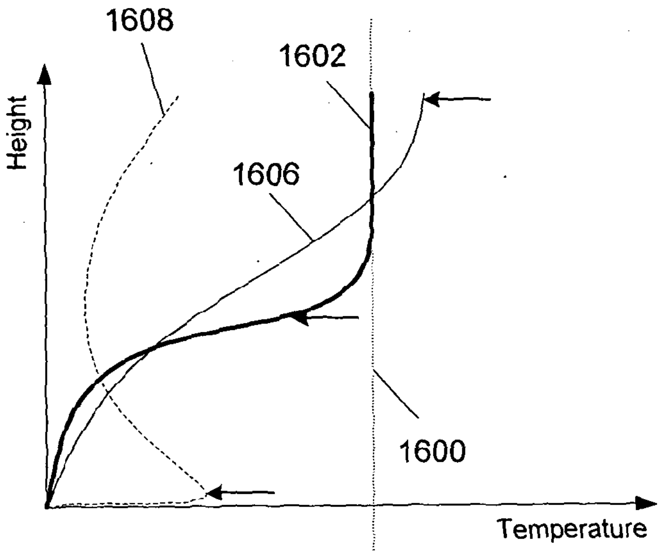


Figure 16

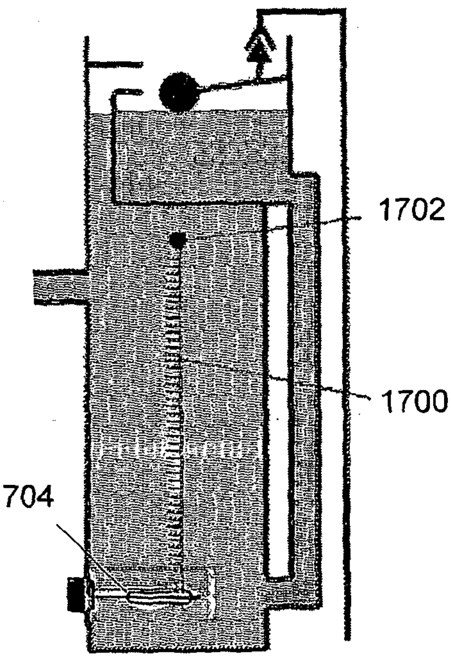


Figure 17

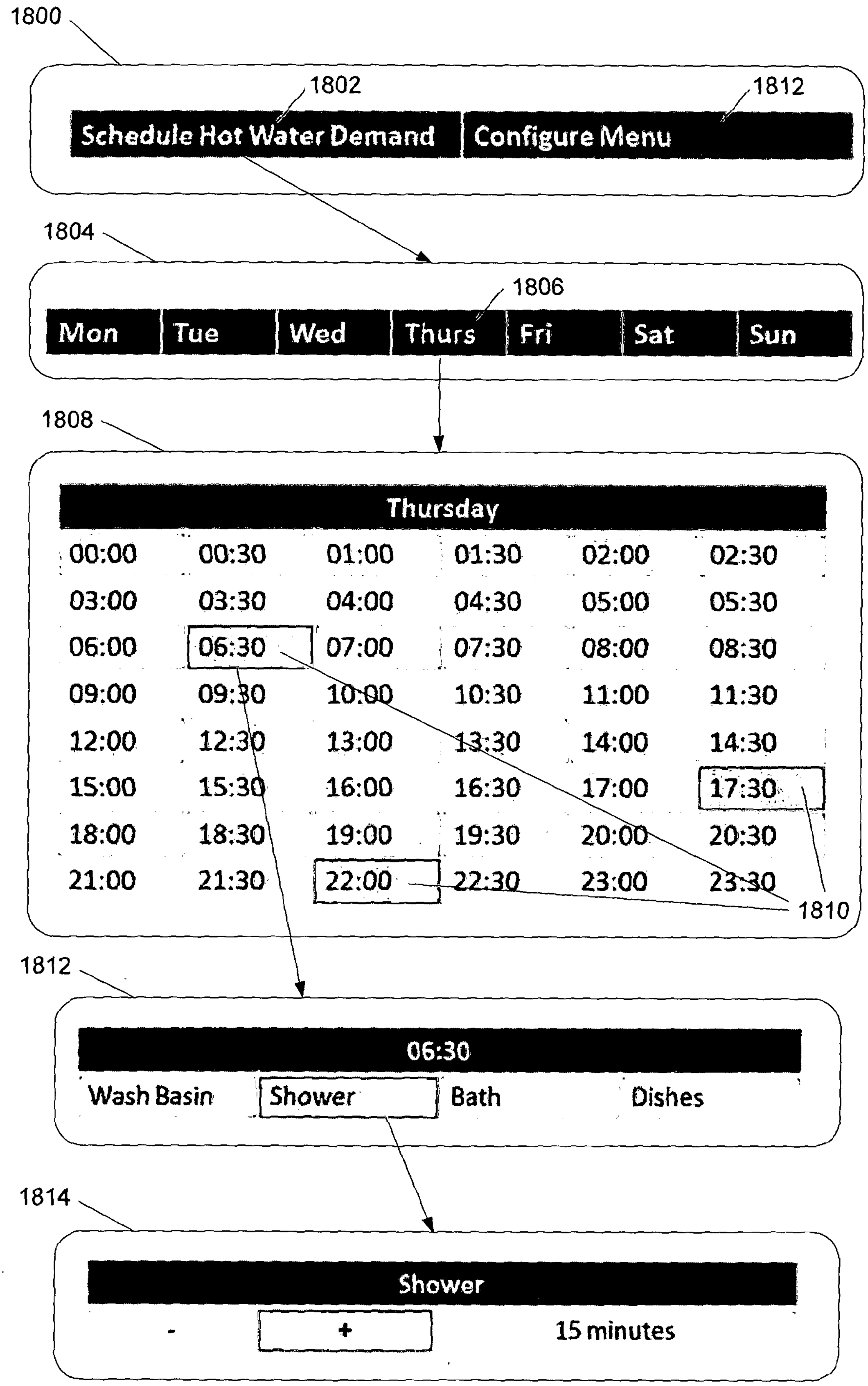
1800
1802
1812
Schedule Hot Water Demand
Configure Menu
1804
1806
Mon
Tue
Wed
Thurs
Fri
Sat
Sun
1808
Thursday
00:00 00:30 01:00 01:30 02:00 02:30
03:00 03:30 04:00 04:30 05:00 05:30
06:00 06:30 07:00 07:30 08:00 08:30
09:00 09:30 10:00 10:30 11:00 11:30
12:00 12:30 13:00 13:30 14:00 14:30
15:00 15:30 16:00 16:30 17:00 17:30
18:00 18:30 19:00 19:30 20:00 20:30
21:00 21:30 22:00 22:30 23:00 23:30
1810
1812
06:30
Wash Basin
Shower
Bath
Dishes
1814
Shower
-
+
15 minutes

Figure 18

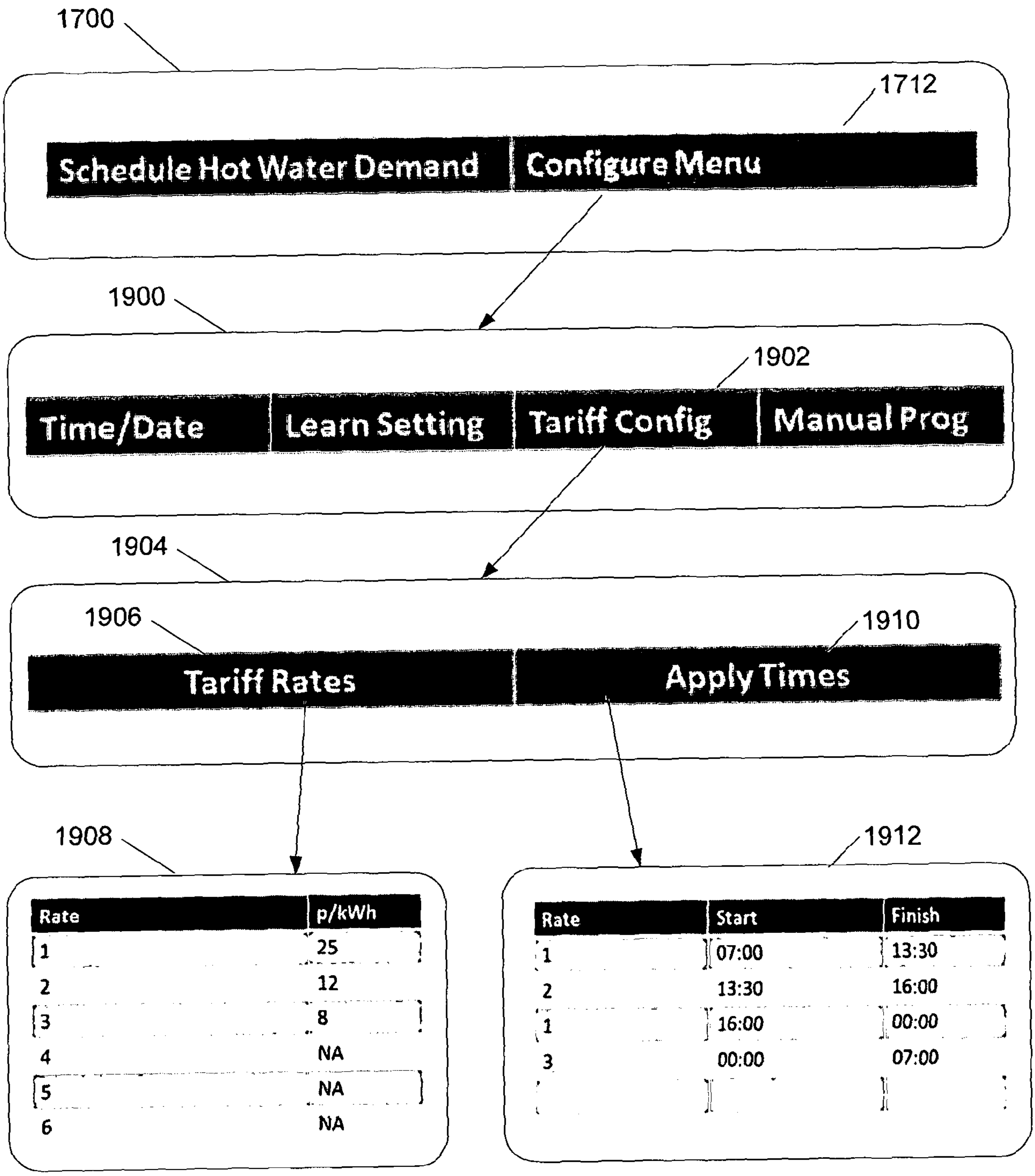
1700
1712
Schedule Hot Water Demand
Configure Menu
1900
1902
Time/Date
Learn Setting
Tariff Config
Manual Prog
1904
1906
1910
Tariff Rates
Apply Times
1908
1912
Rate
p/kWh
1
25
2
12
3
8
4
NA
5
NA
6
NA
Rate
Start
Finish
1
07:00
13:30
2
13:30
16:00
1
16:00
00:00
3
00:00
07:00

Figure 19

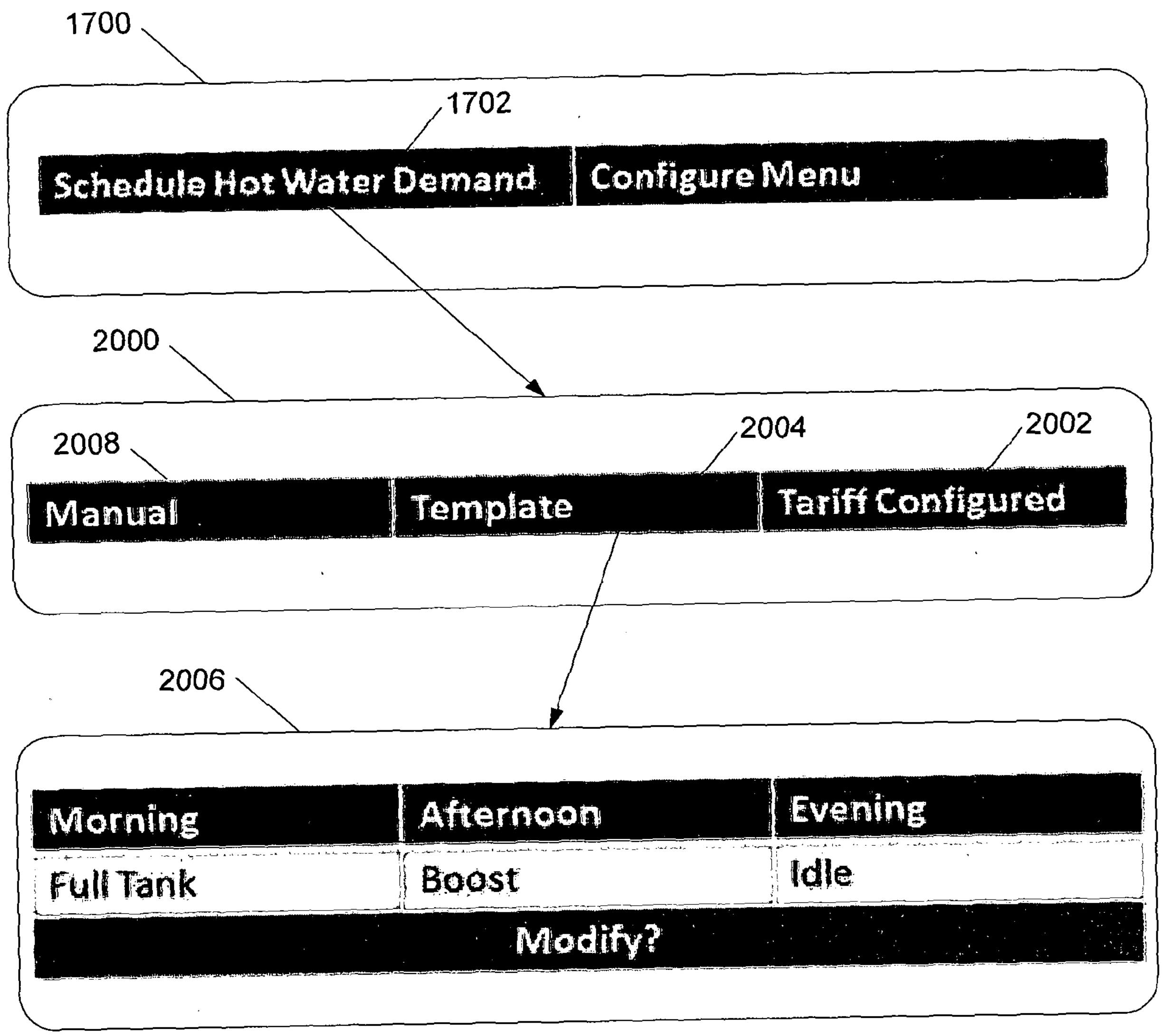
1700
1702
Schedule Hot Water Demand
Configure Menu
2000
2008
2004
2002
Manual
Template
Tariff Configured
2006
Morning
Afternoon
Evening
Full Tank
Boost
Idle
Modify?

Figure 20

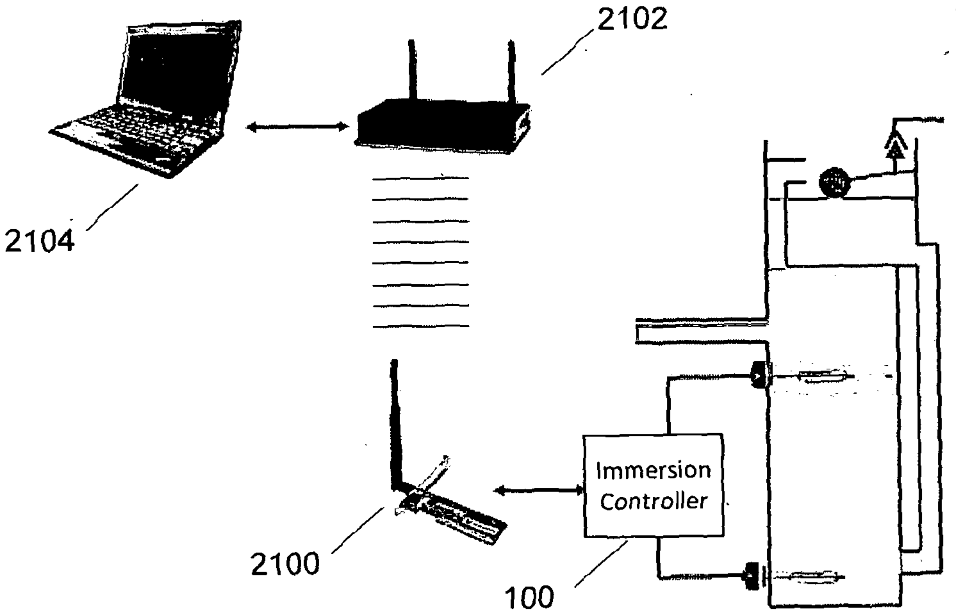


Figure 21

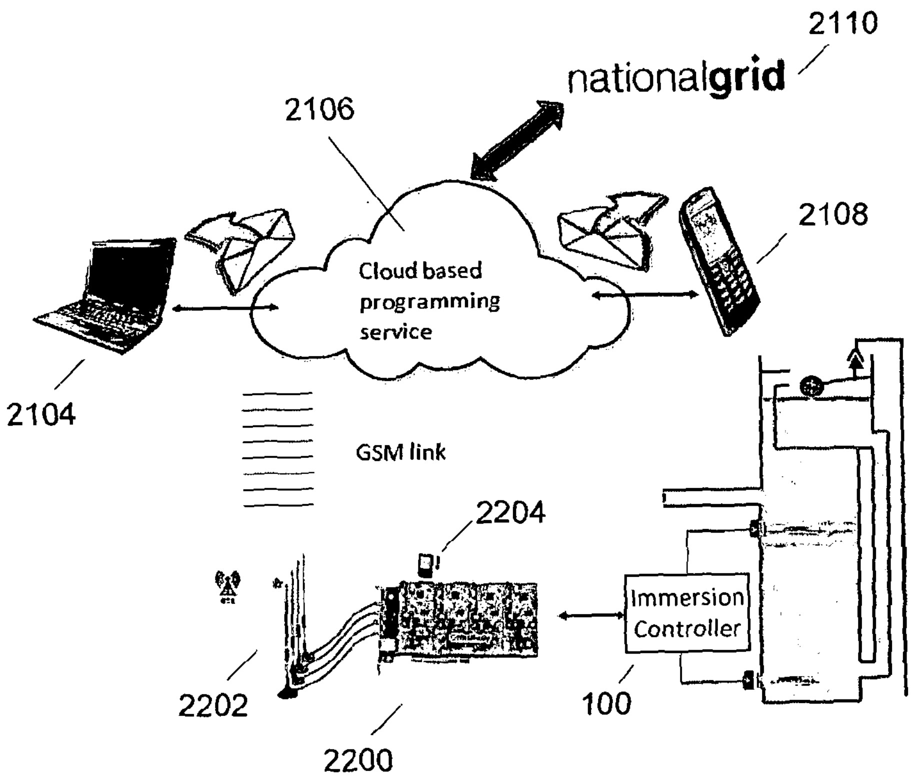


Figure 22

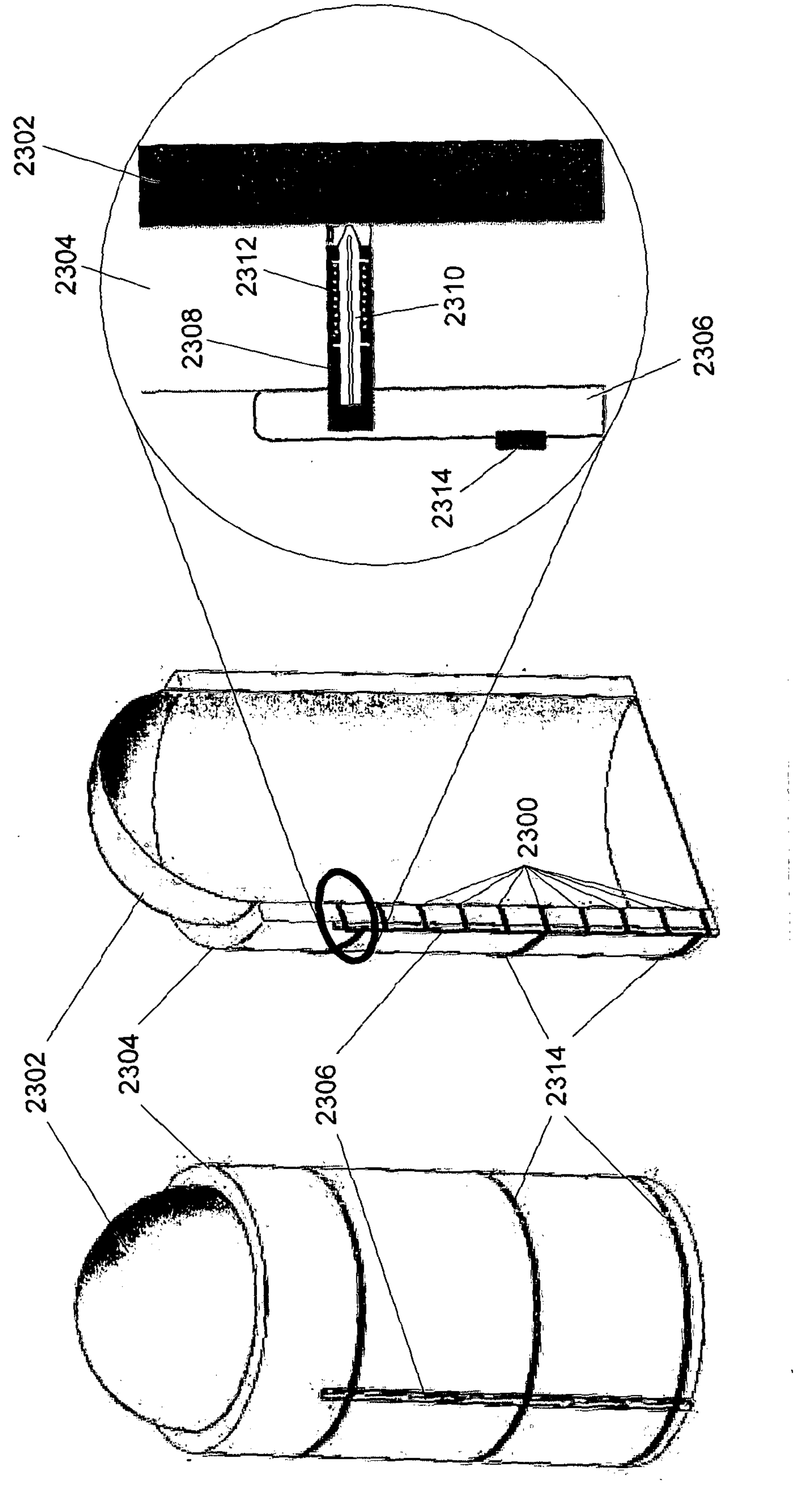


Figure 23

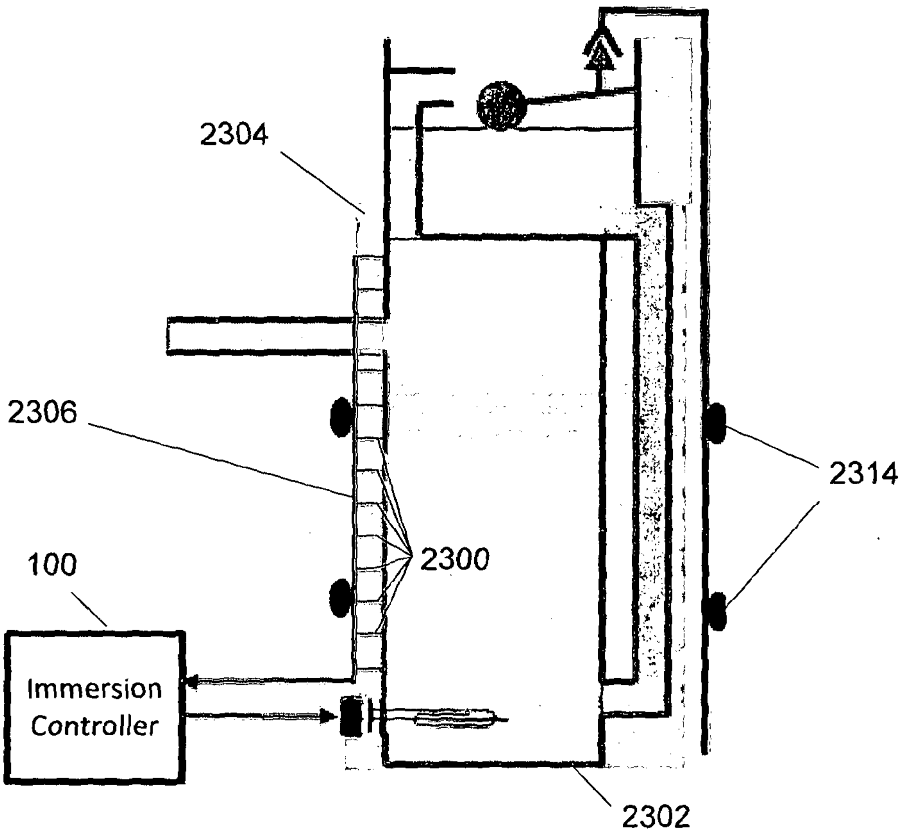


Figure 24

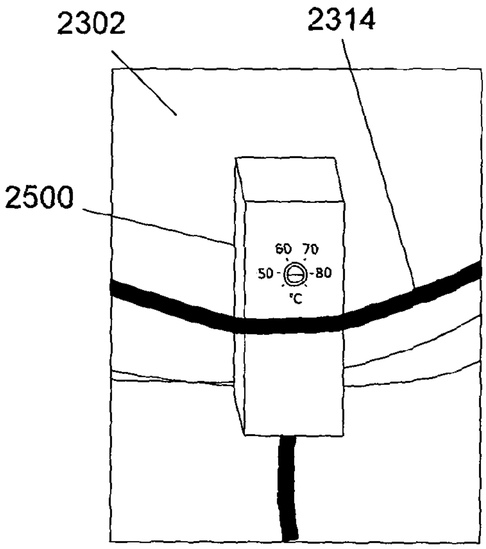


Figure 25

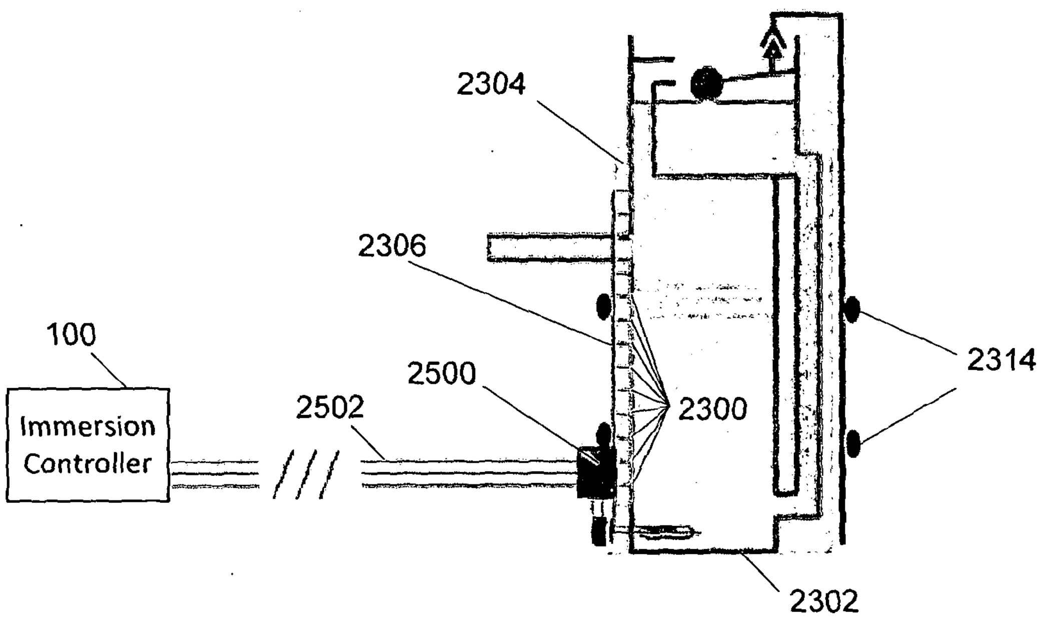
2304
2306
100
Immersion Controller
2500
2502
2300
2314
2302

Figure 26

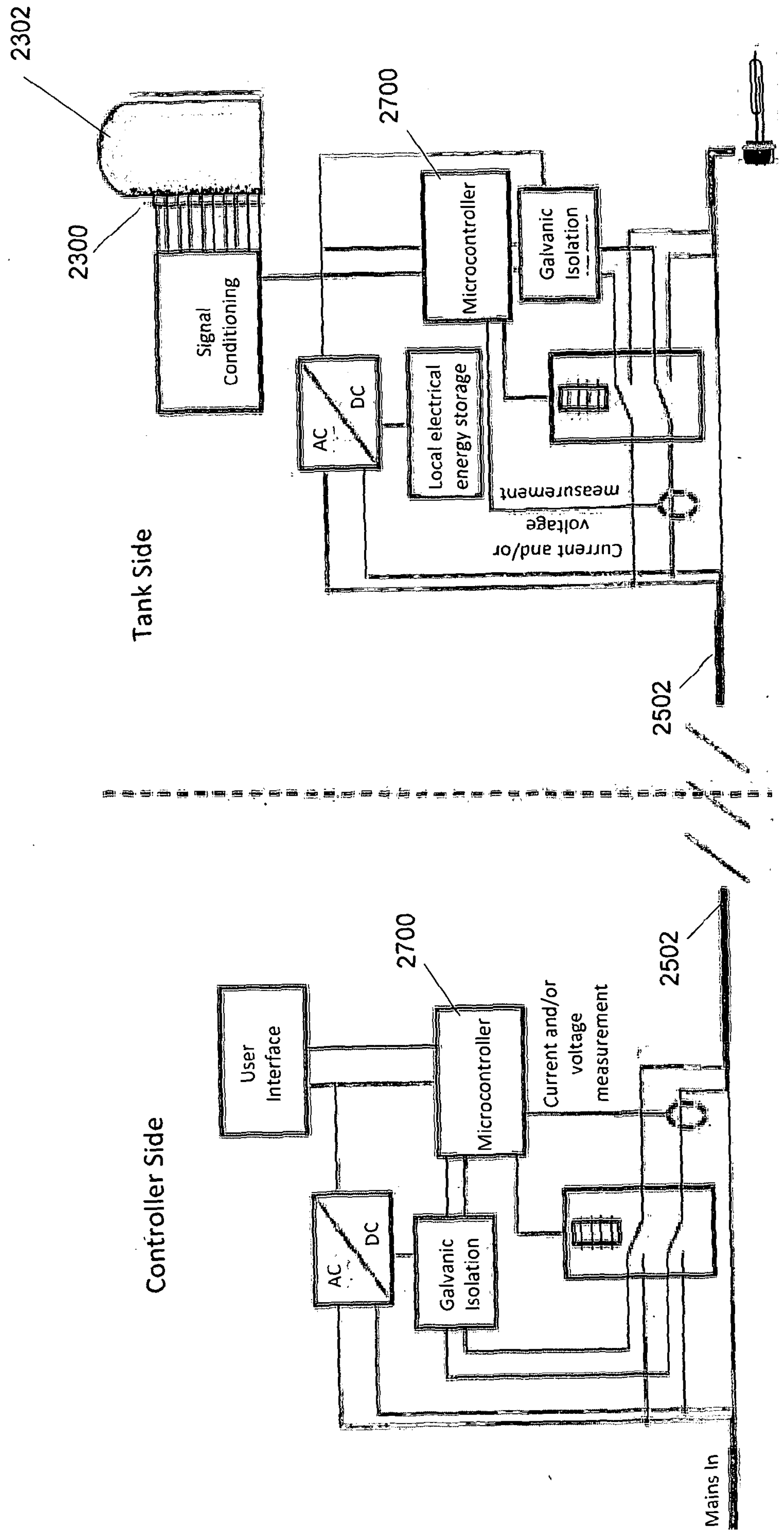
2302
2300
Signal Conditioning
2700
Microcontroller
Galvanic Isolation
AC
DC
Local electrical energy storage
Current and/or voltage measurement
Tank Side
2502
2502
2700
User Interface
Microcontroller
Current and/or voltage measurement
AC
DC
Galvanic Isolation
Controller Side
Mains In

Figure 27

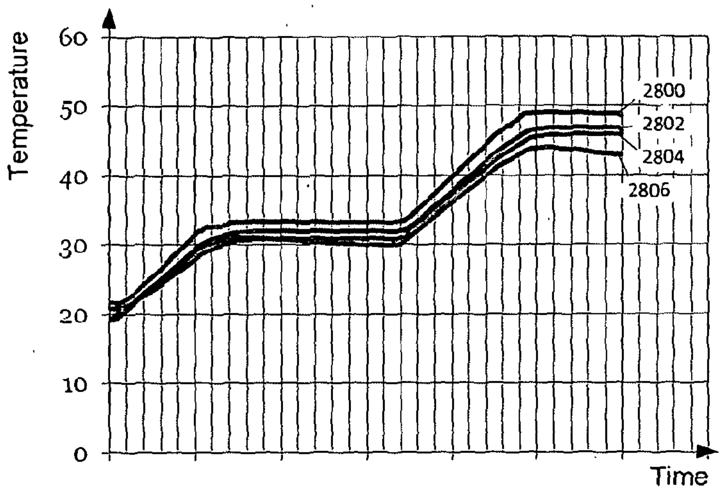


Figure 28

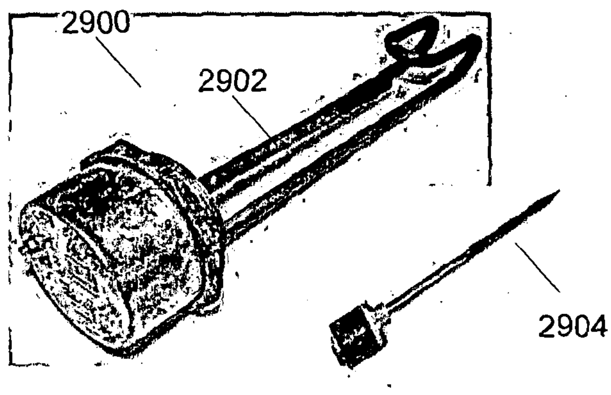


Figure 29

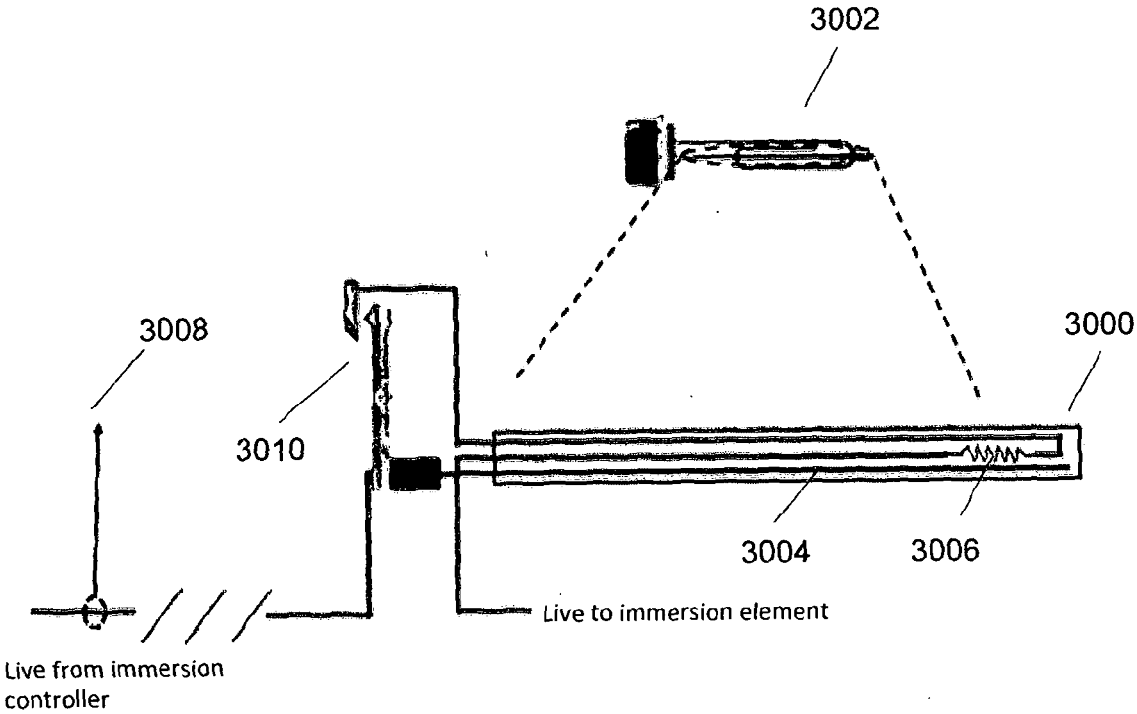


Figure 30

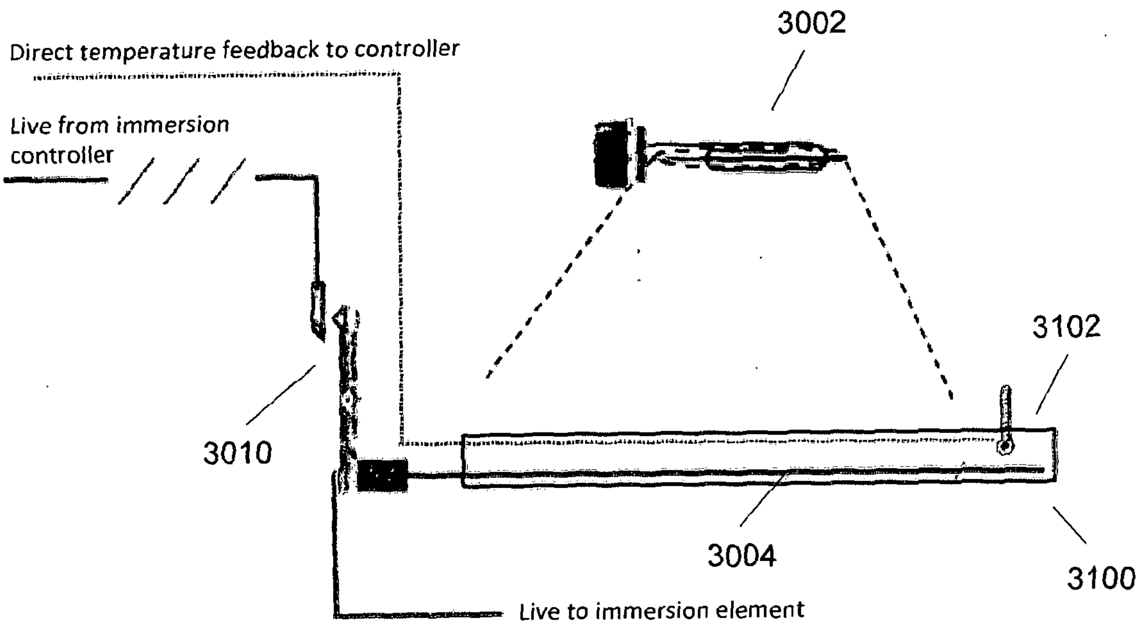


Figure 31

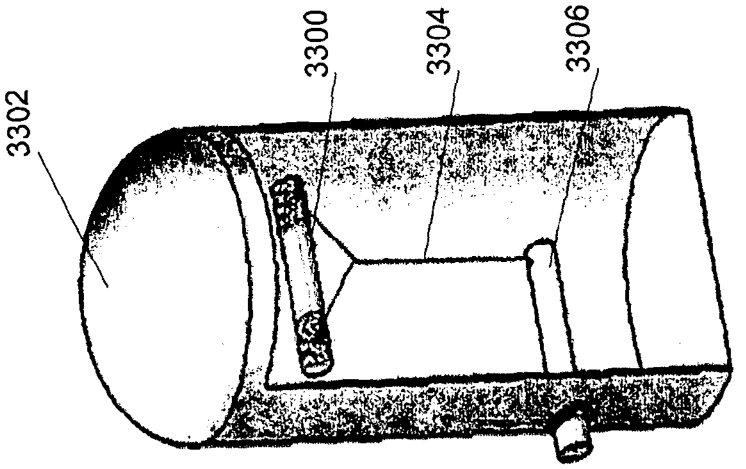


Figure 33

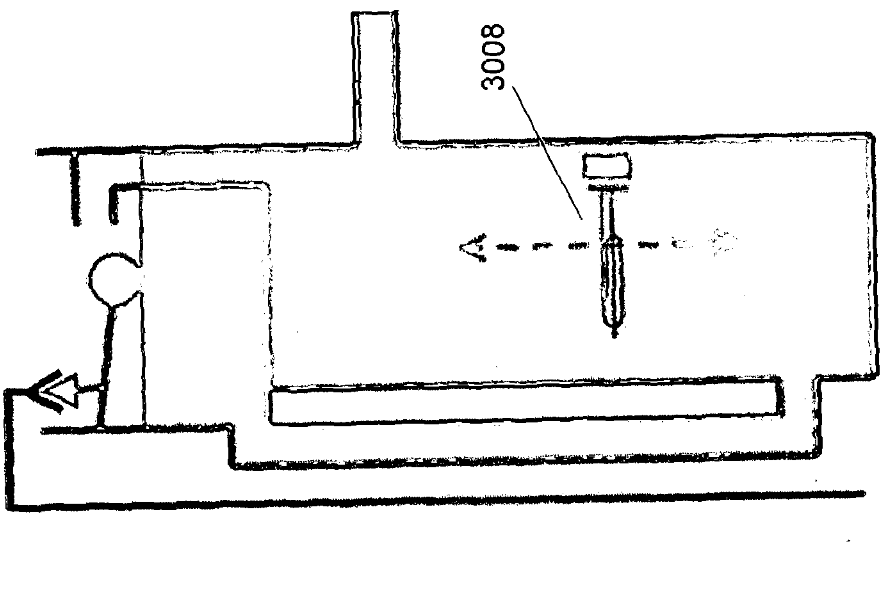


Figure 32

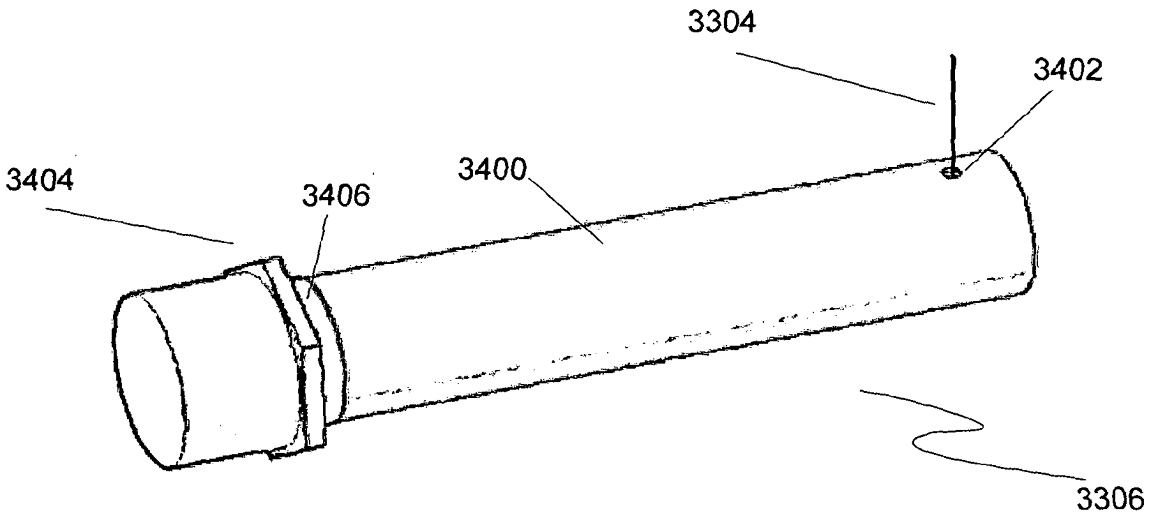


Figure 34

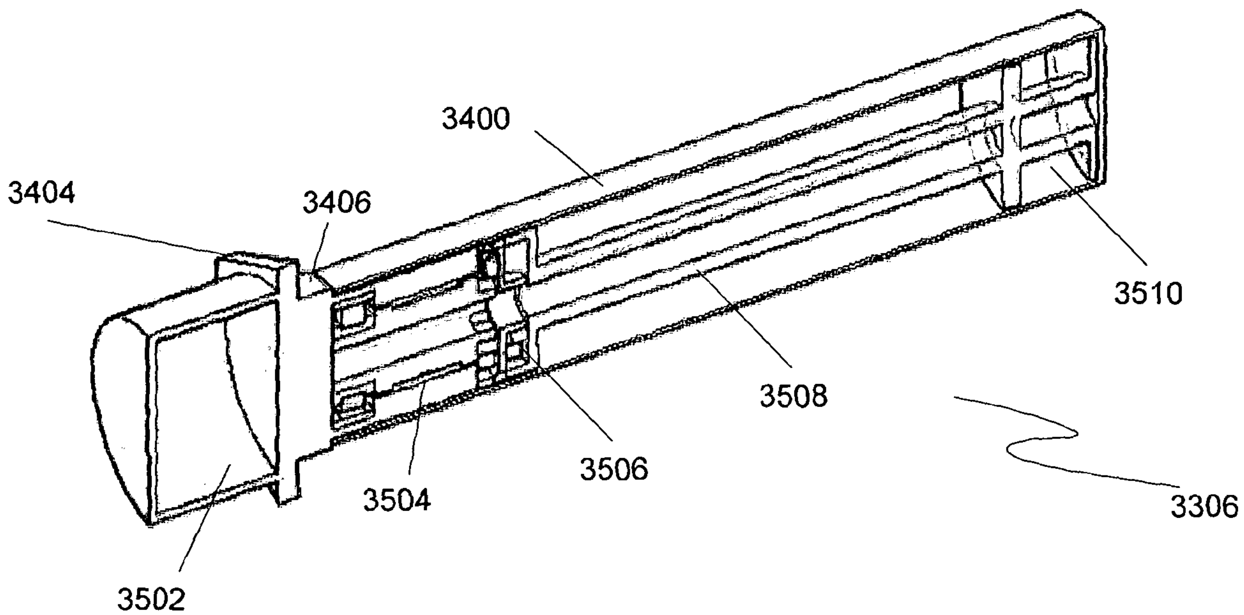


Figure 35

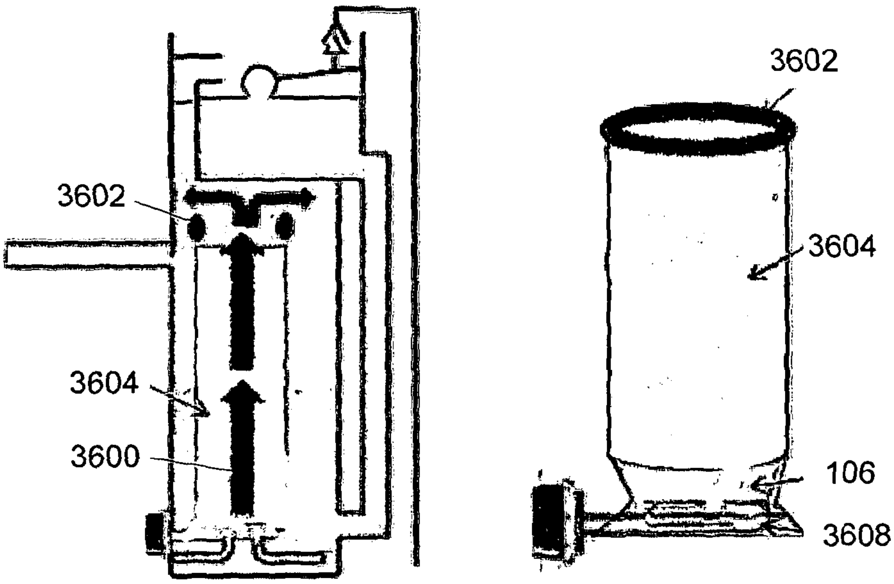


Figure 36

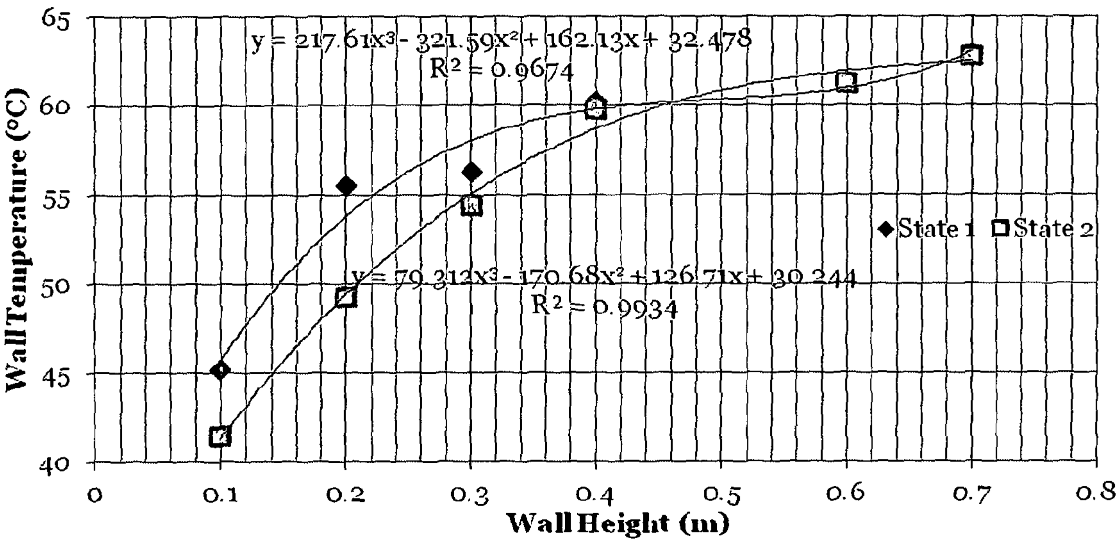


Figure 37

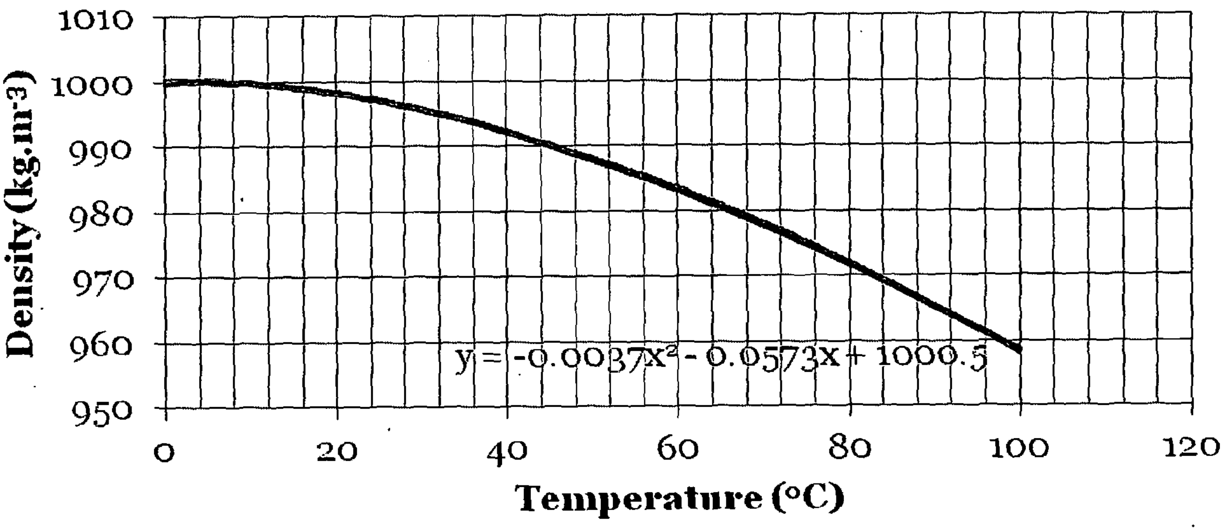


Figure 38

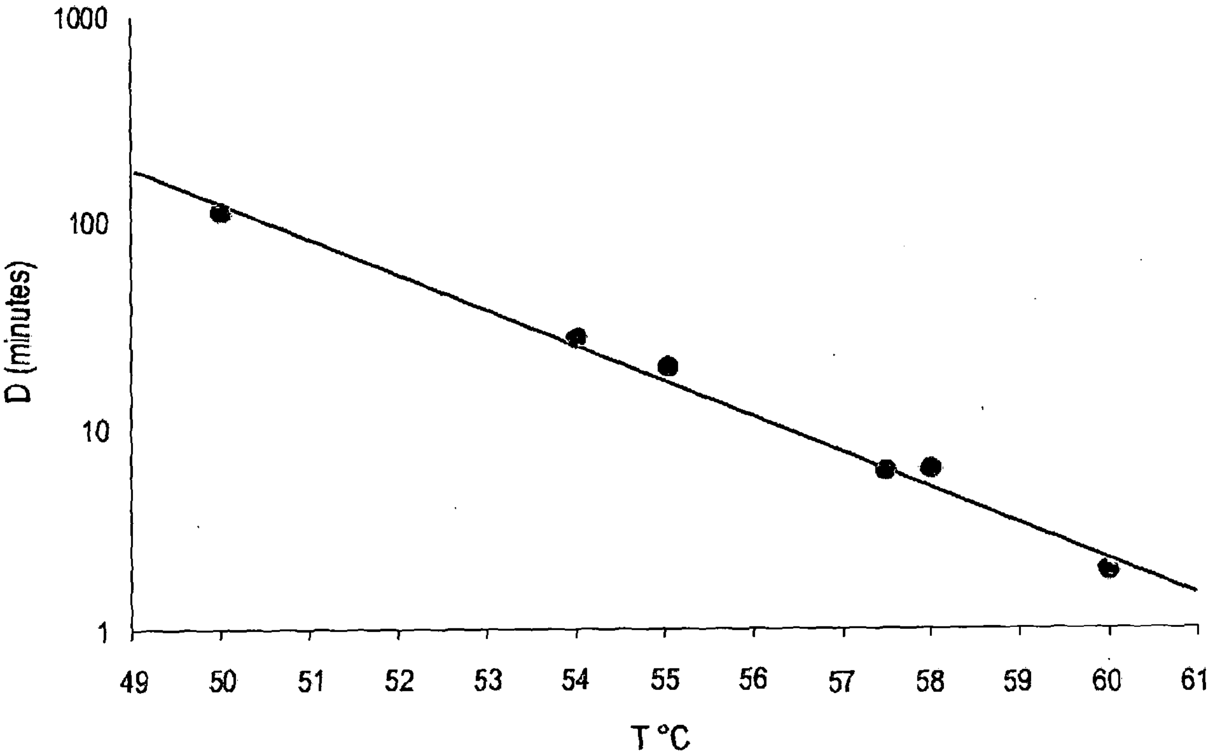


Figure 39

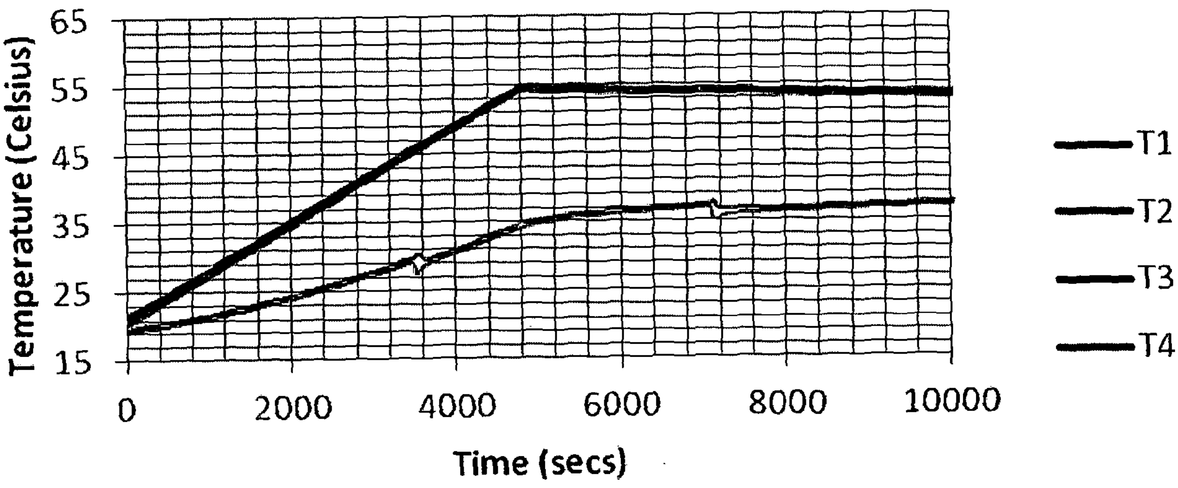


Figure 40

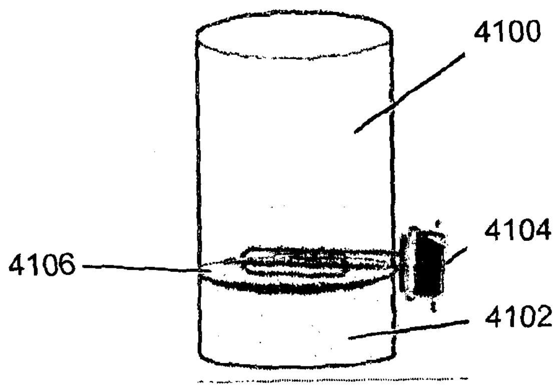


Figure 41

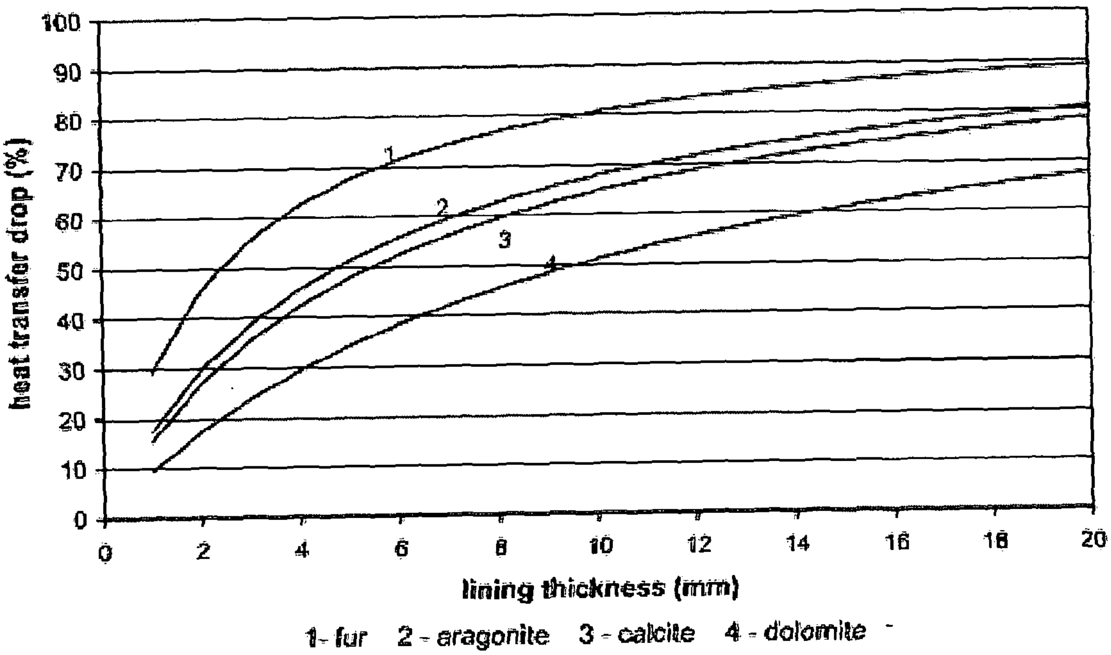


Figure 42

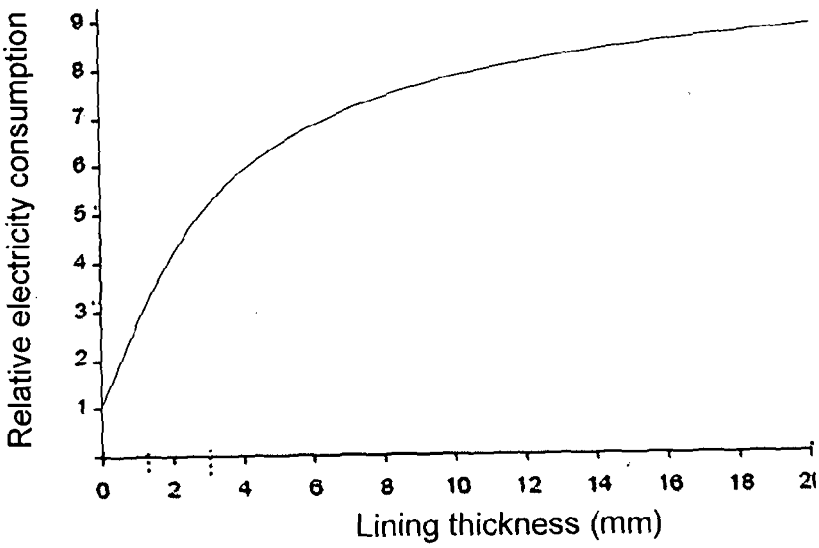


Figure 43

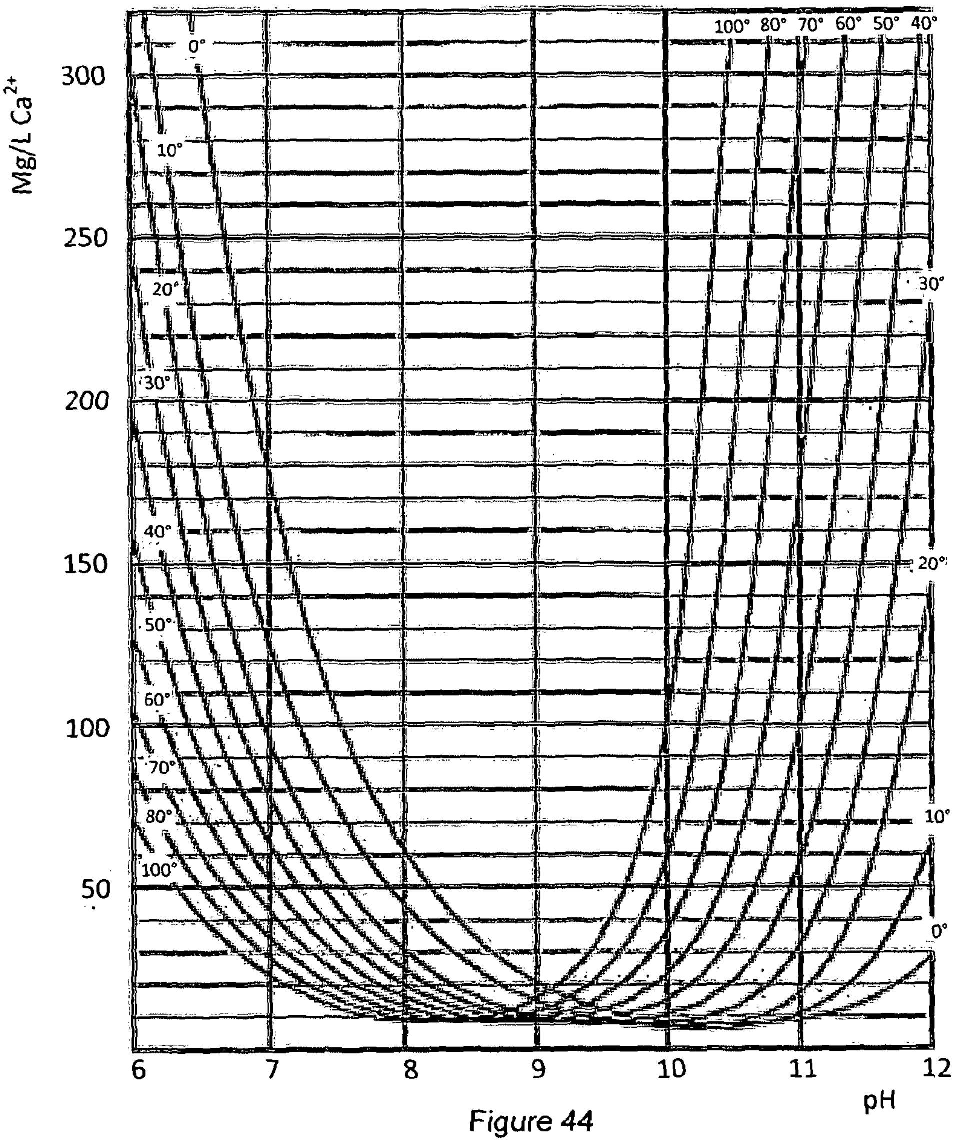


Figure 44

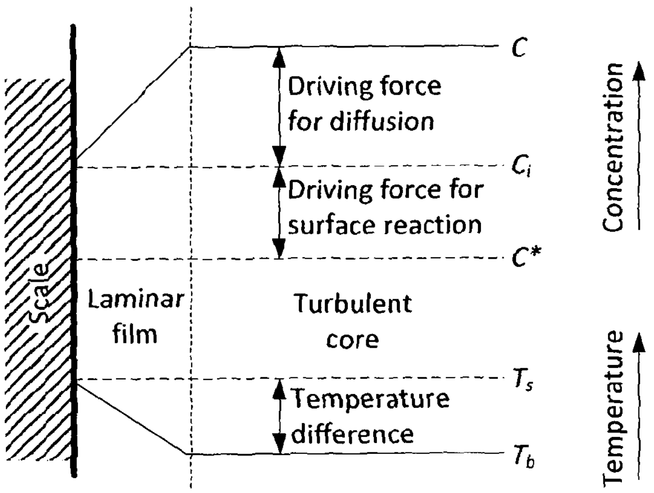


Figure 45

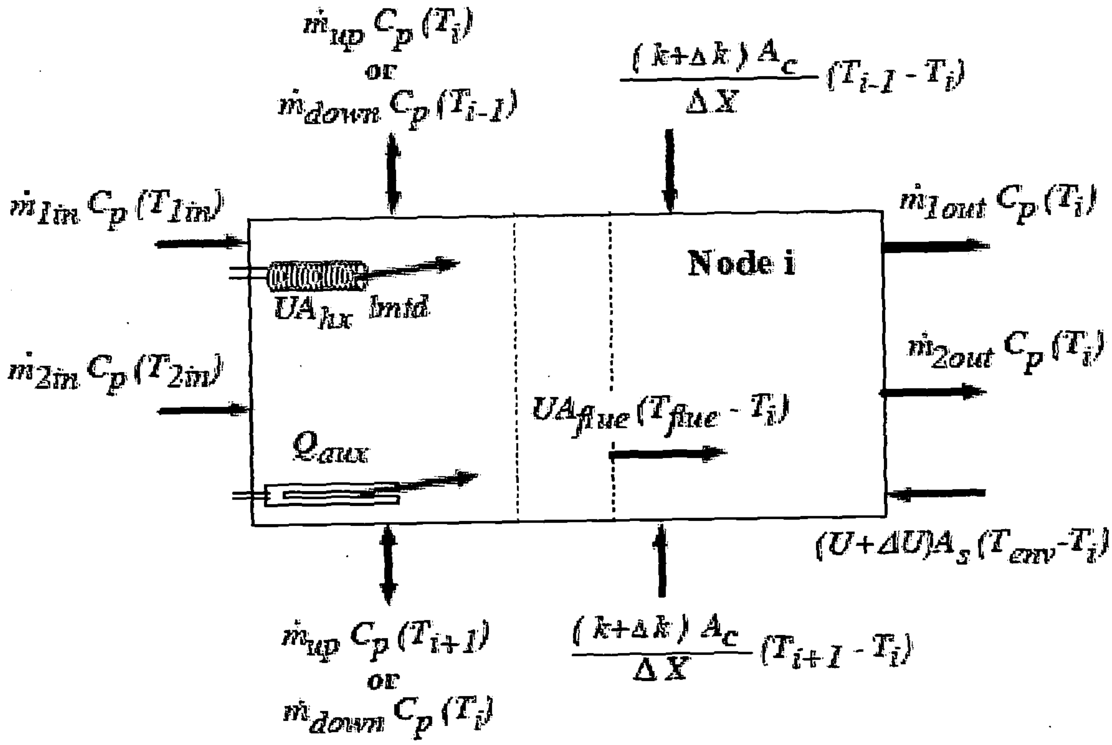


Figure 46

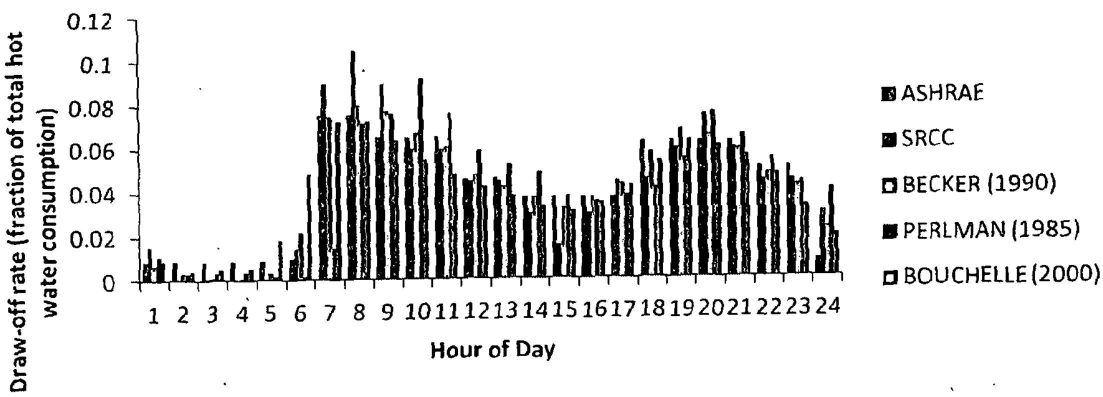


Figure 47

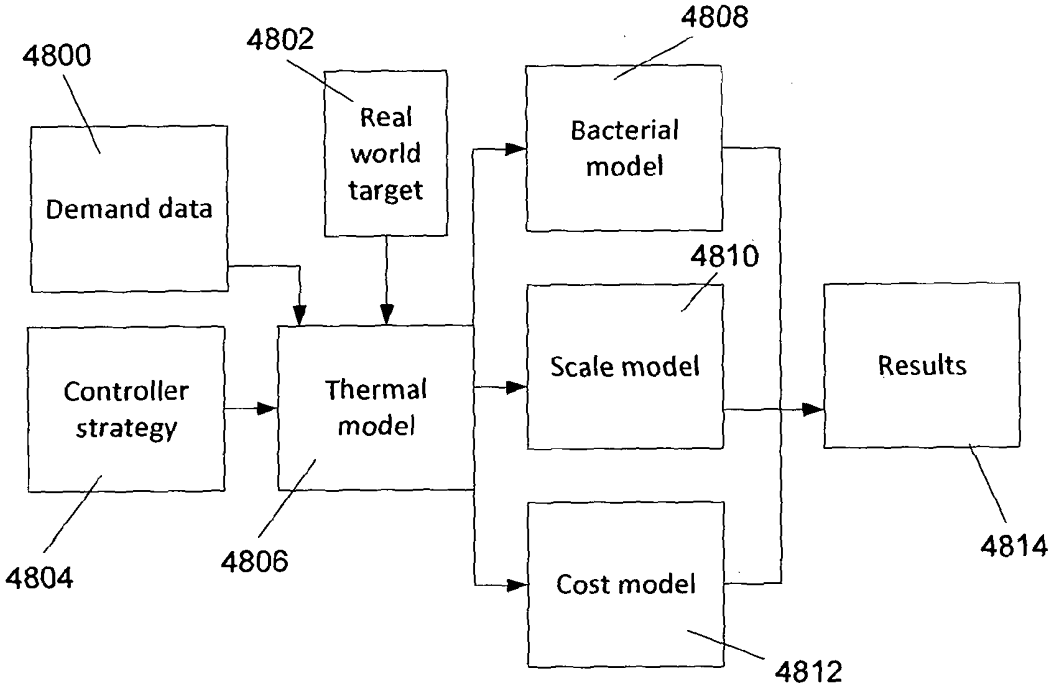


Figure 48

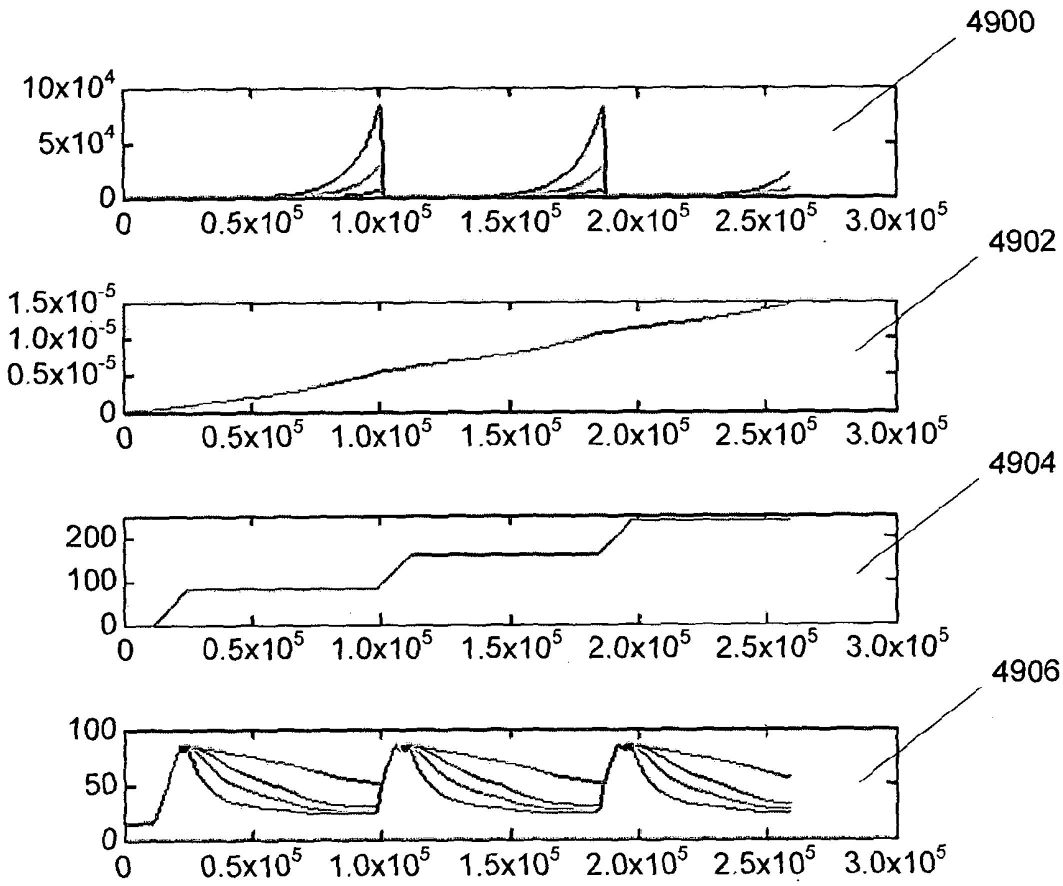


Figure 49

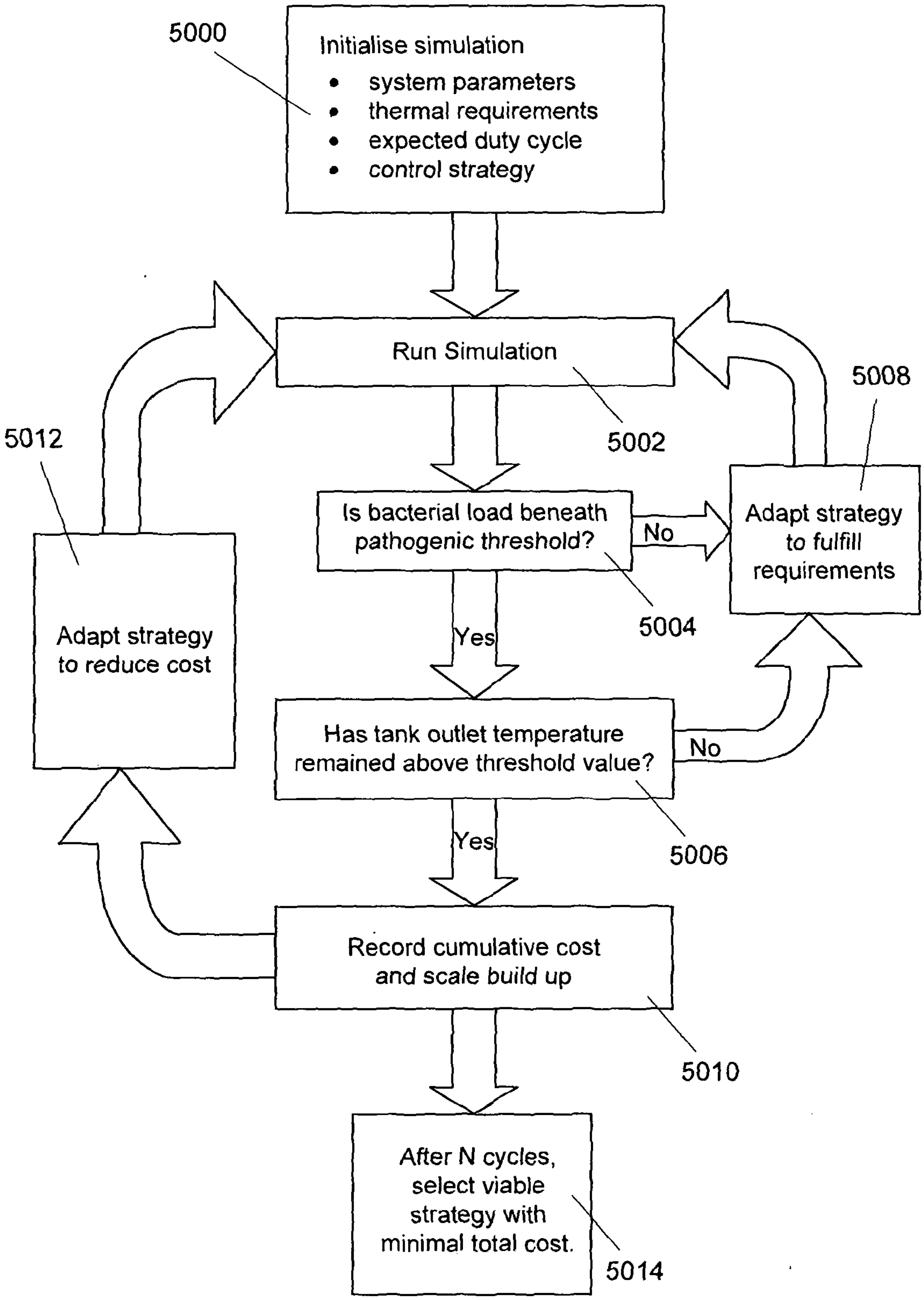
5000
Initialise simulation
• system parameters
• thermal requirements
• expected duty cycle
• control strategy
Run Simulation
5002
5012
5008
Is bacterial load beneath pathogenic threshold?
No
Adapt strategy to fulfill requirements
5004
Yes
Adapt strategy to reduce cost
Has tank outlet temperature remained above threshold value?
No
Yes
5006
Record cumulative cost and scale build up
5010
After N cycles, select viable strategy with minimal total cost.
5014

Figure 50

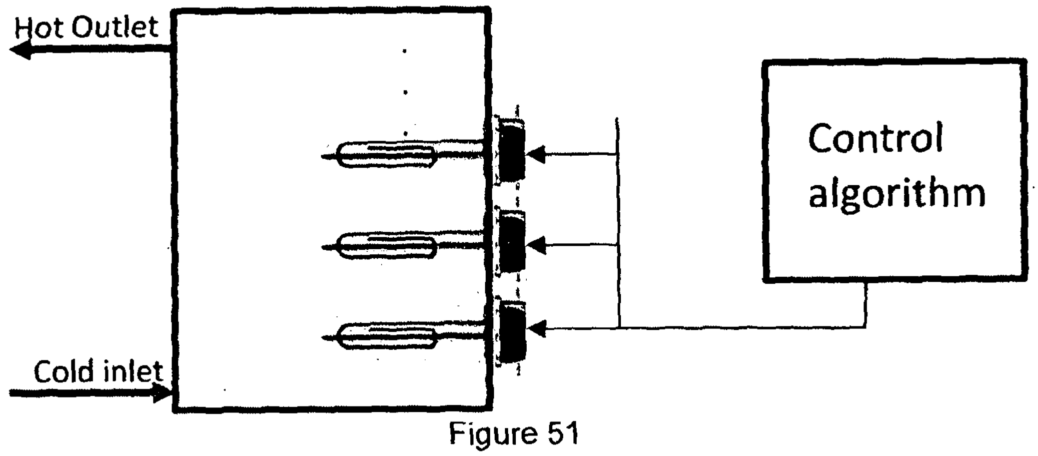


Figure 51

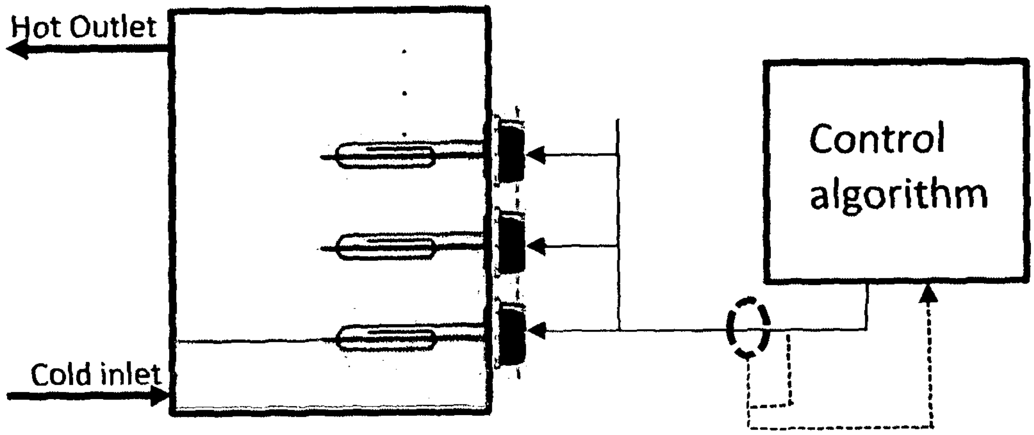


Figure 52

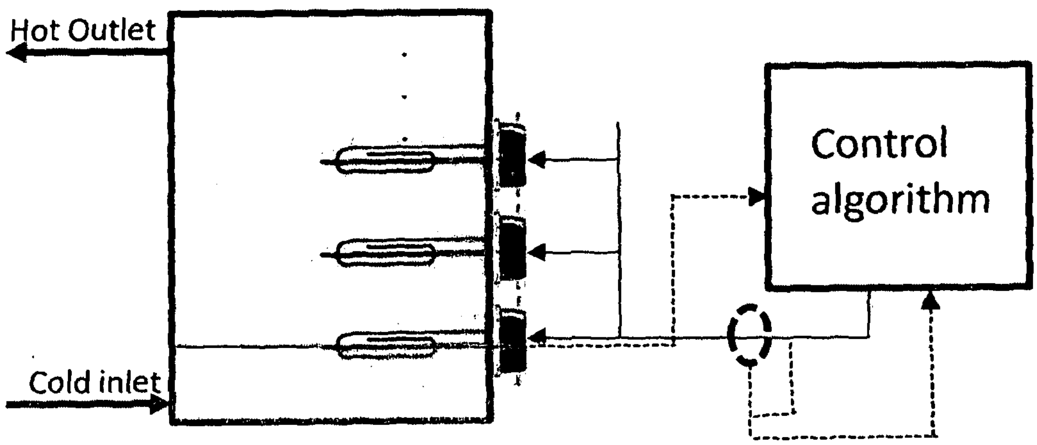


Figure 53

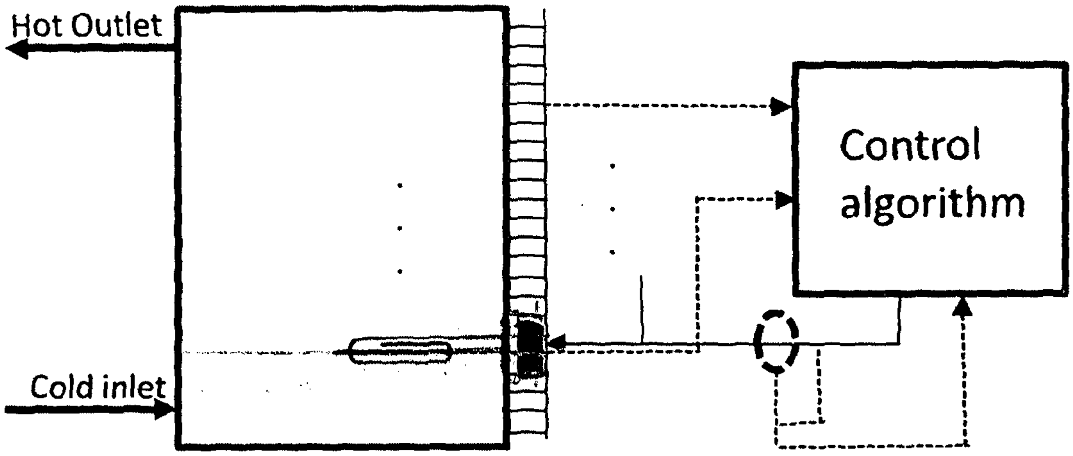

Figure 54

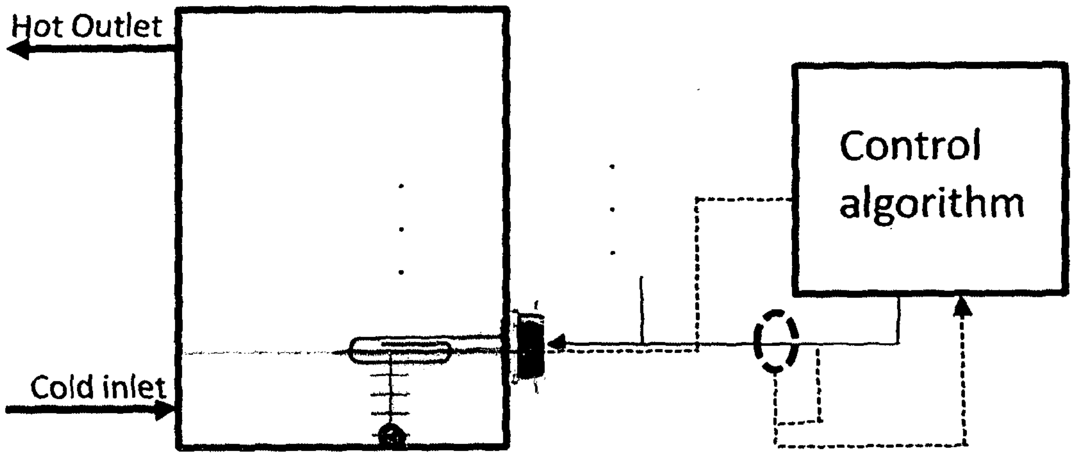

Figure 55

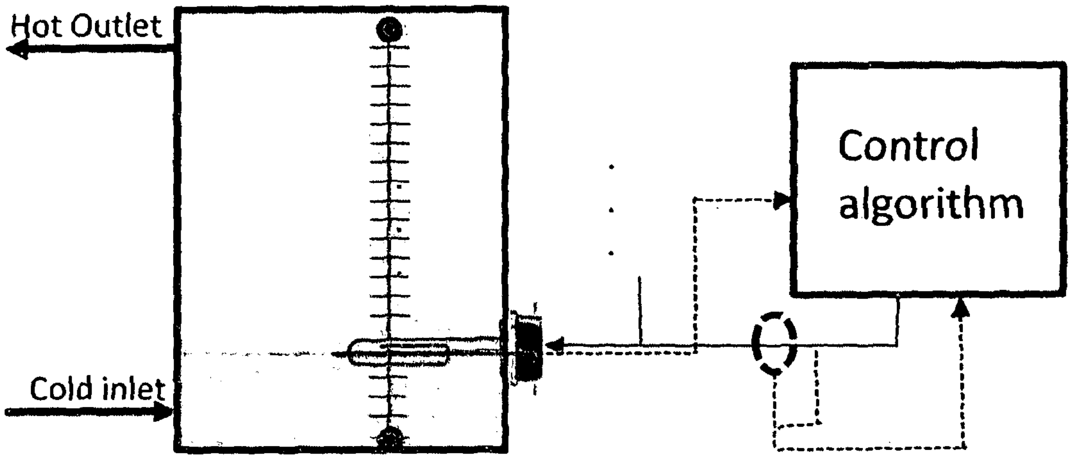

Figure 56

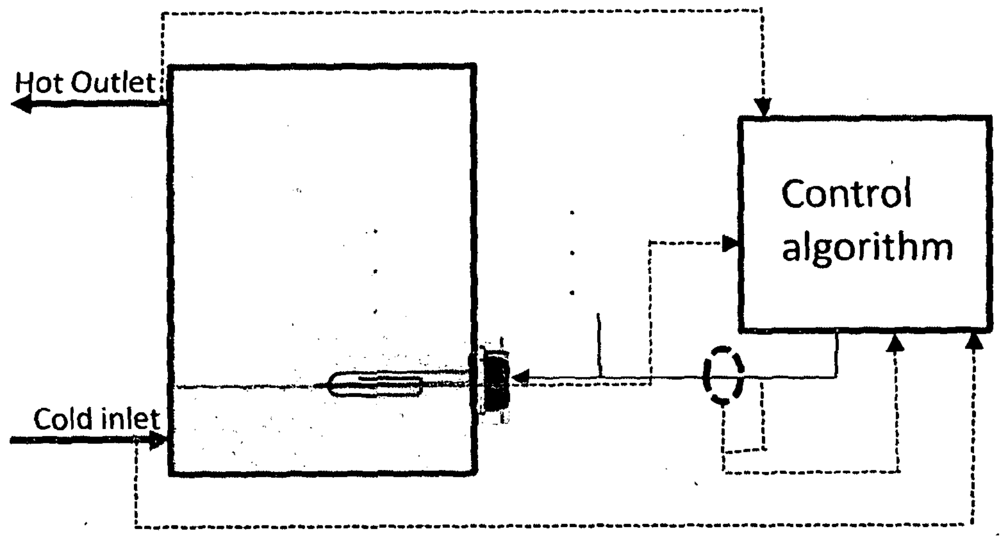


Figure 57

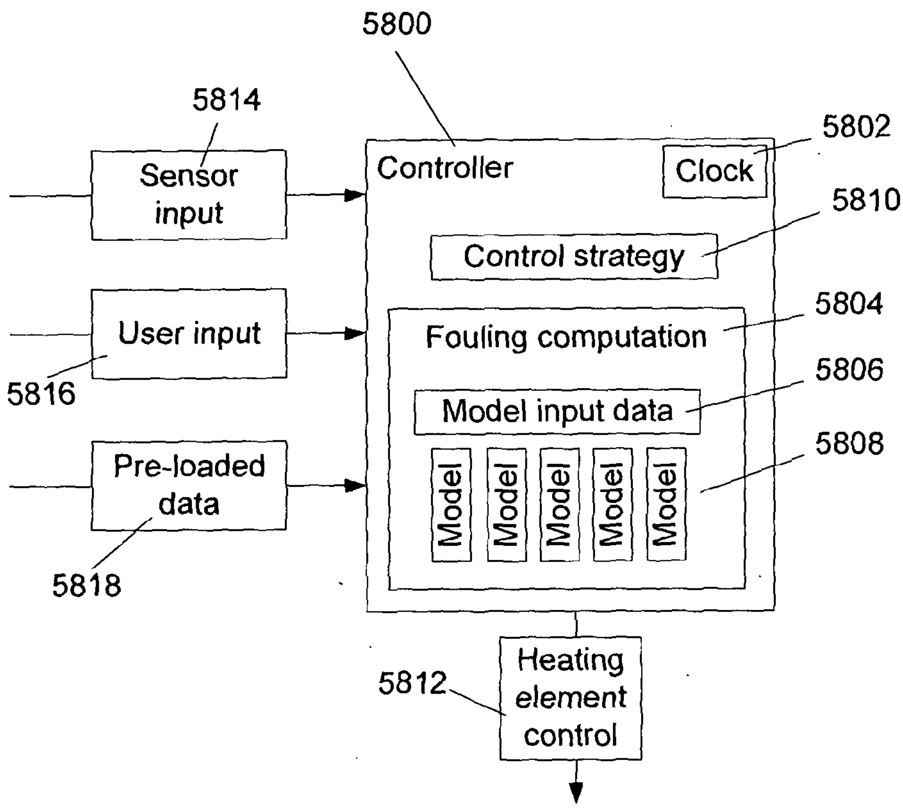


Figure 58

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9410620 A